# EUROPEAN PATENT SPECIFICATION

(11) **EP 2 562 967 B1**
(45) Date of publication and mention of the grant of the patent: **14.01.2015**
(21) Application number: 12181412.3
(22) Date of filing: 22.08.2012
(51) Int. Cl.: H04L 12/28

(54) **Information management system for home appliance**
Informationsverwaltungssystem für Haushaltsgeräte
Système de gestion d'informations pour appareil domestique

(30) Priority: 22.08.2011 KR 20110083493; 22.08.2011 KR 20110083494; 22.08.2011 KR 20110083496; 22.08.2011 KR 20110083497; 22.08.2011 KR 20110083498
(43) Date of publication of application: 27.02.2013
(73) Proprietor: LG Electronics Inc., Seoul 150-721 (KR)
(72) Inventor: Kim, Yanghwan, 641-711 Gyeongnam (KR); Park, Hyoungjun, 641-711 Gyeongnam (KR); Shim, Jonghoon, Gyeongnam 641-711 (KR)
(74) Representative: Ter Meer Steinmeister & Partner

(56) References cited:
- EP-A1- 1 030 521
- EP-A2- 2 003 819
- EP-A2- 2 326 114
- WO-A1-2007/004755
- US-A1- 2002 052 913
- US-A1- 2008 280 562
- US-B1- 7 065 501

## Description

### BACKGROUND OF THE DISCLOSURE

### Field of the Disclosure

The present invention relates to information management systems for a home appliance, and more particularly, to an information management system for embodying communication between a home appliance and a wireless terminal and between the home appliance and an external service business operator server possible for providing information a user requires quickly and remote management of the home appliance.

### Discussion of the Related Art

The home appliance in a home performs a function of each of the home appliances, such as a refrigerator, a washing machine, and an air conditioner to provide convenience to a user.

Currently, the home appliances in the home form, so called 'Home Network' in which the home appliances are connected with one network, enabling the user to control the home appliance in the home through the home network, remotely.

With this, even if the user is out of the home, the user can turn on/off the home appliance, or control the function of the home appliance.

However, the home appliance control through the home network has a limitation in that the control can not but be limited to an original function of the home appliance.

A network system in which network home appliances can be controlled from terminal apparatuses through a network is known from EP 2 003 819 A2. The network system includes a control apparatus, a controlled apparatus, i.e., a network home appliance, a service server that provides the control apparatus with a service for controlling the network home appliance, and a direct access management server that performs exchange of information necessary for directly accessing the network home appliance through the network.

The control apparatus receives an instruction for registering a controlled apparatus from a user and issues a controlled apparatus registration request to the service server. The service server stores the user identification information and issues a control apparatus/service management ID acquisition request to the direct access management server. The direct access management server checks whether the service ID included in the control apparatus/service management ID acquisition request coincides with a service ID registered in the storing unit of the direct access management server in advance. In case of coincidence the direct access management server registers a correspondent relation between the control apparatus/service management ID and a service ID in the storing unit and transmits the control apparatus service management ID to the service server as the control apparatus/service management ID acquisition response. The service server registers the received control apparatus/service management ID in the storing unit in association with the user identification information.

A method and apparatus for forming a security channel during a short range communication is disclosed in EP 2 326 114 A2.

Currently, though home appliances which provide convenient functions other than the original functions of the home appliances come to market places according to a trend that the home appliances in the home are changed to be smart, since the home appliances provide additional functions individually without joining to the home network, the home appliances have a problem in that the home appliances have a limitation in creation of a synergy effect together with other home appliances.

### SUMMARY OF THE DISCLOSURE

Accordingly, the present invention is directed to an information management system for a home appliance.

An object of the present invention is to provide an information management system for a home appliance, in which communication is established between the home appliance and a wireless terminal to enable to transmit/receive different pieces of information and different kinds of signal for enhancing user's convenience.

Another object of the present invention is to provide an information management system for a home appliance, in which communication is established between the home appliance and a server of an external service business operator to enable to transmit/receive different pieces of information and different kinds of signal for enhancing user's convenience.
The objects are solved by the features of the independent claims.

Additional advantages, objects, and features of the disclosure will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

Preferably,an information management system for a home appliance includes a home appliance having a communication unit, a display unit, and a predetermined device ID, a wireless terminal having a communication unit for communication with the communication unit in the home appliance and a display unit, the wireless terminal interlocked with the home appliance for receiving information or a signal generated at the home appliance, or transmitting information or a signal generated at the wireless terminal in a direction of the home appliance, and a server system provided to be able to communicate with the home appliance and the wireless terminal, the server system having the device ID stored therein, wherein the communication unit in the home appliance and the communication unit in the wireless terminal receive/transmit a signal after a mutual authentication procedure between the home appliance and the wireless terminal and the server system is completed, and the information or signal generated at the home appliance is displayed on the display unit in the wireless terminal, or the information or signal generated at the wireless terminal is displayed on the display unit in the home appliance, or changes operational state of the home appliance.

The wireless terminal further includes an input unit, wherein, by the information or signal inputted through the input unit in the wireless terminal, the home appliance is remotely controlled, or a state information of the home appliance is displayed on the display unit in the wireless terminal.

The information management system further includes an input unit in the home appliance, wherein, if it is set to generate predetermined information or signal and transmit the same to the wireless terminal with the input unit in the home appliance, the information or signal is displayed on the display unit in the wireless terminal. The information is schedule information or message information.

The information management system further includes an input unit in the home appliance, wherein, if it is set to generate a signal which requests position information on the wireless terminal and transmit the signal to the wireless terminal with the input unit in the home appliance, the position signal is transmitted from the wireless terminal in a direction of the home appliance, and a position of the wireless terminal is displayed on the display unit in the home appliance.

The home appliance includes a refrigerator, and, if any one of the refrigerator and the wireless terminal is manipulated to generate or update already stored food information or a shopping wish list information, the already stored food information or the shopping wish list information is transmitted to the other one of the refrigerator and the wireless terminal.

If a photograph of a product intended to put in the wish list is taken with a camera and the product taken is recognized, the wish list is updated according to a result of the recognition, and, if there is transmission request, the wish list updated thus is transmitted to the wireless terminal and displayed thereon.

If the wireless terminal recognizes a receipt of a product the user bought, information on bought goods on the receipt is transmitted to the refrigerator, and the refrigerator generates or updates a stored goods list to which the bought goods are reflected.

The information management system further includes a sensor unit provided to the home appliance, wherein, if it is set to sense a malfunction of the home appliance with the sensor unit, and a data sensed thus is transmitted to the wireless terminal, the malfunction of the home appliance is displayed on the display unit in the wireless terminal.

The home appliance and the wireless terminal are provided to enable to communicate with a predetermined external service business operator server through the server system, and, if the user requests the external service business operator server to provide information through the home appliance or the wireless terminal, after mutual authentication between the home appliance or the wireless terminal and the server system or the external service business operator server is completed, the external service business operator server transmits information requested thus to the home appliance or the wireless terminal.

The external service business operator server includes a shopping information providing server, wherein the shopping information providing server provides product sale information, optimal shopping movement path information, recipe information, product information required for the recipe, seasonal fruit sale information, or discount coupon information according to information providing request from the user, and the information is displayed on the display unit in the home appliance or the wireless terminal.

The external service business operator server includes a restaurant information providing server, wherein the restaurant information providing server provides restaurant information, restaurant price information, and recommendable restaurant information according to user's request for information, and the information is displayed on the display unit in the home appliance or the wireless terminal.

The external service business operator server includes a health care business operator server, wherein the health care business operator server provides allergy causing food information related to the user, medicine intaking time information, treatment guide information according to kinds of accidents, health food information related to a particular symptom, medicine in taking instruction information related to prescription, information matched to a number of weeks of pregnancy, restaurant information related to a health menu, or recommendable dish and recipe information matched to the health information, and the information provided thus is displayed on the display unit in the home appliance or the wireless terminal.

The home appliance includes a washing machine, and the external service business operator server includes a weather information providing server, wherein the weather information providing server provides optimal washing time point information related to weather, recommendable spinning RPM information, and drying information, and the information is displayed on the display unit of the washing machine or the wireless terminal, and the washing machine is controlled according to the information provided thus, automatically.

The home appliance includes an air cleaner, and the external service business operator server includes a weather information providing server, wherein the weather information providing server provides yellow sand information, the information is displayed on the display unit in the air cleaner or the wireless terminal, and the air cleaner is operated during a yellow sand warning period according to the information provided thus, automatically.

The external service business operator server includes a living information providing server, wherein the living information providing server provides online cooking lecture information, stock information, electric power information, traffic information, or fashion information, and the information provided thus is displayed on the display unit in the home appliance or the wireless terminal.

As has been described, in a case the home appliance is a cooking machine, if the user sets cooking time period and temperature of the cooking machine, since the cooking machine is controlled remotely to set the cooking time period and temperature, cooking can be made even from an outside of a home, easily.

And, if the home appliance is a washing machine, since the user can set a washing course and washing time with the wireless terminal to control the washing machine, washing can be made even from an outside of a home, easily.

And, if the home appliance is a plurality of commercial washing machines, available washing machine can be known easily, and, since use of the washing machine of the user by other can be known, the laundry stolen by other can be prevented.

And, the present invention permits to hold of schedule information or position information of family members.

And, the present invention permits to transmits/receives a buying list or a wish list generated or updated by the user between the refrigerator and the wireless terminal, easily.

And, the present invention permits to check the inside of the home appliance by a data taken by the camera without opening the door on the home appliance.

And, the present invention permits continuous monitoring of an inside of the house even if the user is outside of the house.

And, the present invention permits to prevent negligent accident from taking place by detecting and informing the user of a baby or a child in the washing machine before the negligent accident takes place.

And, the present invention permits to obtain shopping information or coupon information related to goods on the wish list, easily.

And, the present invention permits to obtain restaurant information or even menu price information on a particular restaurant within a predetermined distance from a point the user designates.

And, the present invention permits the user to be provided with convenience of receiving recommendable restaurant information according to a mood of the user.

And, the present invention permits the user to be provided with medicine intaking time information, or medicine intaking instruction service by accessing to the health care information providing server.

And, the present invention permits the user to be provided with treatment guide for treating an accident if any, information on food and drink good for a body if a particular symptom takes place, or even information on recommendable food and drink or a recipe according to a user's health state.

And, the present invention permits to access to weather information with the home appliance or the wireless terminal, easily.

And, the present invention permits to devise convenience of the user since the optimal washing time point can be known taking a weather change time point and a time period required for the washing into account, if there is a weather forecast that cloudy weather will change to a fine weather.

And, the present invention permits to maximize convenience of operation of the home appliance according to weather because control of a particular home appliance can be performed based on weather information.

And, the present invention permits to enhance user's convenience by putting the air cleaner into operation automatically if there is yellow sand, or operating a drying function of the washing machine additionally if the weather is cloudy or rainy.

And, the present invention permits the user to access to different pieces of necessary living information by receiving the same from the external service business operator server through the home appliance or the wireless terminal.

In detail, if the external service business operator server includes the school server, the user can receive a report card of a child, a school meal menu, or school bus arrival notification service.

And, the user may receive set news from the news server.

And, the present invention permits to solve a problem through the external service business operator server if a living problem, such as blocked pipe, takes place.

And, the present invention permits the user to receive guide information on power saving operation by receiving electric charge information, as well as traffic information, coordination information proper to a season or weather, menu information proper to a season, and so on.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the disclosure and are incorporated in and constitute a part of this application, illustrate embodiment(s) of the disclosure and together with the description serve to explain the principle of the disclosure.

In the drawings:
FIG. 1 illustrates a schematic view of the present invention.
FIG. 2 illustrates a block diagram of control of the present invention.
FIG. 3 illustrates a diagram showing a registration process of user information and home appliance information in the present invention.
FIG. 4 illustrates a diagram showing a deleting process of user information and home appliance information in the present invention.
FIG. 5 illustrates a diagram showing installation of an exclusive application to a wireless terminal and receiving service accordingly in the present invention.
FIG. 6 illustrates a diagram showing a cooking machine controlled remotely in the present invention.
FIG. 7 illustrates a diagram showing a washing machine controlled remotely in the present invention.
FIG. 8 illustrates a diagram showing remote notice of information on commercial washing machines in the present invention.
FIG. 9 illustrates a diagram showing that information on operation of a plurality of home appliances can be noticed with a wireless terminal remotely in the present invention.
FIG. 10 illustrates a diagram showing edition of courses of a washing machine in the present invention.
FIG. 11 illustrates a diagram showing a laundry washing course recommended by using a tag on the laundry in the present invention.
FIG. 12 illustrates a diagram showing family member schedules shared in common in the present invention.
FIG. 13 illustrates a diagram showing a message shared in common in the present invention.
FIG. 14 illustrates a diagram showing information on family member positions shared in common in the present invention.
FIG. 15 illustrates a diagram showing stored food or a wish list managed in the present invention.
FIG. 16 illustrates a diagram showing a wish list managed with reference to a recipe in the present invention.
FIG. 17 illustrates a diagram showing a wish list managed with reference to a taken photograph data in the present invention.
FIG. 18 illustrates a diagram showing a stored food list managed with reference to perception of receipts in the present invention.
FIG. 19 illustrates a diagram showing a wish list managed with reference to a buying pattern or period in the present invention.
FIG. 20 illustrates a diagram showing monitoring of an inside state of a home appliance in the present invention.
FIG. 21 illustrates a diagram showing monitoring of an inside state of a house in the present invention.
FIG. 22 illustrates a diagram showing monitoring of malfunction of a home appliance for prevention of a negligent accident in the present invention.
FIG. 23 illustrates a diagram showing providing a recommended menu with reference to health information in the present invention.
FIG. 24 illustrates a diagram showing data exchange between a home appliance and a wireless terminal in the present invention.
FIGS. 25 and 26 illustrate diagrams each showing a state in which a home appliance leaves a message by using SNS.
FIG. 27 illustrates a diagram showing provision of shopping information on goods on a wish list in the present invention.
FIG. 28 illustrates a diagram showing provision of shopping information on goods on a wish list and an optimal shopping schedule in the present invention.
FIG. 29 illustrates a diagram showing provision of shopping information on goods on a wish list and optimal moving path information in the present invention.
FIG. 30 illustrates a diagram showing provision of recipe information on a particular dish and necessary product information in the present invention.
FIG. 31 illustrates a diagram showing provision of commercial item shopping information in the present invention.
FIG. 32 illustrates a diagram showing shopping information on seasonal fruits in the present invention.
FIG. 33 illustrates a diagram showing provision of coupon information on goods on a wish list in the present invention.
FIG. 34 illustrates a diagram showing provision of coupon information having a very close expiry date in the present invention.
FIG. 35 illustrates a diagram showing provision of nearby restaurant information service in the present invention.
FIG. 36 illustrates a diagram showing provision of restaurant information service recommendable according to a mood in the present invention.
FIG. 37 illustrates a diagram showing provision of information on allergy causing food in the present invention.
FIG. 38 illustrates a diagram showing provision of information on a medicine intake time in the present invention.
FIG. 39 illustrates a diagram showing provision of information on a treatment guide in a case of accident in the present invention.
FIG. 40 illustrates a diagram showing provision of information on food good for health when a particular symptom takes place in the present invention.
FIG. 41 illustrates a diagram showing provision of allergy information service in the present invention.
FIG. 42 illustrates a diagram showing provision of information on medicine intaking instruction service of a doctor in the present invention.
FIG. 43 illustrates a diagram showing provision of information on pregnancy information guide in the present invention.
FIG. 44 illustrates a diagram showing provision of information on restaurants and menus related to health menus in the present invention.
FIG. 45 illustrates a diagram showing provision of food information with reference to health information in the present invention.
FIG. 46 illustrates a diagram showing provision of exercise prescription information in the present invention.
FIG. 47 illustrates a diagram showing provision of information on apportion of food in the present invention.
FIG. 48 illustrates a diagram showing provision of information on an optimal washing time point in the present invention.
FIG. 49 illustrates a diagram showing adjustment of a spinning RPM of a washing machine with reference to weather information in the present invention.
FIG. 50 illustrates a diagram showing putting a particular home appliance into operation with reference to weather information in the present invention.
FIG. 51 illustrates a diagram showing provision of report card information on a child in the present invention.
FIG. 52 illustrates a diagram showing provision of school meal menu information on a child in the present invention.
FIG. 53 illustrates a diagram showing provision of school bus arrival time notifying service in the present invention.
FIG. 54 illustrates a diagram showing provision of news information in the present invention.
FIG. 55 illustrates a diagram showing provision of emergency service information in the present invention.
FIG. 56 illustrates a diagram showing provision of online cooking lecture information in the present invention.
FIG. 57 illustrates a diagram showing provision of stock trading information in the present invention.
FIG. 58 illustrates a diagram showing provision of information on living problem solution in the present invention.
FIG. 59 illustrates a diagram showing provision of nearby restaurant information service in the present invention.
FIG. 60 illustrates a diagram showing provision of wine management information in the present invention.
FIG. 61 illustrates a diagram showing provision of electric charge information in the present invention.
FIG. 62 illustrates a diagram showing provision of traffic information in the present invention.
FIG. 63 illustrates a diagram showing provision of coordination information with reference to a season or weather in the present invention.
FIG. 64 illustrates a diagram showing provision of seasonal menu information with reference to a season or weather in the present invention.

### DESCRIPTION OF SPECIFIC EMBODIMENTS

In the following detailed description, reference is made to the accompanying drawing figures which form a part hereof, and which show by way of illustration specific embodiments of the invention. It is to be understood by those of ordinary skill in this technological field that other embodiments may be utilized, and structural, electrical, as well as procedural changes may be made without departing from the scope of the present invention. Wherever possible, the same reference numbers will be used throughout the drawings to refer to the same or similar parts.

An information management system for a home appliance related to an embodiment of the present invention includes the home appliance having a communication unit, a display unit, and a predetermined device ID, a wireless terminal having a communication unit for communication with the communication unit in the home appliance and a display unit, the wireless terminal interlocked with the home appliance for receiving information or a signal generated at the home appliance, or transmitting information or a signal generated at the wireless terminal in a direction of the home appliance, and a server system provided to be able to communicate with the home appliance and the wireless terminal, the server system having the device ID stored therein.

In this instance, the communication unit in the home appliance and the communication unit in the wireless terminal receive/transmit a signal after a mutual authentication procedure between the home appliance and the wireless terminal and the server system is completed, and the information or signal generated at the home appliance is displayed on the display unit in the wireless terminal, or the information or signal generated at the wireless terminal is displayed on the display unit in the home appliance, or changes a operational state of the home appliance.

And, the wireless terminal may further include an input unit, wherein, by the information or signal inputted through the input unit in the wireless terminal, the home appliance is remotely controlled, or state information of the home appliance is displayed on the display unit in the wireless terminal.

And, the home appliance may include a cooking machine or a washing machine, and, if the user sets an operation condition through the input unit in the wireless terminal, the cooking machine or the washing machine is driven according to the operation condition, and, if the operation of the cooking machine or the washing machine is finished, the cooking machine or the washing machine informs the wireless terminal of the operation finish.

And, the information management system may further include an input unit in the home appliance, wherein, if it is set to generate predetermined information or signal and transmit the same to the wireless terminal with the input unit in the home appliance, the information or signal is displayed on the display unit in the wireless terminal.

In this case, the information is schedule information or message information.

And, the information management system may further include an input unit in the home appliance, wherein, if it is set to generate a signal which requests position information on the wireless terminal and transmit the signal to the wireless terminal with the input unit in the home appliance, the position signal is transmitted from the wireless terminal in a direction of the home appliance, and a position of the wireless terminal is displayed on the display unit in the home appliance.

And, the home appliance may include a refrigerator, and, if any one of the refrigerator and the wireless terminal is manipulated to generate or update already stored food information or shopping wish list information, the already stored food information or the shopping wish list information may be transmitted to the other one of the refrigerator and the wireless terminal.

And, if a photograph of a product intended to put in the wish list is taken with a camera, after the product of which photograph is taken thus is recognized, the wish list may be updated according to a result of the recognition, and, if there is transmission request, the wish list updated thus may be transmitted to the wireless terminal and displayed thereon.

And, if the wireless terminal recognizes a receipt of a product the user bought, information on bought goods on the receipt is transmitted to the refrigerator, and the refrigerator may generate or update a stored goods list to which the bought goods are reflected.

And, the refrigerator generates an expected wish list taking a buy pattern or period of the user into account, and, if the user selects goods from the expected wish list, the wish list may be updated to include the goods selected thus, and the wish list updated thus may be transmitted to the wireless terminal.

And, the information management system may further include a sensor unit provided to the home appliance, wherein, if it is set to sense a malfunction of the home appliance with the sensor unit, and a data sensed thus is transmitted to the wireless terminal, the malfunction of the home appliance may be displayed on the display unit in the wireless terminal.

And, the information management system may further include an input unit provided to the wireless terminal, a camera provided to the home appliance, and a driving unit for moving the home appliance, wherein, if an order for monitoring and photograph taking a space the home appliance is installed thereto is inputted with the input unit in the wireless terminal, the driving unit in the home appliance and the camera may be operated to take a photograph of the space, and an image or video taken thus may be transmitted to the wireless terminal.

Embodiments of the present invention will be described with reference to the attached drawings, in detail.

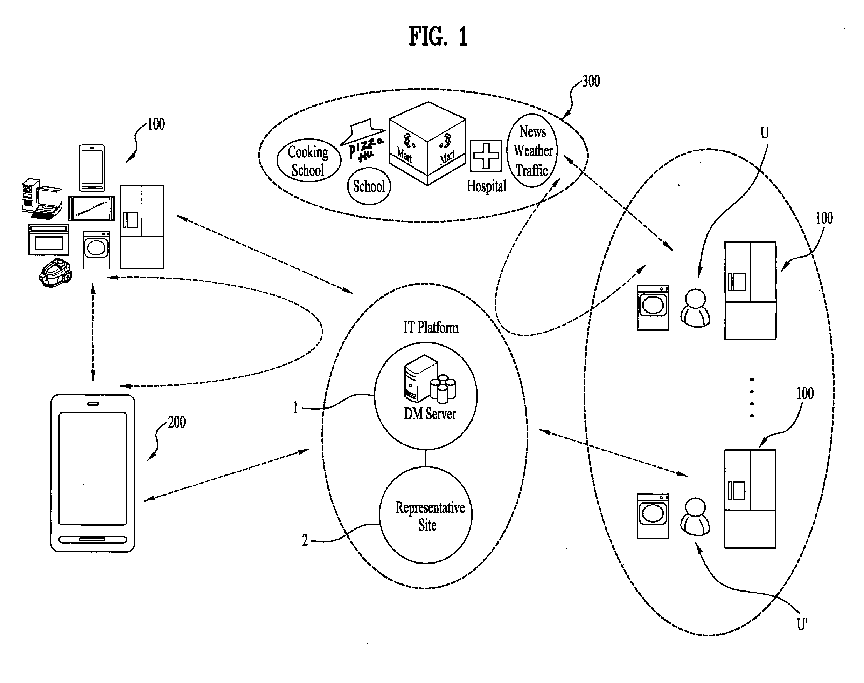

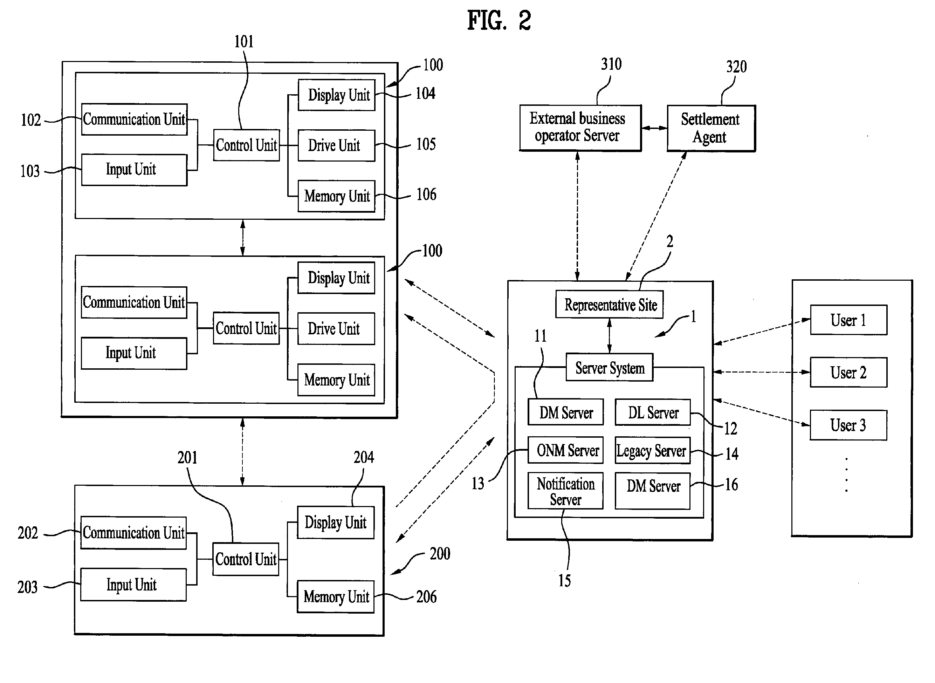

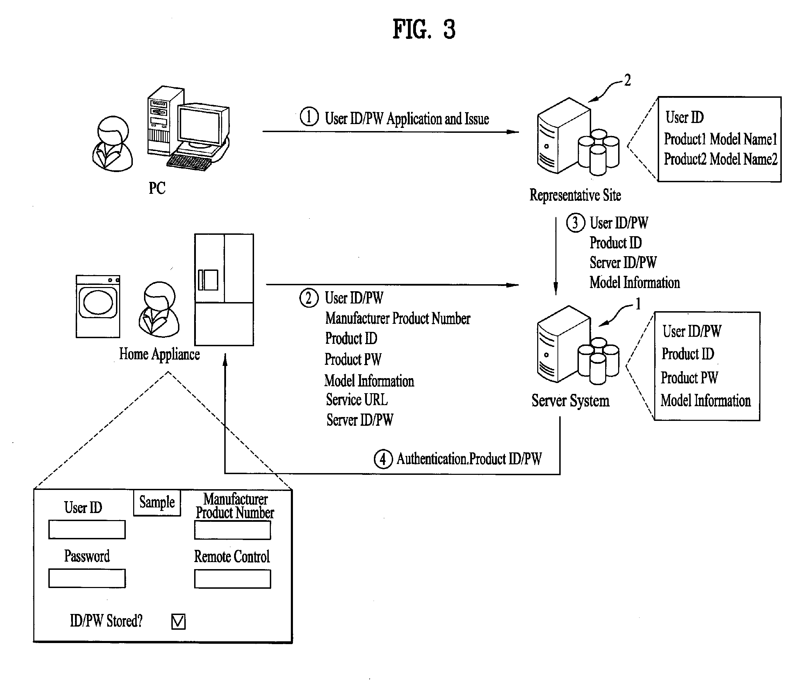

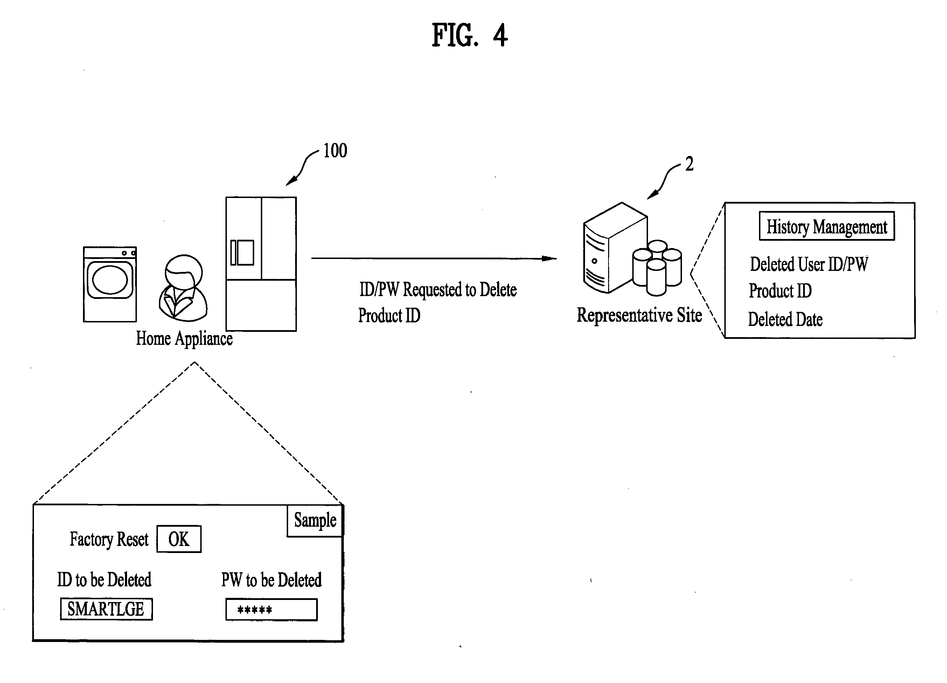

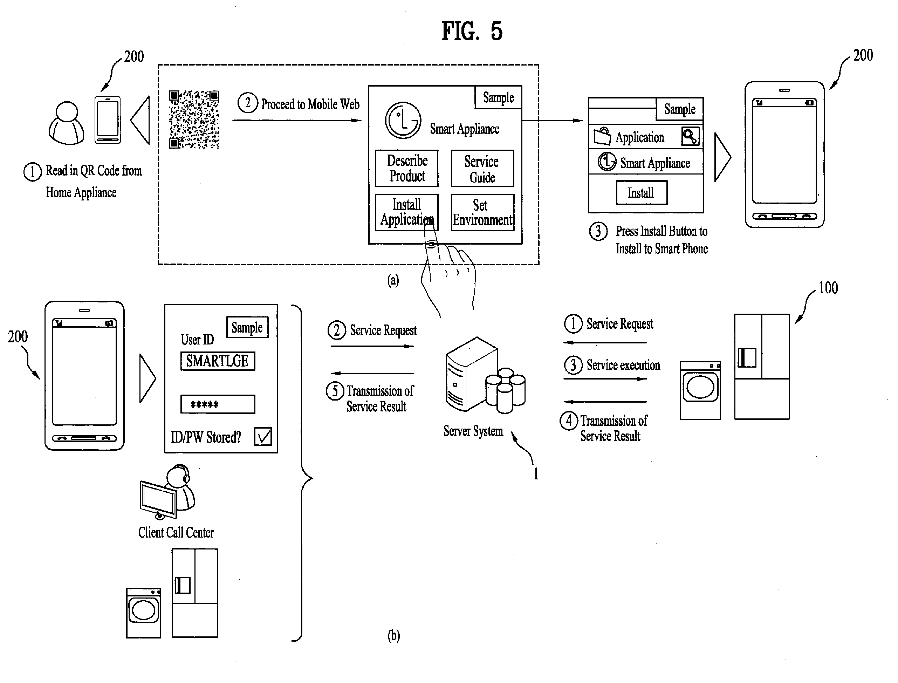

FIG. 1 illustrates a schematic view of the present invention, FIG. 2 illustrates a block diagram of control of the present invention, FIG. 3 illustrates a diagram showing a registration process of user information and home appliance information in the present invention, FIG. 4 illustrates a diagram showing a deleting process of user information and home appliance information in the present invention, and FIG. 5 illustrates a diagram showing installation of an exclusive application to a wireless terminal and receiving service accordingly in the present invention.

Provided to a center of an information management system for a home appliance of the present invention, there is a server system 1 for registering and storing registration information and user information of home appliances provided to a home, and the like, and a representative site 2 provided to be able to communicate with the server system 1 for enabling a user to provide user's information and registration information on the home appliances by writing to the server system.

And, the server system 1 is provided to be able to communicate with other elements around the server system 1.

At first, the server system 1 is connected to home appliances 100 provided to homes and offices for providing information requested through the home appliances 100, or providing firmware or other management software toward the home appliances 100.

It is preferable that the home appliances 100 in communication with the server system 1 have own device IDs, respectively.

In the meantime, if the home appliances 100 provided to be able to communicate with the server system 1 exist two or more than two at one place (Home or Office), the two or more than two home appliances 100 are provided, not only to communicate with the server system 1 to transmit/receive information, but also communicate with one another.

With this, information generated or managed at one home appliance 100 is transmitted to other home appliances 100, to share the information in common. Moreover, information inputted to or generated by one home appliance 100 may be displayed on a display unit of other home appliance 100.

In the meantime, the server system 1 is provided to be able to communicate with a wireless terminal 200 the user owns. The wireless terminal 200 may be, but not limited to, a smart phone, a tablet PC, and so on which can access to the Internet.

The wireless terminal 200 is also provided with a device ID of its own the same as the home appliance, and can communicate with the server system 1 by passing a mutual authentication procedure with the server system 1. By communication between the wireless terminal 200 and the server system 1, remote control and remote information management on the home appliance 100 provided at remote places (Home and office) is possible.

Therefore, as information or a signal inputted to or managed by the wireless terminal 200 is transmitted to the home appliance 100 provided at the remote place through the server system 1 or the Internet network, the information or the signal may be displayed or stored at the home appliance.

And, information, or a signal generated, or managed by the home appliance 100 may be provided to the wireless terminal 200 through the server system 1 or the Internet network.

In the meantime, as information or signal exchange is made possible between the wireless terminal 200 and the server system 1, firmware or software upgrade or update from the server system 1 toward the wireless terminal 200 is possible automatically or if there is request from a wireless terminal 200 side.

Besides connection of the server system 1 to the home appliance or the smart phone, the server system 1 may be connected to an external service provider 300, for enabling the external service provider 300 to provide information or signals or programs to the user.

That is, the server system 1 can provide passage service in which the server system 1 is connected to shopping centers, private educational institutes, schools, hospitals, and broadcasting stations to provide information such enterprises provide to the home appliances 100 or the wireless terminal 200 the users use.

That is, if there is request for service a particular outside enterpriser provides through the home appliance 100 authorized by the server system 1, the server system 1 serves as a medium which provides the user information or the home appliance information to the outside enterpriser 300 and, in turn, provides necessary information to the user.

With such service, the user may have shopping service, living information, medical information, and so on provided thereto remotely, and the outside enterpriser 300 may obtain the user information through the server system 1 under agreement of the user, and may perform advertisement or service guide suit to the information obtained thus.

In the meantime, through intermediation of the server system, the particular user U may exchange information or a signal with other user U'.

That is, if the particular user U intends to generate or manage predetermined information by using an input unit and a display unit at a particular home appliance 100, and share the information with other user U' in common, the particular user may provide the information to other user U' while the particular user manage the information with the server system 1.

That is, in a case the information is provided among users authenticated by the server system 1, by showing his (Her) own exercise information, health information, recipe information, and so on to other users, friendship may be cultivated, or motivation on exercise or health management may be provided among the users.

Referring to FIG. 2, in a plurality of the home appliances 100 which belongs to a user, each of the home appliances 100 includes a control unit 101, a communication unit 102, an input unit 103, a display unit 104, a driving unit 105, and a memory unit 106.

In this instance, the communication unit 102 serves as an interface for communicating with the server system 1, or a communication unit of other home appliance, or a communication unit 202 of the wireless terminal 200.

The input unit 103 is provided in a form of a button or a touch pad for the user to input information thereto, and the display unit 104 visualizes information transmitted from an outside or the user manages for the user to watch.

The driving unit 105 is a part for performing an original function according to characteristic of the home appliance. That is, if the home appliance is a refrigerator, a compressor, a cooling fan, and so on are the driving unit, and, if the home appliance is a washing machine, a driving motor, or a water supply valve may form the driving unit.

The memory unit 106 stores information the user manages or provided from an outside.

The wireless terminal 200 also includes a control unit 201, a communication unit 202, an input unit 203, and a memory unit 206, and functions of which are similar to the same of the home appliance, and description of the same will be omitted for preventing repetitive description.

In the meantime, the server system 1 may be connected to an outside enterpriser server 310 for exchanging information, and provide the information to the home appliance 100 of the user.

And, in a case of service which requires settlement of accounts, such as shopping, the server 1 is provided to be able to communicate with an outside settlement agent for assisting to make progress of the service smooth.

In the meantime, the server system 1 is provided such that a plurality of users can access thereto at a time for exchange information among them. The drawing shows the plurality of users as a user1 U1, a user2 U2, user3 U3, and so on, wherein the users exchange information to other users through the home appliance 100, the wireless terminal 200, and so on.

That is, elements of the home appliance or elements of the wireless terminal each of the users has are identical or similar to the elements of the home appliance (The control unit 101, the communication unit 102, the input unit 103, the display unit 104, the driving unit 105, and the memory unit 106) or the elements of the wireless terminal 200 (The control unit 201, the communication unit 202, the input unit 203, the display unit 204, and the memory unit 206).

The device ID and property information (e.g. product type, model information, etc.) of the home appliances may be registered in the server system together with the user ID.

Here, though the device ID may be generated regardless of the property information of the product, such as the product type, and the model information, the device ID may be encoded together with the property information of the product.

Accordingly, the server system 1 may recognize the product type, or the model information of the product with reference to the device ID only.

The user may request a service through home appliances 100 to be provided with the service if the home appliances 100 are registered in the server system 1.

For an example, if the user selects and inputs a desired service through the display window of the refrigerator, the refrigerator can communication with the server system 1 to request the service.

To allow the user to conveniently request a service and extend the range of home appliance management service items, it may be necessary to allow the user to enable service request through means other than home appliances.

If the user accesses to the server system 1 through the home appliance 100, though the server system 1 can specify a service object as the user accesses to the server system 1 through an account of the home appliance 100 or the wireless terminal 200, if the user accesses to the server system 1 not through the home appliance 100, it may be necessary to fix how to specify a service object home appliance 100.

As an example, the user may access to the representative site 2, and request the service by inputting the device ID of the home appliance 100 to be served.

In this case, however, the user needs to memorize all device IDs of home appliances 100 the user owns.

The representative site 2 may be made to mitigate such inconvenience. The user may signup to the representative site 2 and have the user ID and password given to the user.

The user may log-in the representative site 2 and register all the home appliances 100 the user owns thereto.

The home appliances 100 registered in the representative site may be registered in the server system 1 together with the user ID.

This may be done by automatic transmission of the information from the representative site 2 to the server system 1.

Moreover, the registration of the home appliances 100 in the server system 1 described before may also be made with an activation procedure to be described later.

In any case, if the user has the ID issued thereto, the ID may be registered to, and managed by, the server system 1, together with the home appliances 100 of the user.

The service request received from the user through the representative site 2 may be performed as a manager gives an order to the server system 1 on relevant management service.

Or, the representative site 2 may be connected to the server system 1 through an open API, when the user can make management service request to the server system 1 directly through the representative site 2.

The server system 1 has a server side protocol provided thereto for the management service, wherein the server side protocol performs the management service requested thus in interrelation with a client side protocol of the product.

As a protocol for performing the management service between the server system 1 and the home appliance 100, an OMA DM protocol may be used.

Of course, not the OMA DM, but other solution may be used. Though the embodiment suggests using the OMA DM protocol, the present invention is not limited to this.

The management service may have the following management details.

In order to perform an initial management session, a DM (Device Management) client of the home appliance 100 or the wireless terminal 200 needs authentication information with a DM (Device Management) server, and network setting information for connection to the network. A step for above is called as Bootstrap.

Provisioning: The home appliance 100 or the wireless terminal 200 which initially performs the management session is registered in the DM (Device Management) server system with the Bootstrap, and configuration of the home appliance 100 or the wireless terminal 200 is updated to a latest one for providing the service to the home appliance 100 or the wireless terminal 200.

A step for above is called as Provisioning.

Configuration Management: Management operation for referring to, or changing home appliance 100 or wireless terminal 200 related setting information, or setting, referring to or changing service related information is called as Device configuration management.

Control Management: This is a management operation of controlling the home appliance 100 or the wireless terminal 200.

The DM server can signal the contents of a management operation to a user through a terminal screen or receive acknowledgement by sending an alert signal to a DM client. That is, improved management can be achieved through interaction between the DM server and the user.

Diagnostic and monitoring: Performance deterioration or fault may take place while a user uses the home appliance 100 or the wireless terminal 200.

Accordingly, it is necessary to recognize this state in advance and take a measure suitable to the recognized state to provide the user a secure environment in which the home appliances 100 can be used. This operation is referred to as diagnostic and monitoring management.

Firmware Update Management: Management operation performed in a case a trouble, a functional change, or updating of firmware takes place at a terminal after sold by a manufacturer.

Software Component Management: Management operation of installing, updating, or deleting a software component from the terminal.

Backup and Restore Management: Management operation of backing-up/restoring data on the terminal to the DM server.

In the meantime, the server system 10 may be installed distributed to many places in view of positions thereof. For an example, a server system 1 may be installed in Korea and a server system 2 may be installed in the USA.

And, the server system may be divided into a plurality of servers according to services of the servers.

The server system may include, but not limited to, the following servers.

### <DM Server>

The DM Server 11 provides a service of giving a terminal management order to the DM client of the home appliance 100 or the wireless terminal 200. In this instance, of the functions of the communication unit 102 or 202 of the home appliance 100 or the wireless terminal 200, the DM client performs functions related to product management, in detail.

That is, by means of the management order, the DM Server 11 provides a management function of processing firmware update (Modem firmware/OS) management work, software management work, diagnostic management work, and so on, remotely.

The DM Server 11 may include a Session Management region, a Security Management region, a DM Protocol Process region, and a SyncML Protocol Engine region.

### <DL server>

The DL server 12 transmits a file to the DL client of the home appliance 100 or the wireless terminal 200.

That is, the DL server 11 provides a function in which the DL server 11 transmits information on the file intended to transmit through a DD (Download Descriptor), for the DL client to download the file, exactly.

In this instance, the DL client is an element for performing a function related to download of the functions of the communication unit 102 or 202 in the home appliance 100 or the wireless terminal 200, in detail.

The downloaded file includes a firmware update package and a software management package. The DL server may include a Session Management region, a Package Management region, and a Download region.

### <ONM Server or User Portal>

The ONM Server 13 provides a service of interfacing with the DM server 11, or the DL server 12 and the Legacy server 14 to be described later, and of embodying a business logic.

The manager may give a management order, or refer to management information, through a management web page of the ONM Server 13.

The User Portal provides some of the functions of the ONM Server 13 to the user.

In this instance, the functions of the ONM Server 13 are embodied through the open API of the DM Server 11. The user may request the management service to the DM Server through the user portal.

### <Legacy Server>

In Representative Legacy Servers 14 the ONM Server 13 is interrelated thereto, there are a server for receiving home appliance 100 or the wireless terminal 200 information and a server for receiving user information.

That is, the legacy servers 14 transmit the user information or the home appliance 100 or the wireless terminal 200 information to the ONM Server 13 for providing information to embody the business logic.

### <Notification Server>

The notification server 15 transmits a notification message from the DM server 11 to the home appliance 100 or the wireless terminal 200.

The notification server 15 may include a Session Generation region, and a Schedule Management region.

If the home appliance 100 or the wireless terminal 200 is present in a private network, in order to maintain connection to the home appliance 100 or the wireless terminal 200, a Connection Manager may be required, which is specially provided to a server side.

The home appliance 100 or the wireless terminal 200 may request a TCP connection after booted automatically, and the connection manager maintains the TCP connection requested thus. The DM Server 11 transmits the notification message through the TCP connection.

The Notification server 15 is provided to be able to communicate with the wireless terminal 200 or the home appliance 100 of the user, for informing to the user if information on the home appliance 100 (Stored goods management information, a shopping wish list, goods purchase finish information, account settlement information) is changed.

### <Open API>

An application at a wireless terminal, such as a smart phone, may manage terminals through the open API provided by the DM Server, remotely.

In the meantime, the server system 1 may include a data base server 16.

The data base server 16 may include a user information data base having personal information of the users recorded thereon who signed up to the representative site to obtain IDs, respectively.

The user information data base may store user's personal information (Name, address, telephone number, and so on), and information on the home appliance (A number the user owns, and types of the home appliances).

Details and a procedure of the management service will be described.

FIG. 3 illustrates a diagram showing signup, and activation of the home appliance 100 or the wireless terminal 200.

As described before, the user accesses to the representative site 2, to signup thereto to have the ID and the password given to the user.

The activation of the home appliance may be a procedure for registering the home appliance 100 or the wireless terminal 200 of the user in the server system.

The display unit of the home appliance 100 or the wireless terminal 200 may have a window popped up thereto, which enables the user to input the user ID and password. The user may perform an activation procedure through the frame.

If the user inputs the user ID and password to the frame, and inputs an activation order, the home appliance 100 or the wireless terminal 200 transmits the user ID and password, the device ID, and the property information of the product to the user site 2.

In this instance, the home appliance 100 or the wireless terminal 200 may store the user ID and password in the memory unit thereof.

According to this, the user ID and password may be used for authentication of the user.

The device ID may have been inputted to the home appliance 100 or the wireless terminal 200 already, or is generated inside of the home appliance 100 or the wireless terminal 200 automatically when the activation procedure is performed.

Or, it is possible that the device ID is generated automatically when the home appliance 100 or the wireless terminal 200 is newly bought and turned on for the first time.

As the property information on the home appliance 100 or the wireless terminal 200, there may be model information, a product code, a manufactured date, a manufactured product number, and so on of the home appliance 100 or the wireless terminal 200.

And, in the activation procedure, the home appliance 100 or the wireless terminal 200 may transmit a password, a service URL, a server ID and password, altogether.

Of the information transmitted to the user site 2 in the activation procedure, the information excluding the user ID and password may be generated at the home appliance 100 or the wireless terminal 200 automatically, or in an already inputted state.

In the activation procedure, upon reception of the information described before at the user site from the home appliance 100 or the wireless terminal 200, the user site 2 registers the home appliance 100 or the wireless terminal 200 at the user ID.

According to this, the user site 2 registers the home appliance 100 or the wireless terminal 200 the user uses at respective user IDs.

Then, the user site 2 transmits the user ID and password, the device ID, and the product property information the server system 1. In this instance, the ID and the password of the server may be transmitted, altogether.

At first, the server system 1 performs authentication of the information transmitted thus. Accordingly, when the authentication is passed, the user ID and password, the device ID and password, and the product property information are registered in the server system 1. In this instance, the device password may also be transmitted, altogether.

The activation procedure may be performed regardless of place if a state of a communication environment is provided, in which access to the server system 1 and the user site 1 is possible. For an example, a seller from whom the user has bought a product may perform the activation procedure for the user.

The user may request the service at the display unit of the home appliance 100 or the wireless terminal 200 to be served.

For an example, after making a frame of a desired service to pop up on the display unit of the home appliance 100 or the wireless terminal 200, the service request may be made after inputting the user ID and password thereto.

In this instance, the home appliance 100 or the wireless terminal 200 may transmit the user ID and password, and the device ID, together with information on the service request.

Moreover, the user may request the desired service through the user site 2, too. The user site 2 may have a web page provided thereto for enabling the user to request the management service thereto.

Upon reception of the service request from the user, the user site 2 may transmit information on the service request to the server system 1. In this instance, the user ID and password, and the device ID may be transmitted, altogether.

Moreover, the user may call a client call center to make the service request. The client call center may also be made to receive the management service with an ARS system.

In the meantime, the user can perform a procedure for cancelling or closing registration of the home appliance 100 or the wireless terminal 200 of his (or her) own.

Upon making a registration cancel or close frame to pop up at a screen of the home appliance 100 or the wireless terminal 200, if the user inputs a registration cancel or close order after inputting the user ID and password, the home appliance 100 or the wireless terminal 200 accesses to the representative site 2 or the server system 1 and transmits information on the registration cancel or close thereto.

And, according to this, the representative site 2 or the server system 1 cancels or closes registration of the home appliance 100 or the wireless terminal 200.

Moreover, the user may cancel signup to the representative site 2. Once, the user cancels signup, registration of the home appliance 100 or the wireless terminal 200 of the user is cancelled or closed.

FIG. 4 illustrates a diagram showing a procedure for requesting to delete the user ID and password of his (or her) own through the terminal.

Upon inputting the ID and password to be deleted to the frame of the display unit of the home appliance 100 or the wireless terminal 200 and transmitting the same, the representative site 2 or the server system 1 may progress a procedure for cancelling or closing information on the member and registration of entire home appliance 100 or wireless terminal 200 belonging to the member.

In the meantime, the service request may be made through the wireless terminal 1, like the smart phone. FIG. 5A illustrates a diagram showing downloading a smart phone application for management service.

When the user reads in a QR code attached to the home appliance by using the wireless terminal 200, a mobile web is displayed on the screen of the wireless terminal 200. And, upon pressing an application installation button of buttons shown on the mobile web, a frame related to an application installation is displayed.

And, upon pressing an install button, the application is installed to the wireless terminal 200.

In this instance, the application is an interface which enables to access to the server system 1, and, with this, the user can manage the home appliance by using the smart phone, remotely.

FIG. 5B illustrates a diagram showing service request through the wireless terminal 200, the client call center, and the home appliance 100 (A washing machine and a refrigerator are shown as the home appliance, as an example).

If the service request is made through the home appliance 100, the user may input the user ID and password by using the input unit displayed on the display unit of the home appliance 100 to request the service (A case of ①).

If the service request is made through the home appliance 100, the server system 200 performs service (Provision of information, and fault diagnosis) the home appliance 100 requires (A case of ③), and the home appliance 100 transmits a result of the service in a direction of the server system (A case of ④).

If the service request is made though the smart phone 200, after starting the management service application installed to the smart phone 200, the user may request the service on the home appliance by inputting the user ID and password (A case of ②).

For requesting the service, the smart phone 200 may transmit information on the service request to the server system 1, together with the user ID and password, and the device ID.

The server system 1 performs the service (Provision of information, and diagnosis of fault) the home appliance 100 requires (A case of ③), and the home appliance 100 transmits a result of the service in a direction of the server system 1 (A case of ⑤).

An embodiment of information or signal exchange between the home appliance 100 and the wireless terminal 200 through the server system 1 in an information management system for a home appliance illustrated in FIGS. 1 and 2 will be described.

As a precondition for the information exchange between the home appliance 100 and the wireless terminal 200, an authentication procedure between the server system 1 and the home appliance 100 and between the server system 1 and wireless terminal 200 is required.

The authentication may be performed, if the home appliance 100 or the wireless terminal 200 accesses to the server system 1, as the server system 1 requests the home appliance 10 or the wireless terminal 200 to authenticate the home appliance 100, and the user manipulates the input unit in the home appliance 100 or the wireless terminal 200 to input information (The user ID, password, and other authentication numbers) required for the authentication.

In the present invention, by the information or signal inputted through the input unit of the wireless terminal 200, the home appliance 100 may be remotely controlled, or state information of the home appliance 100 may be displayed on the display unit of the wireless terminal 200.

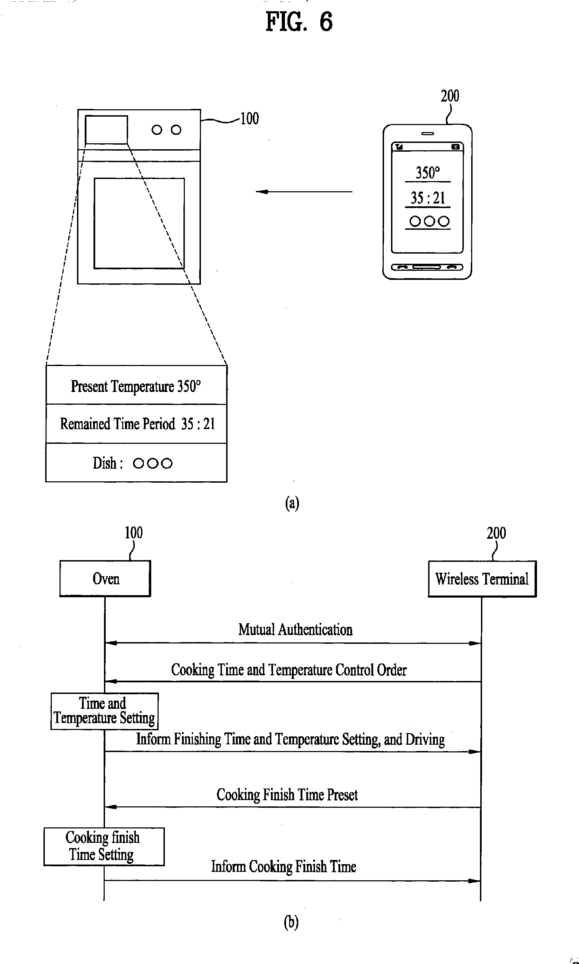

Referring to FIG. 6, as an example, if the home appliance 100 is an electric oven, the user can control the electric oven by using the wireless terminal 200.

That is, in a state the wireless terminal 200 and the electric oven are mutually authenticated, if the user orders a cooking time control and a cooking temperature control, the electric oven is set to the cooking time and the cooking temperature ordered thus.

Then, the electric oven informs toward the wireless terminal 200 that setting of the cooking time and the cooking temperature completed, and a driving state.

And, if the user presets a cooking finish time by using the wireless terminal 200, the cooking finish time is set to the electric oven, and the electric oven informs toward the wireless terminal 200 that the cooking finish time is set.

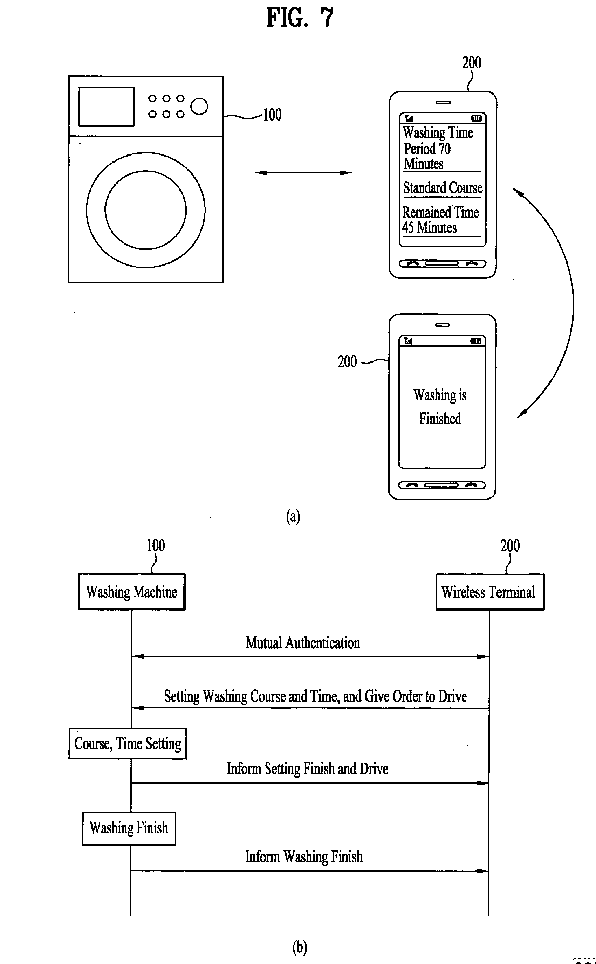

FIG. 7 illustrates a diagram showing the remote operation setting can be made by using the wireless terminal 200, if the home appliance 100 is a washing machine.

That is, under the state the home appliance and the wireless terminal 200 are authenticated mutually, if the user sets a washing course, a washing time, and gives a driving order by using the wireless terminal 200, the course and the time is set to the washing machine as ordered.

And, the home appliance informs completion of the setting and a driving state toward the wireless terminal 200.

Then, if the washing is finished, a washing finish signal is transmitted from the washing machine toward the wireless terminal 200, to display a message that the washing is finished on the display unit in the wireless terminal 200.

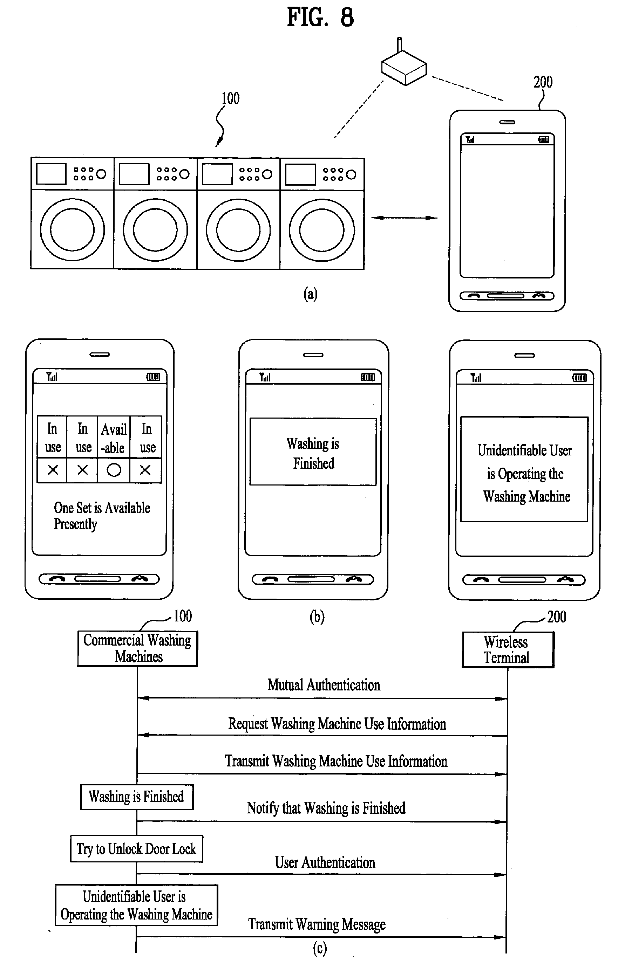

FIG. 8 illustrates a diagram showing notice of information on available or using washing machines through the wireless terminal 200, if a self laundry shop has a plurality of commercial washing machines installed thereto.

That is, referring to FIG. 8A, a plurality of washing machines are provided to the self laundry shop, and a communication unit is provided to the self laundry shop which enables communication with each of the washing machines.

The communication unit is provided to be able to communicate with the wireless terminal 200, such as the smart phone, of the user, and a plurality pieces of messages as shown in FIG. 8B are displayed on the display unit of the wireless terminal 200 depending on the information.

Detailed embodiment of use is discussed with reference to FIG. 8C. Under a state the commercial washing machines and the wireless terminal 200 are authenticated mutually, if the user requests washing machine availability information through the wireless terminal 200, the commercial washing machine transmits presently available washing machine information (See a first drawing in FIG. 8B).

And, if washing is finished after the user introduces the laundry to a particular washing machine and puts the washing machine into operation, a message that the washing is finished is transmitted from the washing machine toward the wireless terminal 200, and displayed on the display unit of the wireless terminal 200 (See a second drawing in FIG. 8B).

In the meantime, if the user tries unlocking of the door lock after finish of the washing, the washing machine transmits user authentication request toward the wireless terminal 200. If the user authenticates the user through the wireless terminal 200, the door lock is unlocked, and the user may collect the laundry of which washing is finished.

However, if there are repetitive door lock unlocking tries in a state no authentication is made despite of the user authentication request, the washing machine recognizes that an unidentifiable user handles the washing machine.

The washing machine transmits an alert message toward the wireless terminal 200, to display the alert message on the display unit in the wireless terminal 200, for the user to notice (See a third drawing in FIG. 8B).

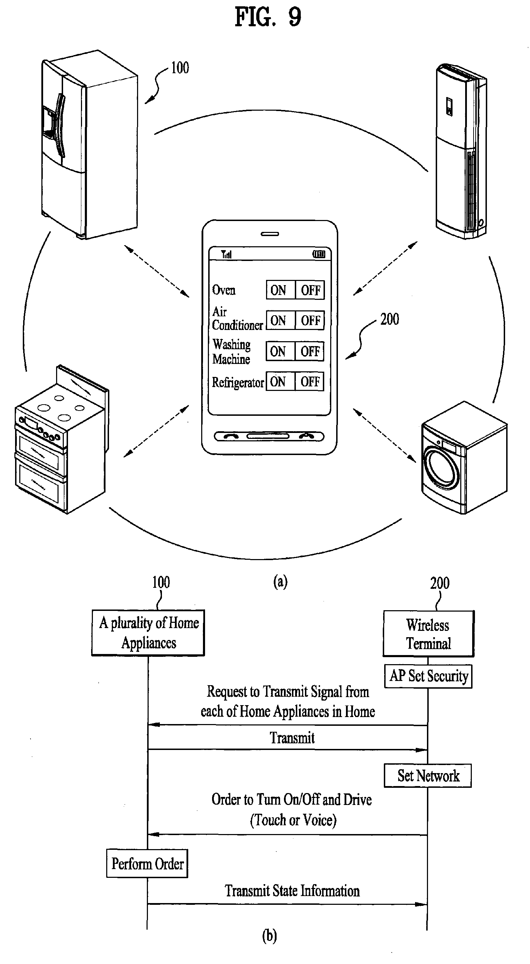

FIG. 9 illustrates a diagram showing that entire home appliances 100 in a home can be operated with the wireless terminal 200.

That is, the user sets security of an AP with the wireless terminal 200, so that other person can not use the wireless Internet, freely.

And, the user requests the home appliances 100 in the home to transmit signal by using the wireless terminal 200. Upon reception of the request, if the home appliances 100 transmit the signal toward the wireless terminal 200, a network is set to include the wireless terminal 200 and the home appliances 100.

Then, if the user performs turn on/off operation and a drive control order of the home appliance 100 by touching the wireless terminal 200 or in voice, the home appliance 100 carries out the user's order, and transmits the present state toward the wireless terminal 200.

According to this, a operational state of the home appliances 100 may be displayed on the display unit in the wireless terminal 200.

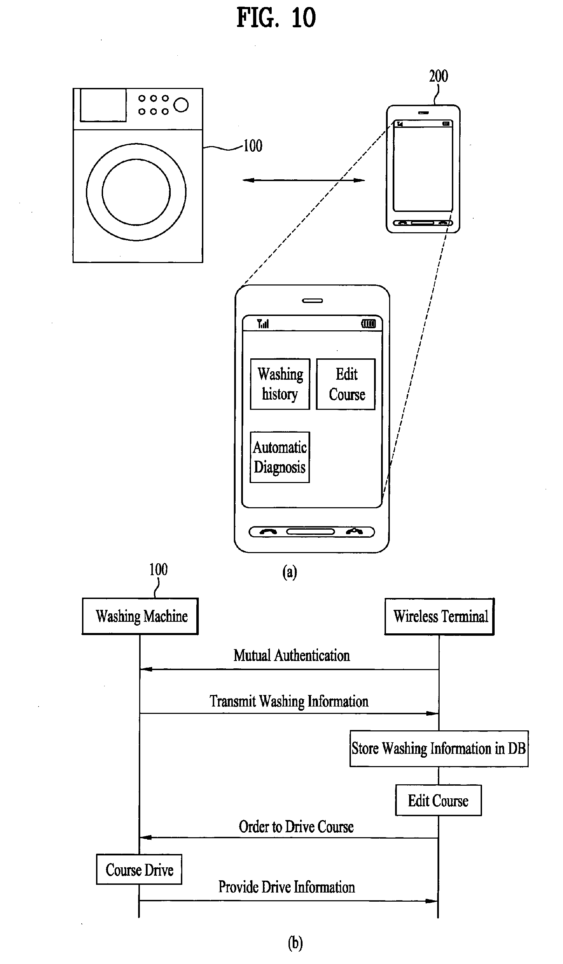

FIG. 10 illustrates a diagram showing that operation information of the home appliance 100 can be edited by communication between the home appliance 100 and the wireless terminal 200.

Referring to FIG. 10, if the home appliance 100 is a washing machine, the washing machine and the wireless terminal 200 perform mutual authentication.

Then, the washing machine transmits washing information toward the wireless terminal 200. The washing information includes a washing history, courses, a driving time period, a detergent amount, and so on of the washing machine.

The wireless terminal 200 may store the washing information stored in a DB thereof, and the user can edit a course according to user's selection. That is, by extending a washing time period, reducing a number of rinsing times, or adjusting a spinning time period in a standard course, the user may edit a favorite course.

If the user gives a course drive order to the washing machine to operate the course the user edits by using the wireless terminal 200, the washing machine performs the course drive, and provides drive information to the wireless terminal 200.

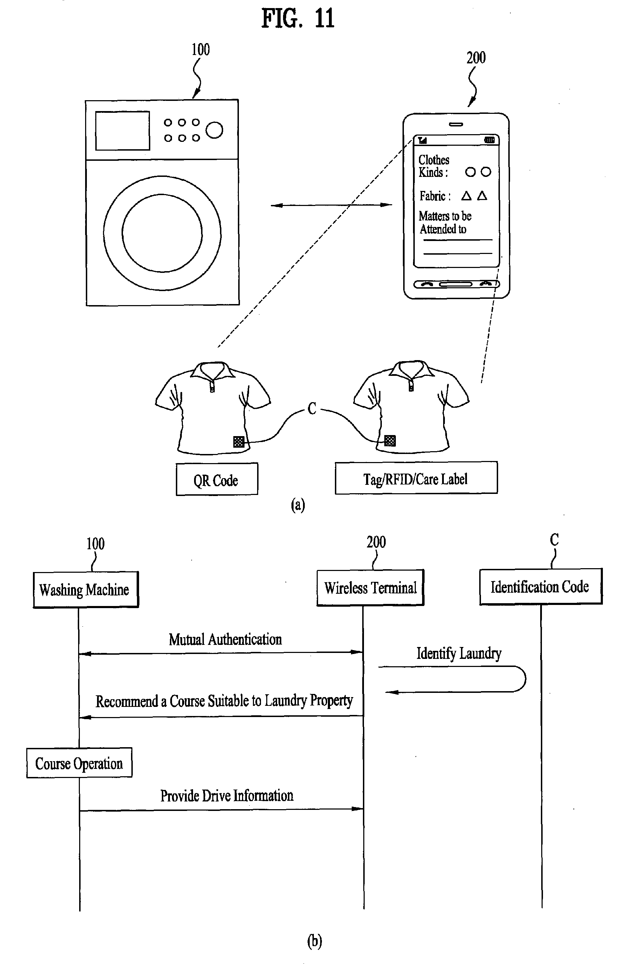

FIG. 11 illustrates a diagram showing that the wireless terminal 200 recognizes a tag, a QR code, a care label C, or the like, and provides information recognized thus toward the home appliance 100.

Referring to FIG. 11, if the home appliance 100 is a washing machine, mutual authentication between the washing machine and the wireless terminal 200 are performed.

Then, upon reading the tag, the QR code, or the care label C attached to the laundry by using the wireless terminal 200, washing information related to the tag, the QR code, or the care label C is displayed on the wireless terminal 200.

And, the wireless terminal 200 may transmit a recommendable course for properties of the laundry toward the washing machine. If the user puts the course into operation, the washing machine may provide the present operation information toward the wireless terminal 200.

In the meantime, if it is set such that predetermined information or signal is generated with the input unit in the home appliance 100, and transmitted to the wireless terminal 200, the present invention may make the information or the signal, particularly, when the information is schedule information or message information, to be displayed on the display unit in the wireless terminal 200.

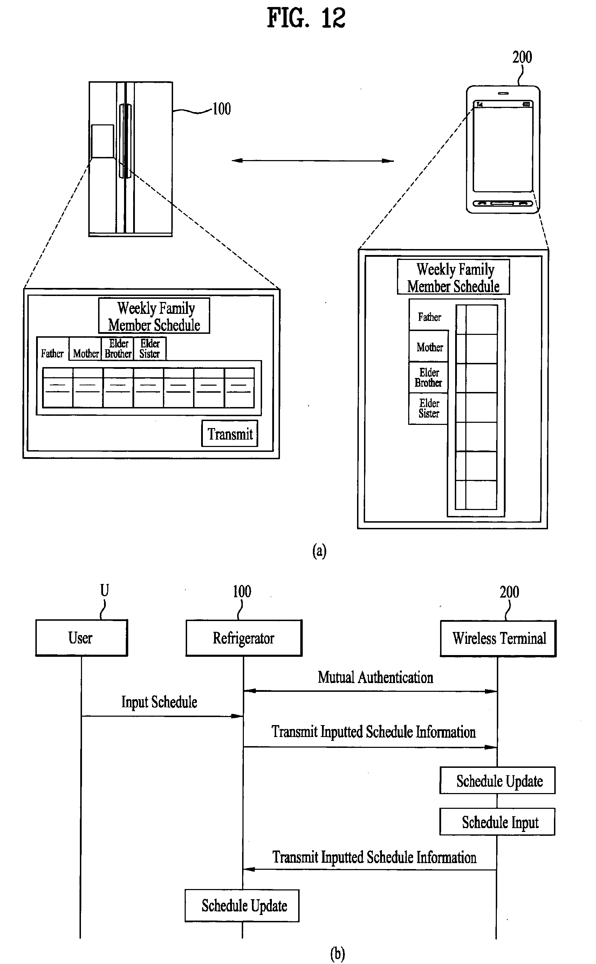

Referring to FIG. 12, if the home appliance 100 is a refrigerator, mutual authentication between the refrigerator and the wireless terminal 200 is performed.

If the user inputs a schedule to the input unit in the refrigerator, schedule information inputted thus is transmitted to the wireless terminal 200, and the display unit in the wireless terminal 200 displays a schedule updated state.

In the meantime, if the user inputs the schedule by using the wireless terminal 200, the schedule inputted thus is transmitted to the refrigerator, and the display unit in the refrigerator displays an updated schedule.

With this, if the schedule of one member of a family is changed, entire member of the family can notice the schedule changed thus.

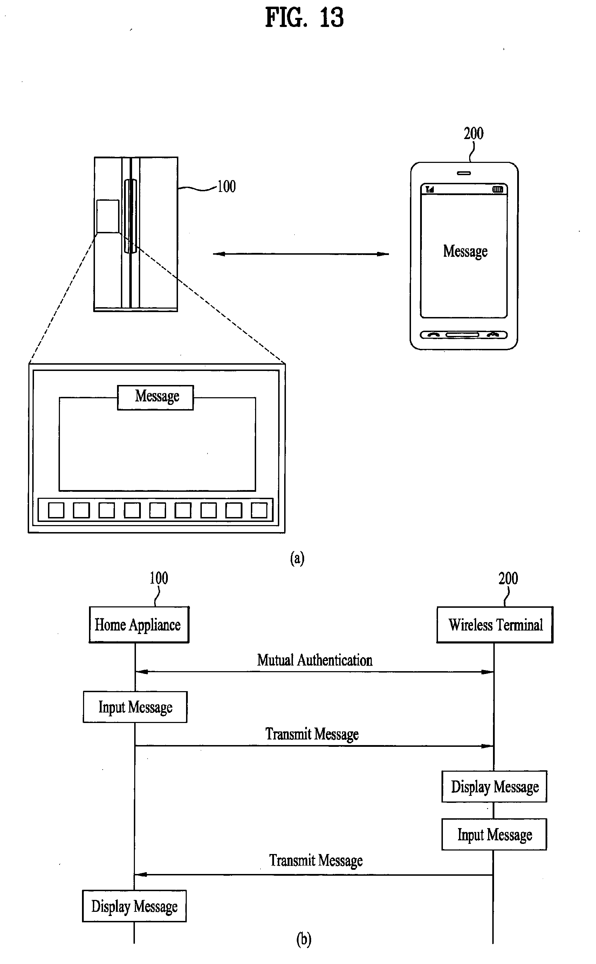

Referring to FIG. 13, if the home appliance 100 is a refrigerator, after mutual authentication between the refrigerator and the wireless terminal 200, if the user inputs a predetermined message to the input unit in the refrigerator, the message may be transmitted to other user's wireless terminal 200.

In this case, the message may be displayed on the other user's wireless terminal 200.

In the meantime, if the user inputs a message to the user's wireless terminal 200, the message inputted thus is transmitted to the refrigerator, and may be displayed on the display unit in the refrigerator.

In the meantime, if it is set such that a signal for requesting a position information of the wireless terminal 200 is generated with the input unit in the home appliance 100, and transmitted to the wireless terminal 200, the present invention may make the position signal to be transmitted from the wireless terminal 200 toward the home appliance 100, and displayed on the display unit in the home appliance 100.

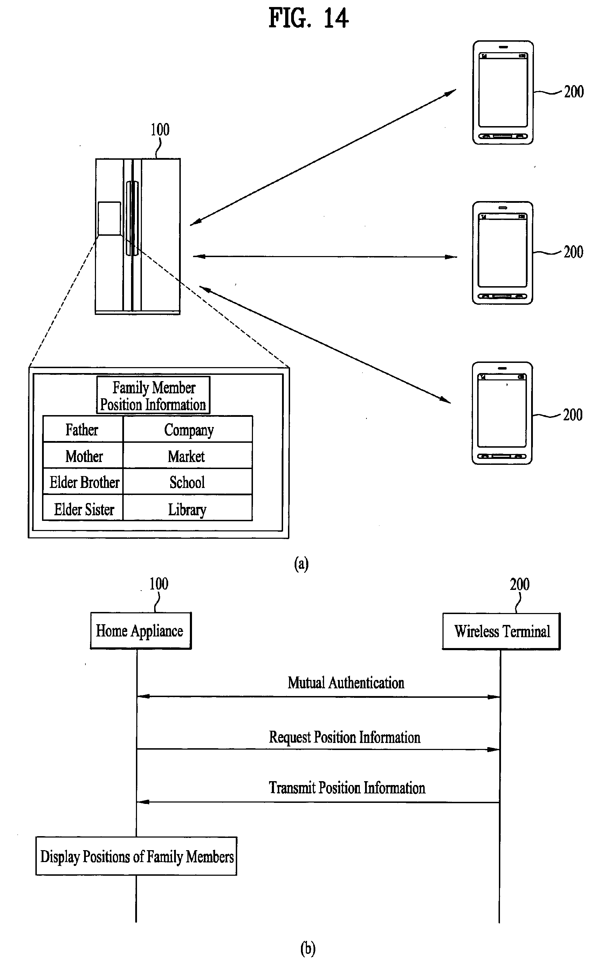

Referring to FIG. 14, after completion of the mutual authentication between the home appliance 100 and the wireless terminals 200, the user may manipulate the input unit in the home appliance 100 to request position information toward the wireless terminals 200.

Upon reception of the position information, each of the wireless terminals 200 transmits the present position information to the home appliance 100, and the position information from the wireless terminals 200 may be displayed on the display unit in the home appliance 100.

Particularly, if the user wonders about positions of family members, the user can hold of the positions of the family members by using the present invention.

In the meantime, according to the present invention, if the user generates or updates predetermined information and requests to transmit the information to the wireless terminal 200 by using the input unit in the home appliance 100, the display unit in the wireless terminal 200 may display the information received thus or generate other information based on the information received thus.

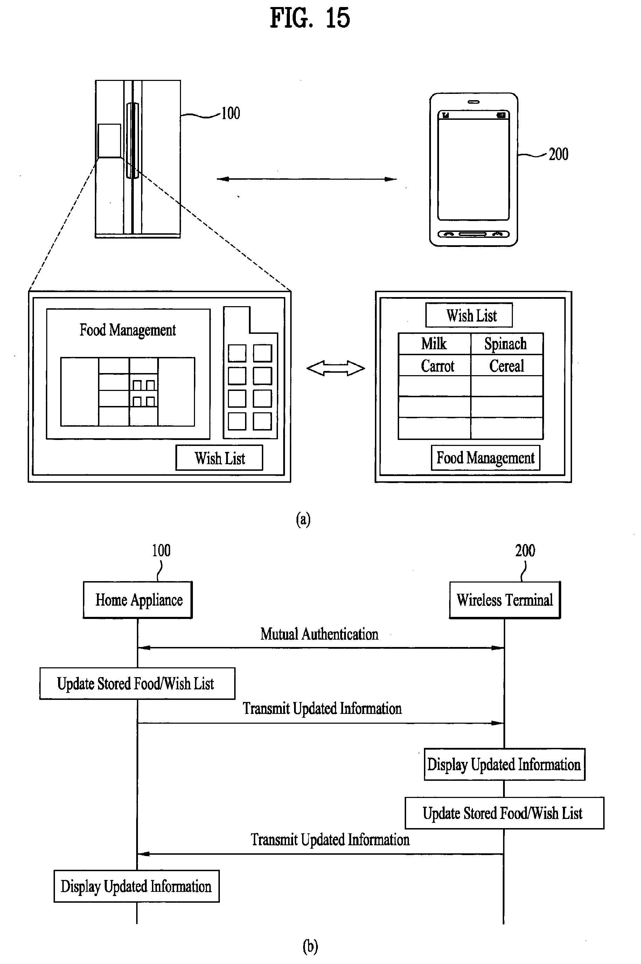

That is, referring to FIG. 15, if the home appliance 100 is a refrigerator, after mutual authentication between the refrigerator and the wireless terminal 200 is completed, the user may update a stored food list in the refrigerator or a shopping wish list.

In this case, the updated information is transmitted in a direction of the wireless terminal 200, and the stored food list or the shopping wish list updated thus may be displayed on the display unit in the wireless terminal 200.

In the meantime, the user may update the stored food list in the refrigerator or the shopping wish list by using the wireless terminal 200.

In this case, the updated information is transmitted in a direction of the refrigerator, and the stored food list or the shopping wish list updated thus may be displayed on the display unit in the refrigerator.

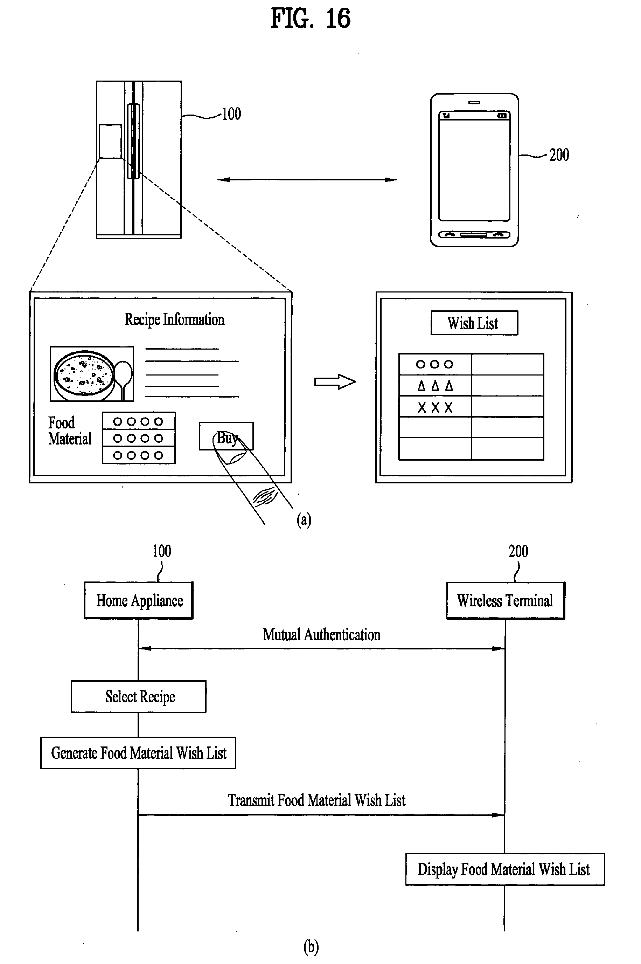

Referring to FIG. 16, if the home appliance 100 is a refrigerator, after mutual authentication between the refrigerator and the wireless terminal 200 is completed, if the user selects one of recipes displayed on the display unit in the refrigerator, a food material list required for the recipe may be generated and displayed on the display unit.

The user can generate a food material wish list based on the food material list displayed thus, and if the user transmits the food material wish list to the wireless terminal 200, the food material wish list received thus may be displayed on the display unit in the wireless terminal 200.

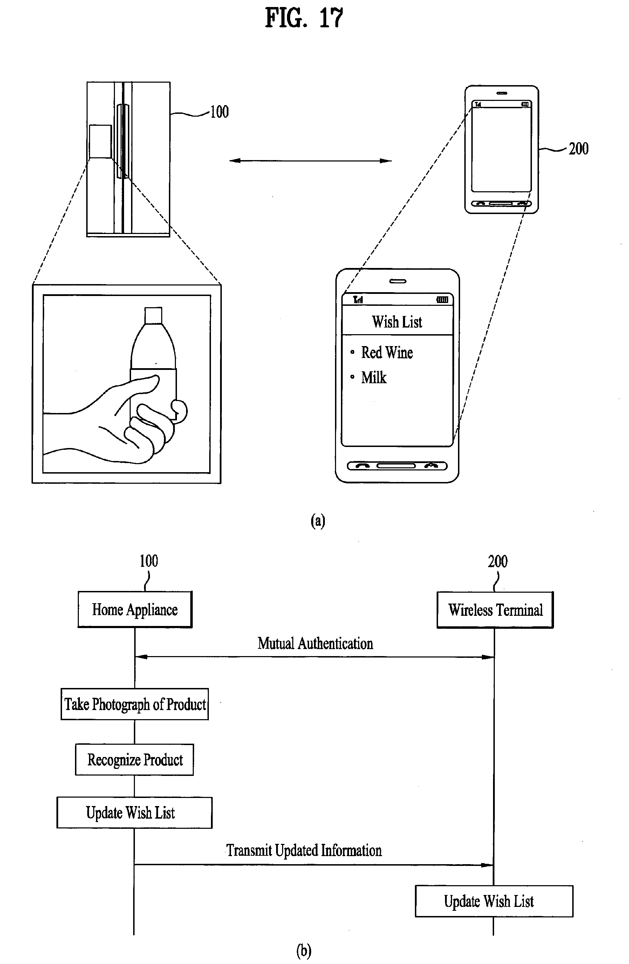

Referring to FIG. 17, if the home appliance 100 is a refrigerator, after mutual authentication between the refrigerator and the wireless terminal 200 is completed, if the user takes a photograph of a particular product to put in the wish list by using a camera provided to the refrigerator, the control unit in the refrigerator recognizes the product to generate information on the product.

And, if the wish list is updated to include the product to the wish list, updated information is transmitted in a direction of the wireless terminal 200, and the wish list updated information is displayed on the display unit in the wireless terminal 200.

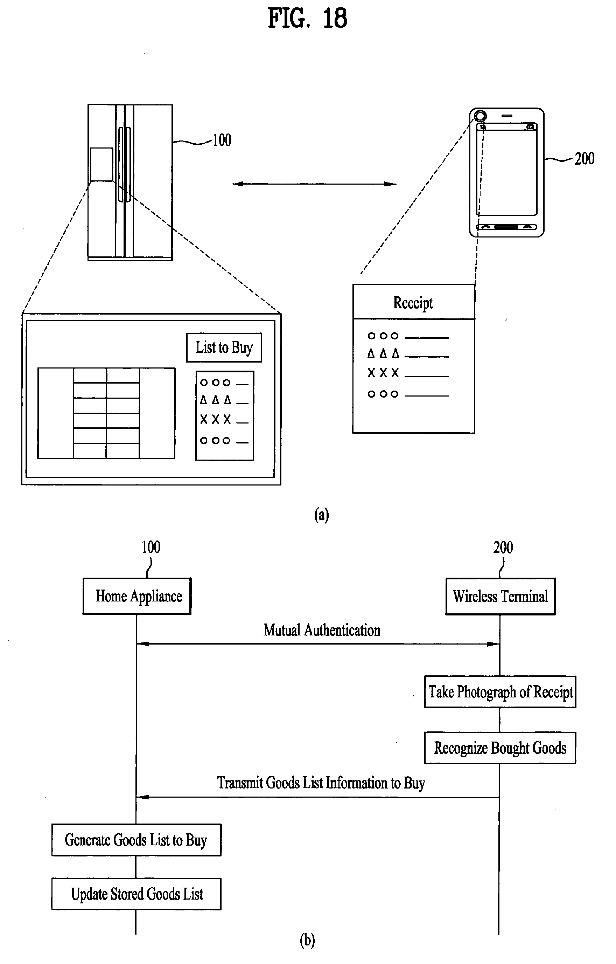

Referring to FIG. 18, if the home appliance 100 is a refrigerator, after mutual authentication between the refrigerator and the wireless terminal 200 is completed, the user may take a photograph of a receipt of the shopped goods by using the wireless terminal 200, for the wireless terminal 200 to recognize shopped goods information.

And, if the shopped goods information is sent in a direction of the home appliance 100 from the wireless terminal 200, a shopped goods list is generated at the refrigerator, and the user may update the stored goods list selecting only goods to be stored from the shopped goods information.

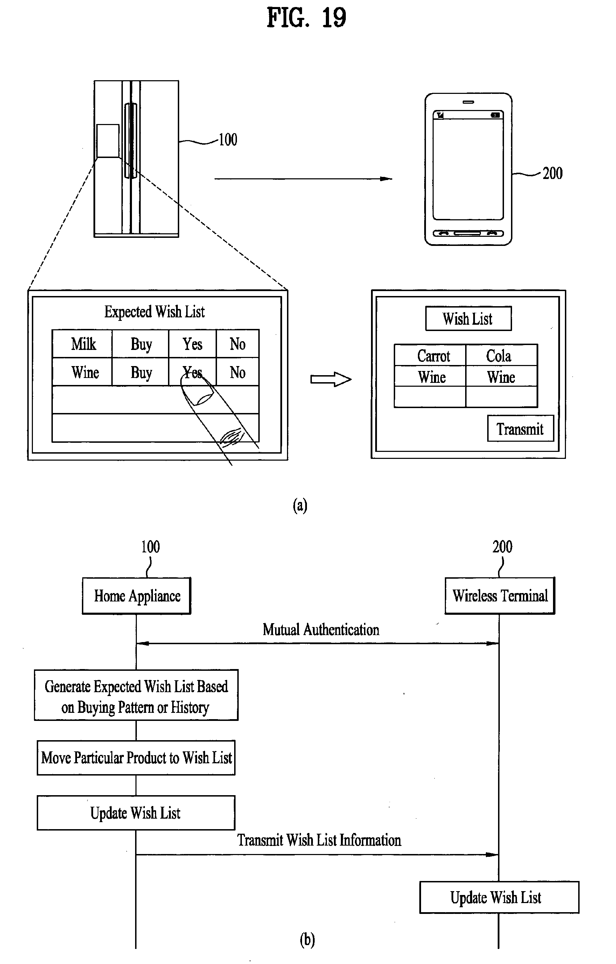

FIG. 19 illustrates a diagram showing that the wireless terminal 200 holds of user's product buying pattern or buying history to generate an expected wish list.

If the home appliance 100 is a refrigerator, in a state mutual authentication between the refrigerator and the wireless terminal 200 is completed, the expected wish list is generated at the display unit in the refrigerator based on the user's buying pattern or buying history.

Referring to FIG. 19A, if the user buys milk and wine periodically, and a buying time comes close, the refrigerator may ask whether the user buys the milk and the wine or not.

In this instance, if the user inputs that the user will buy the wine, the wine is transferred to the wish list to update the wish list.

The wish list updated thus is transmitted to the wireless terminal 200, and the wireless terminal 200 updates the wish list.

Further comprising an input unit provided to the wireless terminal 200 and a camera provided in the home appliance 100 for taking a photograph of an inside of the home appliance 100

In the meantime, in the present invention, if the user inputs a predetermined order to the input unit in the wireless terminal 200, the camera in the home appliance 100 takes a photograph of the inside of the home appliance 100, and image or video information taken thus may be displayed on the display unit in the wireless terminal 200.

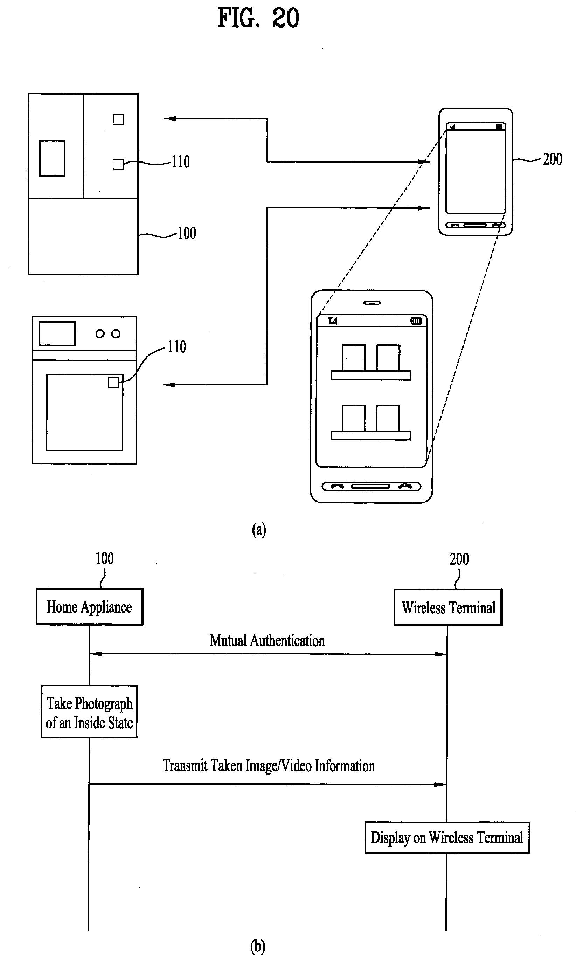

Referring to FIG. 20, in a state mutual authentication between the home appliance 100 having the camera provided to the inside thereof and the wireless terminal 200 is completed, the camera may take a photograph of the inside of the home appliance 100 to generate an image or video.

A refrigerator storage state or a cooking progress state in an electric oven cooking chamber may be photographed by the camera provided to a refrigerator storage chamber or the camera provided in the cooking chamber of the electric oven.

Video or image information taken thus is transmitted to the wireless terminal 200, and the video or image information is displayed on the display unit in the wireless terminal 200.

Owing to such a function, the user can hold of an inside state of the home appliance 100 even if the user does not look into the inside of the home appliance 100, personally.

In the meantime, the present invention may further include a camera unit provided to the home appliance 100 and a driving unit for moving the home appliance 100, wherein, if a monitoring and photographing order on a space the home appliance 100 is installed thereto is inputted through the input unit in the wireless terminal 200, the drive unit and the camera unit in the home appliance 100 may come into operation to take a photograph of the space, an image or video photographed thus may be transmitted to the wireless terminal 200, and the image or video transmitted thus may be displayed on the display unit in the wireless terminal.

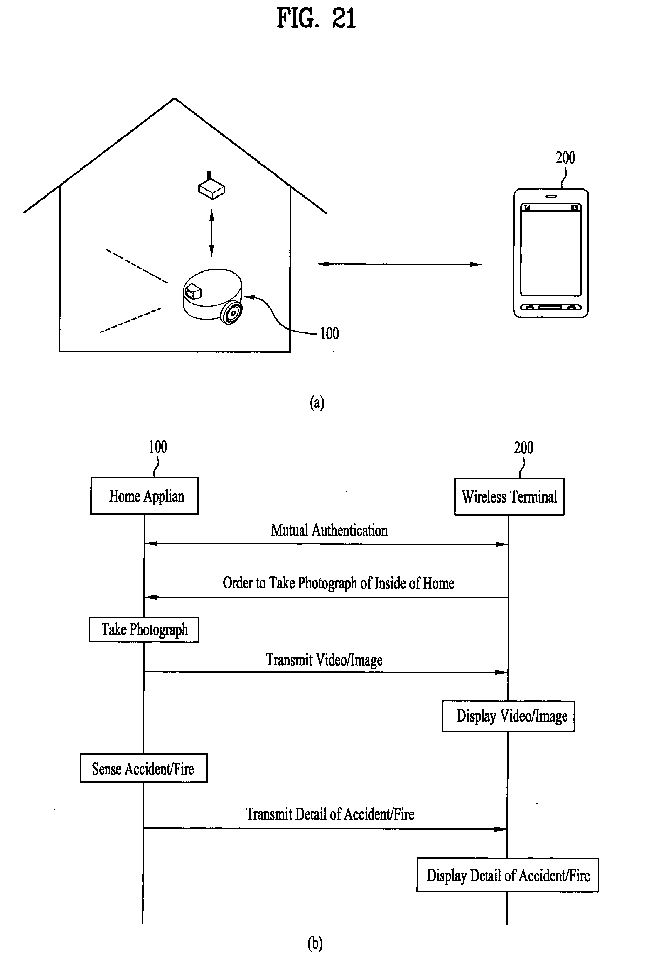

That is, referring to FIG. 21, in a state mutual authentication between the home appliance 100, such as a cleaner having a camera, and the wireless terminal 200 is completed, if a photograph taking order for taking a photograph of an inside of a home is given from the wireless terminal 200, the cleaner takes photograph of an inside state of the home by using the camera.

And, video or image information taken thus is transmitted in a direction of the wireless terminal 200, the video or the image may be displayed on the display unit in the wireless terminal 200, and by using which the user can monitor the inside of the home even if the user is outside of the home.

In the meantime, if an accident or burst of fire in the home is monitored by using a fire detector or a camera provided to the cleaner, the cleaner can transmit the accident or detail of the burst of fire to the wireless terminal 200, quickly.

Accordingly, since the accident or the detail of the burst of fire can be displayed on the wireless terminal 200 of the user, user's quick response can be possible.

In the meantime, in the present invention, if a sensor unit is provided to the home appliance 100, and if it is set such that malfunction of the home appliance 100 is sensed by the sensor unit, and a data sensed thus is transmitted to the wireless terminal 200, the malfunction of the home appliance 100 may be displayed on the display unit in the wireless terminal 200.

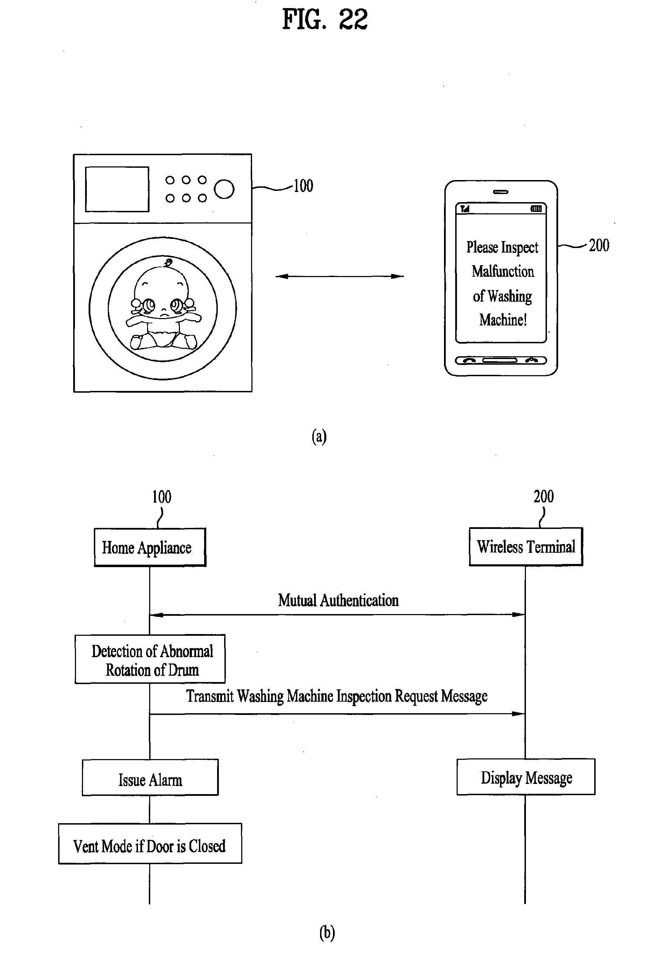

That is, referring to FIG. 22, in a state mutual authentication between the home appliance 100, such as a washing machine, and the wireless terminal 200 is completed, if abnormal rotation of a drum is sensed in a state the washing machine is not in operation, the washing machine transmits a request message to inspect the washing machine in a direction of the wireless terminal 200.

That is, since there is danger of a baby to open a door and enter in the drum to be suffocated, if the washing machine is a drum type washing machine, malfunction of the home appliance 100 is informed to the user and the request for inspecting the home appliance 100 is made to the user for preventing such a negligent accident from taking place.

If such a message is transmitted, the danger sensing and inspection requesting message are displayed on the display unit in the wireless terminal 200.

And, the home appliance 100 issues an alarm for requesting confirmation.

Moreover, if the door is closed, by opening pipes provided to the washing machine so as to rush into a venting mode for preventing the baby from suffocating, air can be supplied to an inside of the drum.

In the meantime, the present invention may transmit health information (A blood pressure, an exercise amount, and so on) on the user from the wireless terminal 200 to the home appliance 100, for the home appliance 100 to display the health information thereon and, also, to provide recommendable menu information.

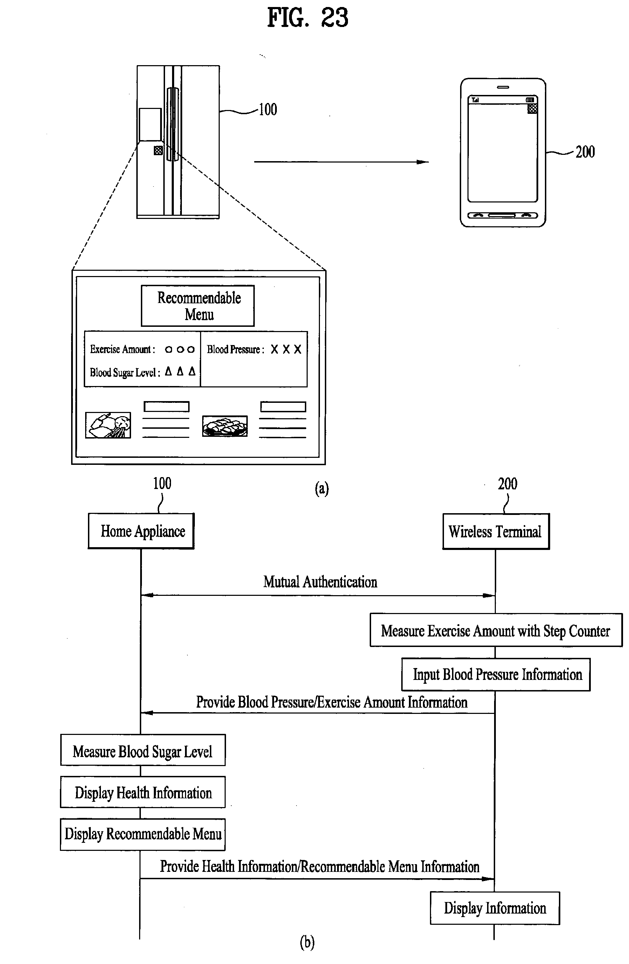

Referring to FIG. 23, in a state mutual authentication between the home appliance 100, such as a refrigerator, and the wireless terminal 200 is completed, a user exercise amount information measured by the wireless terminal 200 having a step counter mounted thereto and the blood pressure information the user inputted are transmitted to the home appliance 100.

And, blood glucose information may be obtained by measuring blood glucose with a noninvasive blood glucose measuring device provided to the home appliance 100, and by gathering a plurality of pieces of such information, overall health information on the user and a recommendable menu may be displayed on the display unit in the home appliance 100 based on the information gathered thus.

And, the health information or the recommendable menu information is transmitted in a direction of the wireless terminal 200 and displayed on the display unit in the wireless terminal 200.

In the meantime, the present invention may transmit an image file or a music file the user desires to the home appliance 100, and may make the image file or the music file to be activated at the home appliance 100.

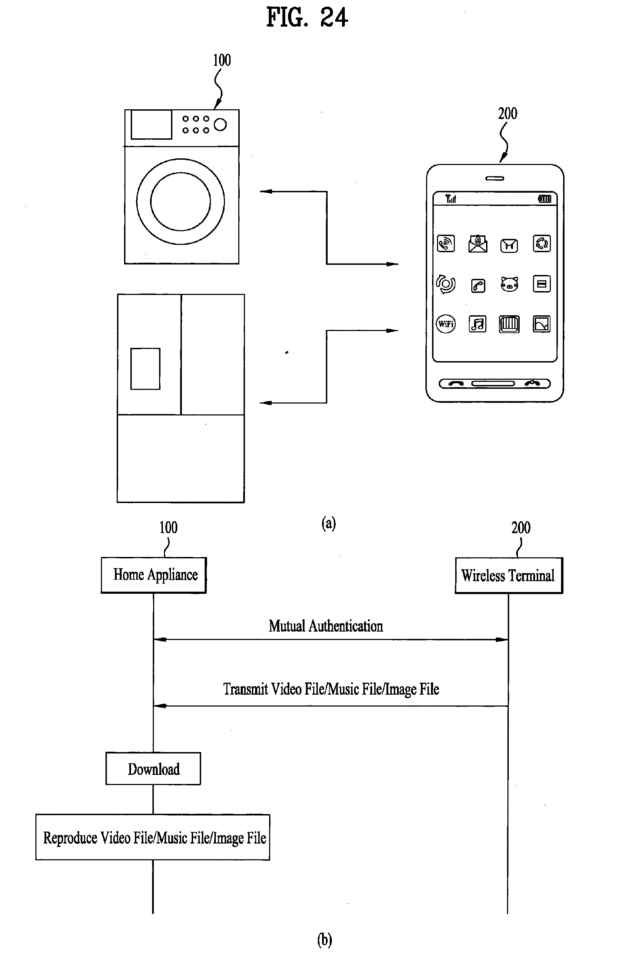

That is, referring to FIG. 24, in a state mutual authentication between the home appliance 100, such as a washing machine or a refrigerator, and the wireless terminal 200 is completed, the user may transmit the music file, a video file, or an image file stored in the wireless terminal 200 to the home appliance 100.

The home appliance 100 may download the files transmitted thus, and reproduce the files selectively, to form a visual, acoustic environment meeting a user's taste.

In the meantime, in the present invention, a networking may be performed between the home appliance 100 and the wireless terminal 200 with SNS (Social Network Service).

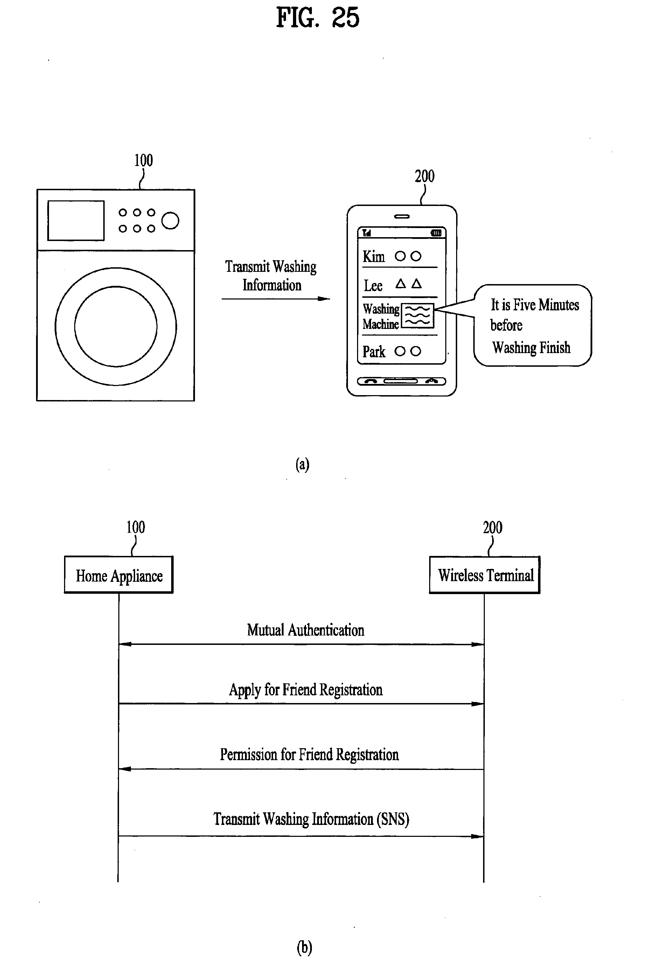

That is, referring to FIG. 25, in a state mutual authentication between the home appliance 100, such as a washing machine, and the wireless terminal 200 is completed, SNS friend registration is applied from the home appliance 100 in a direction of the wireless terminal 200.

If the user permits the friend registration of the home appliance 100 by using the wireless terminal 200, the home appliance 100 may provide information related to drive of the home appliance 100 to the wireless terminal 200, and the information may be displayed on the display unit in the wireless terminal 200 in a mode of a message.

That is, if a washing machine communicates with the wireless terminal 200, the washing machine may be registered in the SNS the wireless terminal 200 can see, and information (For an example, a washing finish indication) related to wash performance of the washing machine may be displayed on the user's wireless terminal 200.

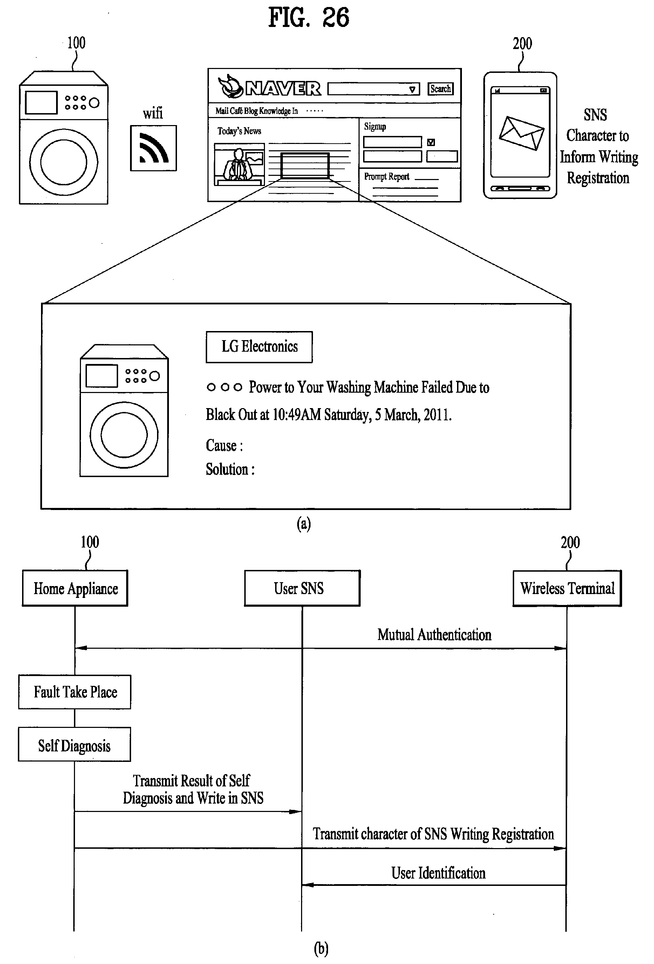

Referring to FIG. 26, in a state mutual authentication between the home appliance 100 and the wireless terminal 200 is completed, and the user and the home appliance 100 are SNS friends, if a fault takes place at the home appliance 100, a self-diagnosis is performed by a self-diagnosis program.

And, if a result of the self-diagnosis is written on a user SNS billboard on a web, a character informing that writings are registered on the user SNS billboard is displayed at the wireless terminal 200.

As the user notices the character and visits to the user SNS billboard, the message related to the fault left by the home appliance 100 may be noticed.

An information management system for a home appliance related to another embodiment of the present invention includes a home appliance having an input unit, a display unit, a communication unit, and a predetermined ID, a server system having the ID of the home appliance recorded thereon, and provided to enable to communicate with the home appliance for enabling to exchange predetermined information with the home appliance according to request from the home appliance related to the ID already recorded, and a wireless terminal provided with a communication unit provided to enable to communicate with the home appliance, an input unit and a display unit, and synchronized with the home appliance.

In this instance, the home appliance and the wireless terminal are provided to enable to communicate with a predetermined external service business operator server through the server system, and if the user requests the external service business operator server to provide information through the home appliance or the wireless terminal, after mutual authentication between the home appliance or the wireless terminal and the server system or the external service business operator server is completed, the external service business operator server transmits information requested thus to the home appliance or the wireless terminal.

In this instance, the external service business operator server includes a shopping information providing server. The shopping information providing server provides product sale information, optimal shopping movement path information, recipe information, product information required for the recipe, seasonal fruit sale information, or discount coupon information according to information providing request from the user. The information may be displayed on the display unit in the home appliance or the wireless terminal.

And, the external service business operator server includes a restaurant information providing server. The restaurant information providing server provides restaurant information, restaurant price information, and recommendable restaurant information. The information may be displayed on the display unit in the home appliance or the wireless terminal.

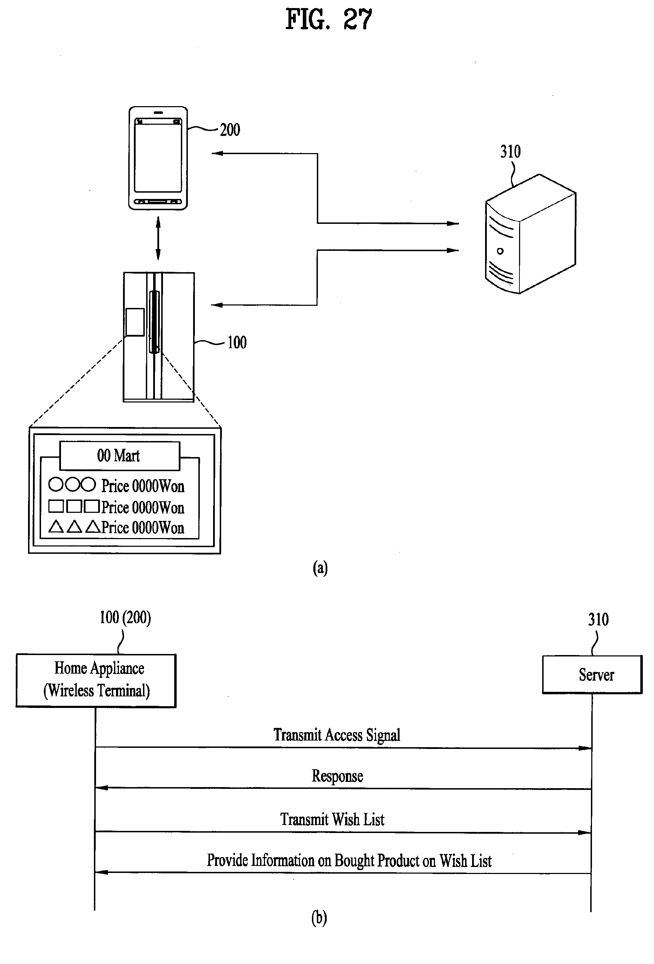

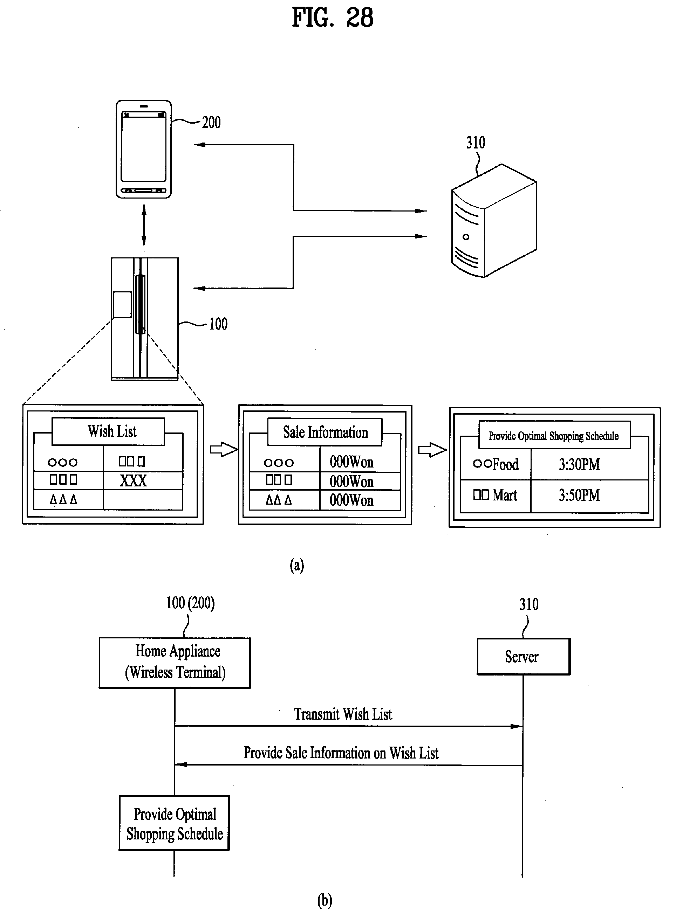

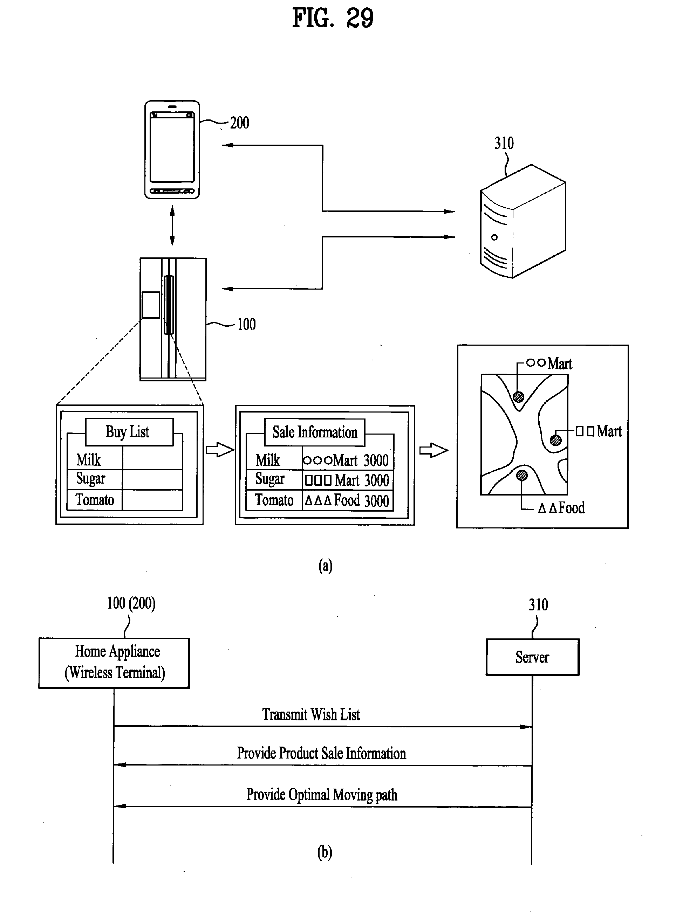

FIG. 27 illustrates a diagram showing provision of shopping information on goods on a wish list in the present invention, FIG. 28 illustrates a diagram showing provision of shopping information on goods on a wish list and an optimal shopping schedule in the present invention, and FIG. 29 illustrates a diagram showing provision of shopping information on goods on a wish list and optimal moving path information in the present invention.

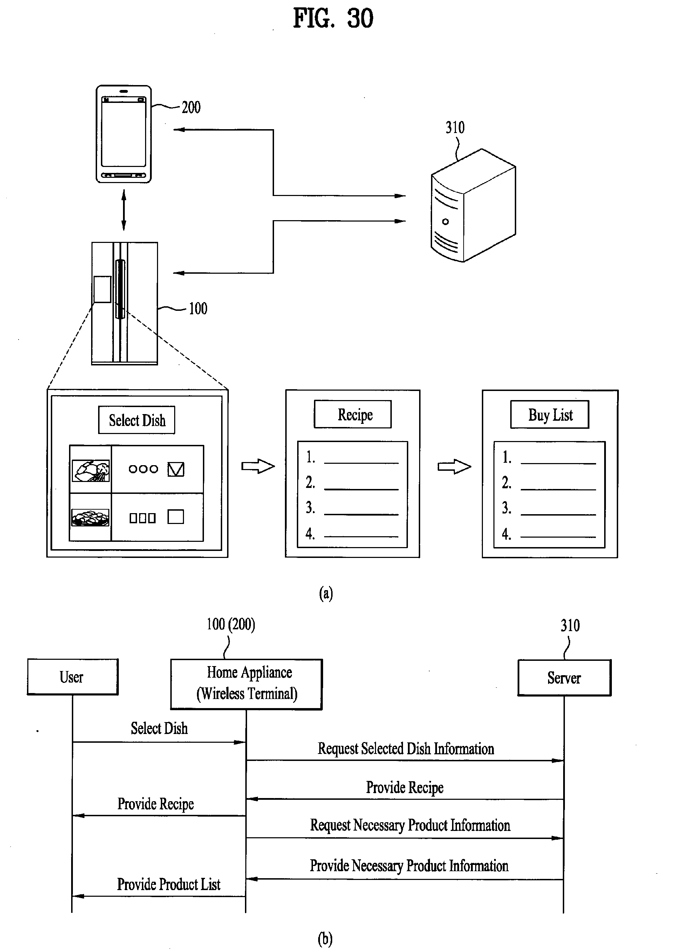

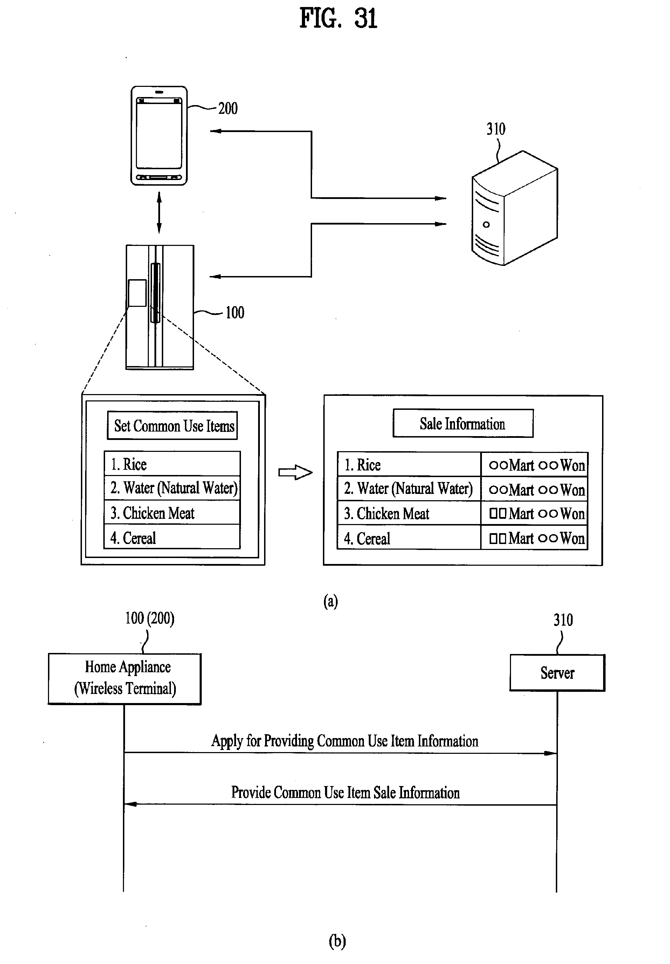

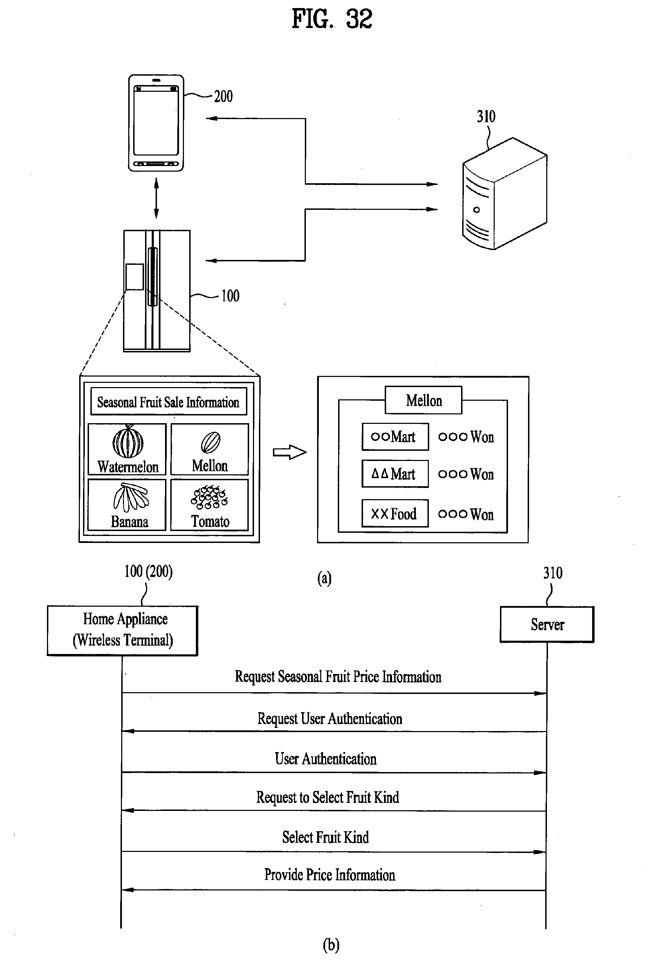

FIG. 30 illustrates a diagram showing provision of recipe information on a particular dish and necessary product information in the present invention, FIG. 31 illustrates a diagram showing provision of commercial item shopping information in the present invention, and FIG. 32 illustrates a diagram showing shopping information on seasonal fruits in the present invention.

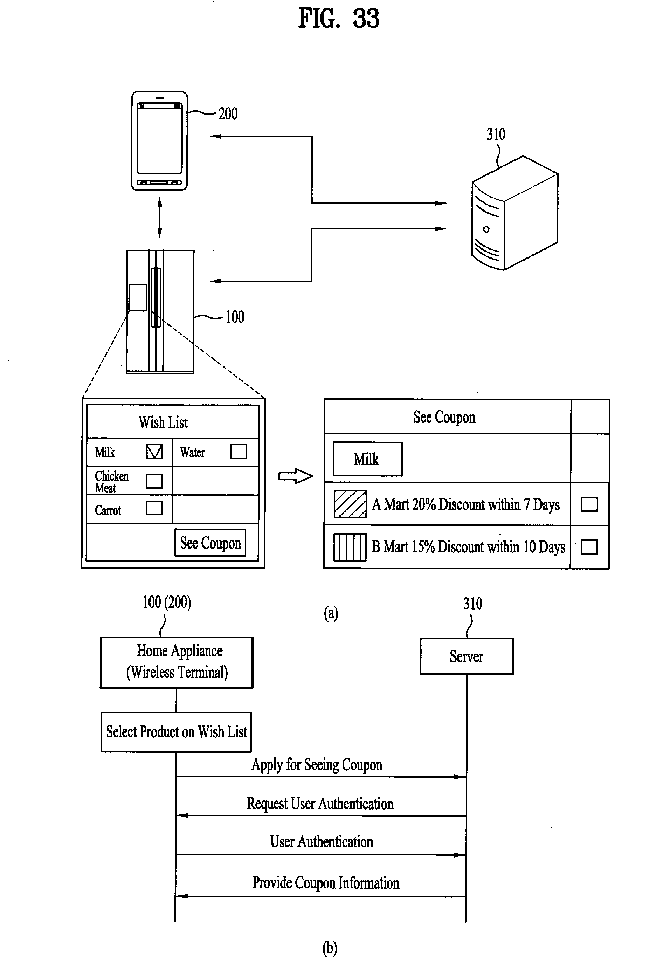

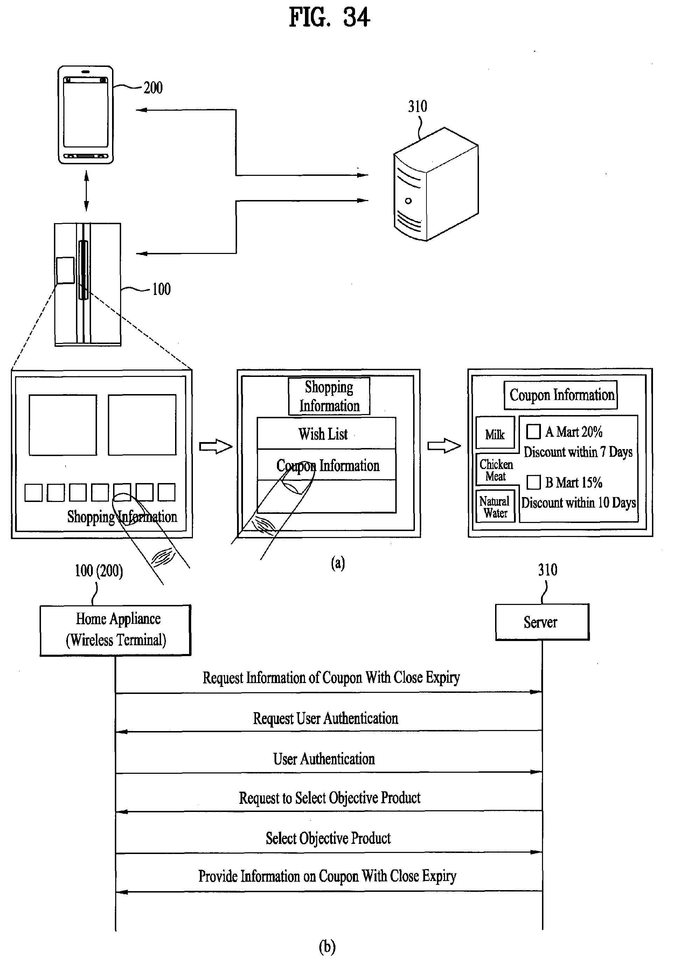

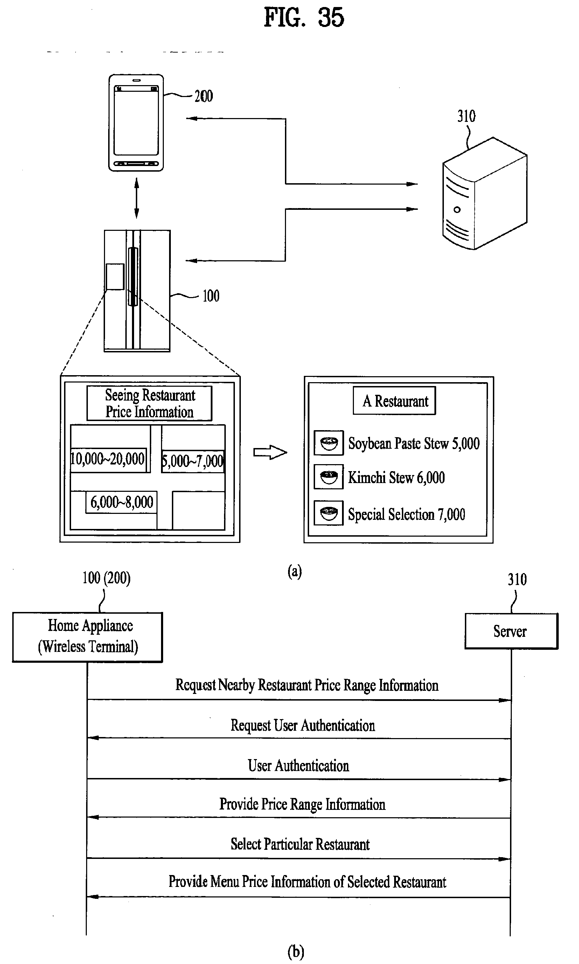

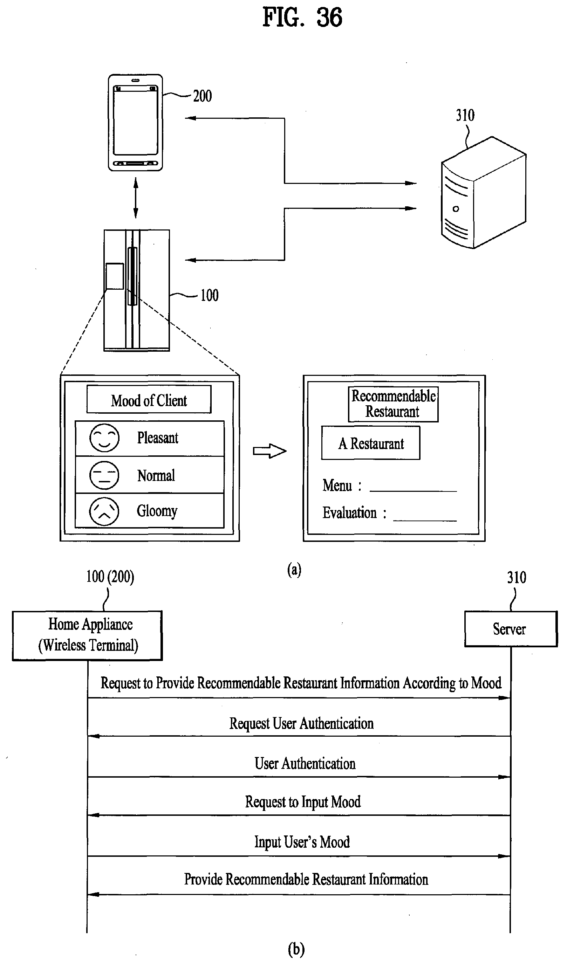

FIG. 33 illustrates a diagram showing provision of coupon information on goods on a wish list in the present invention, FIG. 34 illustrates a diagram showing provision of coupon information having a very close expiry date in the present invention, FIG. 35 illustrates a diagram showing provision of nearby restaurant information service in the present invention, and FIG. 36 illustrates a diagram showing provision of restaurant information service recommendable according to a mood in the present invention.

Respective embodiments will be described with reference to the attached drawings.

In the meantime, in the information management system illustrated in FIGS. 1 and 2, if an embodiment is discussed, in which the home appliance 100 and the external service business operator 300 exchange information or a signal through the server system 1, as a precondition of information exchange between the home appliance 100 and the server system 1, an authentication procedure is required between the server system 1 and the home appliance 100.

The authentication may be performed, if the home appliance 100 accesses to the server system 1, as the server system 1 requests the home appliance 10 to authenticate the home appliance 100, and the user manipulates the input unit in the home appliance 100 to input information (The user ID, password, and other authentication numbers) required for the authentication.

It is preferable that, in the embodiment, the external service business operator server 310 is the shopping information providing server or the restaurant information providing server.

If the user requests to provide required information through the input unit 103, mutual authentication and exchange of information between the external service business operator server 310 and the home appliance 100 are made through the server system 1.

By inputting the user's ID and password, the user authentication can be made.

Upon finishing the authentication, the external service business operator server 310 provides the shopping information or the restaurant information, and the information provided thus may be displayed on the display unit in the home appliance 100 or the display unit in the wireless terminal 200 of the user.

If the user sends the wish list stored already to the external service business operator server 310 through the input unit, the external service business operator server 310 provides shopping information on the items on the wish list, and the shopping information provided thus may be displayed on the display unit in the home appliance 100.

FIG. 27 illustrates an embodiment which enables to provide the shopping information between the home appliance 100 or the wireless terminal 200 and a shopping business operator server 310 based on the wish list of the user.

At first, if the user transmits an access signal to the server 310 by using the home appliance 100 or the wireless terminal 200, the server 310 transmits a responsive signal. In this instance, each of the access signal and the responsive signal includes a signal for the authentication between the user and the server 310.

If the server 310 transmits the responsive signal, the user transmits the goods wish list stored in the home appliance 100 or the wireless terminal 200, and, upon receiving the good wish list, the server 310 may provide price information and the like on the goods of the items on the goods wish list.

The information provided thus may be displayed on the display unit in the home appliance 100 or the display unit in the wireless terminal 200 of the user.

FIG. 28 illustrates an embodiment similar to the embodiment in FIG. 27, wherein, if the user sends the wish list through the home appliance 100 or the wireless terminal 200, the server 310 provides sale information on the wish list.

Here, the sale information includes price information of the goods on the wish list, and information on shops which are selling the goods.

In the meantime, upon reception of the sale information at the home appliance 100 or the wireless terminal 200, the control unit thereof may calculate an optimal shopping schedule taking the price information and position information on the goods into account and display the same on the display unit.

FIG. 29 illustrates an embodiment similar to the embodiment in FIG. 28, wherein, in the embodiment shown in FIG. 29, if the user transmits the wish list through the home appliance 100 or the wireless terminal 200, the server 310 provides the sale information on the wish list.

Herein, the sale information includes the price information on the goods on the wish list and the information on shops which are selling the goods.

And, besides the sale information, the server 310 provides the optimal movement path information for buying the goods too, and the information is displayed on the display unit in the home appliance 100 or the wireless terminal 200.

In the meantime, in the present invention, if the user selects a predetermined dish and transmits information on the dish to the external service business operator server 310 through the input unit, the external service business operator server 310 provides the recipe information, and information on products or food materials required for the recipe, and the information provided thus may be displayed on the display unit in the home appliance 100.

FIG. 30 illustrates an embodiment in which, if the user selects a dish the user prefers through the home appliance 100 or the wireless terminal 200, the external service business operator server 310 provides information on the recipe and the food materials of the dish.

If the user selects one of dishes displayed on the display unit in the home appliance 100 or the wireless terminal 200 and inputs the same to the display unit, the home appliance 100 or the wireless terminal 200 requests the server 310 to provide information on the dish selected thus.

The server 310 provides the recipe on the dish, and, if there is request for information on the required products (Food materials), provides information on the required products toward the home appliance 100 or the wireless terminal.

In this case, information on the recipe and information on required food materials provided thus may be displayed on the display unit in the home appliance 100 or the wireless terminal 200.

FIG. 31 illustrates an embodiment in which the server 310 provides information on essential common use items required for user's living.

That is, in a case of essential elements, such as rice and water, if the user applies to provide common item information through the home appliance 100 or the wireless terminal 200, the application is received at the shopping business operator server 310.

And, the shopping business operator server 310 may provide sale information on the common item toward the home appliance 100 or the wireless terminal 200, periodically.

FIG. 32 illustrates an embodiment which enables to provide shopping information on seasonal fruits between the server 30 and the home appliance 100 or the wireless terminal 200.

That is, the user requests the server 310 to provide seasonal fruit price information by using the home appliance 100 or the wireless terminal 200.

Then, the server 310 requests the user to authenticate the user, and the user inputs the user's ID and password, to fulfill the user authentication, accordingly.

Upon finishing the authentication, the server 310 requests the user to select a kind of fruit.

If the user inputs according to the request, the server 310 provides the information on the seasonal fruit and information on selling shops, and the information provided thus may be displayed on the display unit in the home appliance 100 or the display unit in the wireless terminal 200 of the user.

FIG. 33 illustrates an embodiment which enables to provide information on a coupon required for shopping between the home appliance 100 or the wireless terminal 200 and the server 310.

That is, the user selects a product from the wish list by using the home appliance 100 or the wireless terminal 200, and requests the server 310 to provide coupon information on the product selected thus.

Then, the server 310 requests the user to authenticate the user, and the user inputs the user's ID and password, to fulfill the user authentication, accordingly.

Upon completion of the authentication, the server 310 provides the coupon information on the goods, and the information provided thus may be displayed on the display unit in the home appliance 100 or the display unit in the wireless terminal 200 of the user.

FIG. 34 illustrates an embodiment which enables to provide information on a coupon having a close expiry date between the home appliance 100 or the wireless terminal 200 and the server 310.

That is, the user requests the server 310 to provide information on one of coupons issued to the user having a close expiry date thereto by using the home appliance 100 or the wireless terminal 200.

Then, the server 310 requests the user to authenticate the user, and the user inputs the user's ID and password, to fulfill the user authentication, accordingly.

Upon completion of the authentication, the server 310 requests the user to selects an objective product.

If the user inputs the objective product according to the request, the server 310 provides information on the coupon of the product having a close expiry date, and the information provide thus is displayed on the display unit in the home appliance 100 or the display unit in the wireless terminal 200 of the user.

FIG. 35 illustrates an embodiment which enables to provide nearby restaurant information and menu information at a region the user designates between the home appliance 100 or the wireless terminal 200 and the server 310.

That is, the user requests the server 310 to provide information on nearby restaurants, and prices of menus by using the home appliance 100 or the wireless terminal 200.

Then, the server 310 requests the user to authenticate the user, and the user inputs the user's ID and password, to fulfill the user authentication, accordingly.

Upon completion of the authentication, the server 310 indicates positions of the restaurant within a predetermined distance from the point the user designates on a map, and the map also provides price range information on the menu each of the restaurants provides.

The information provided thus may be displayed on the display unit in the home appliance 100 or the display unit in the wireless terminal 200 of the user.

Under this state, if the user designates a particular restaurant, the server 310 provides menu price information on the restaurant selected thus, in detail. The information provided thus may be displayed on the display unit in the home appliance 100 or the display unit in the wireless terminal 200 of the user.

FIG. 36 illustrates an embodiment which enables to provide recommendable restaurant information according to a mood of the user between the home appliance 100 or the wireless terminal 200 and the server 310.

That is, the user requests the server 310 to provide information on a recommendable restaurant according to a mood of the user by using the home appliance 100 or the wireless terminal 200. Then, the server 310 requests the user to authenticate the user, and the user inputs the user's ID and password, to fulfill the user authentication, accordingly.

Upon completion of the authentication, the server 310 requests to input a present mood state.

If the user inputs the user's mood according to the request, the server 310 provides information on the recommendable restaurant which is able to form an environment meeting the user's mood, and the information provided thus may be displayed on the display unit in the home appliance 100 or the display unit in the wireless terminal 200 of the user.

In the meantime, the external service business operator server includes a health care business operator server. And, the health care business operator server provides allergy causing food information related to the user, medicine intaking time information, treatment guide information according to kinds of accidents, health food information related to a particular symptom, medicine in taking instruction information related to prescription, information matched to a number of weeks of pregnancy, restaurant information related to a health menu, or recommendable food & drink and recipe information matched to the health information, and the information provided thus may be displayed on the display unit in the home appliance 100 or the wireless terminal 200.

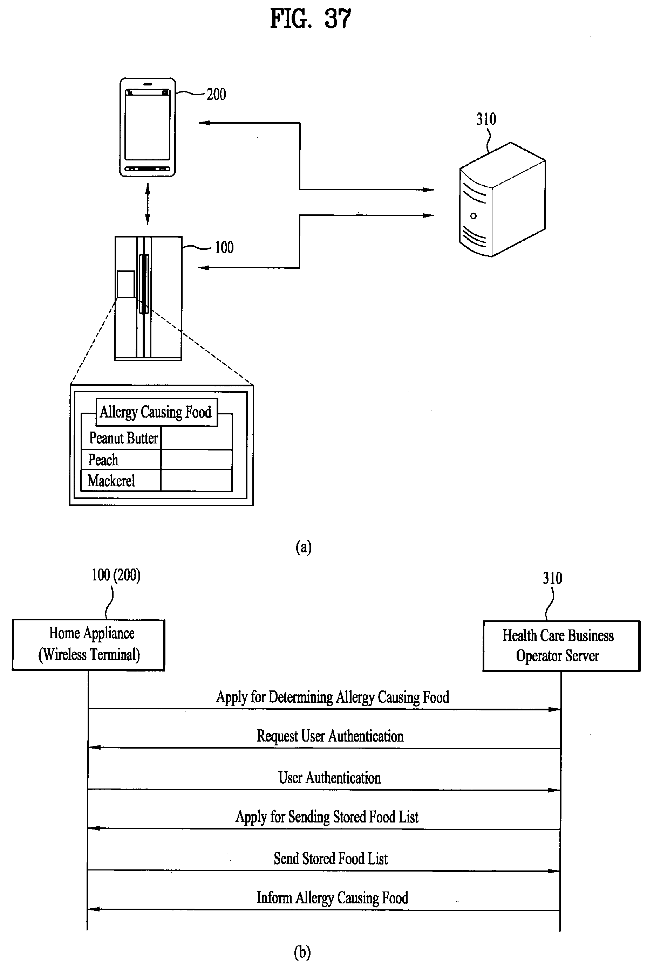

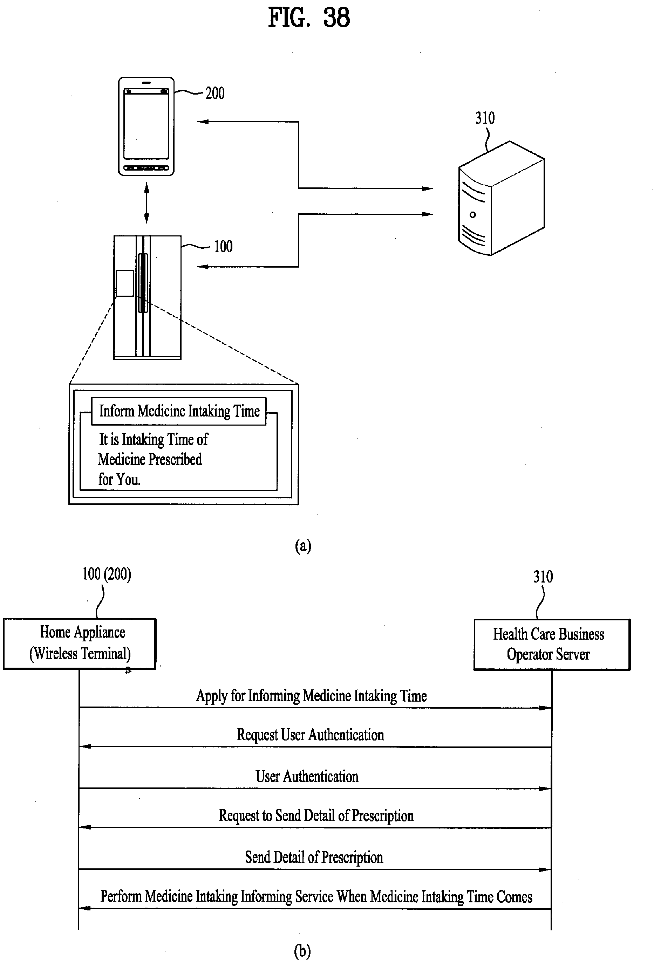

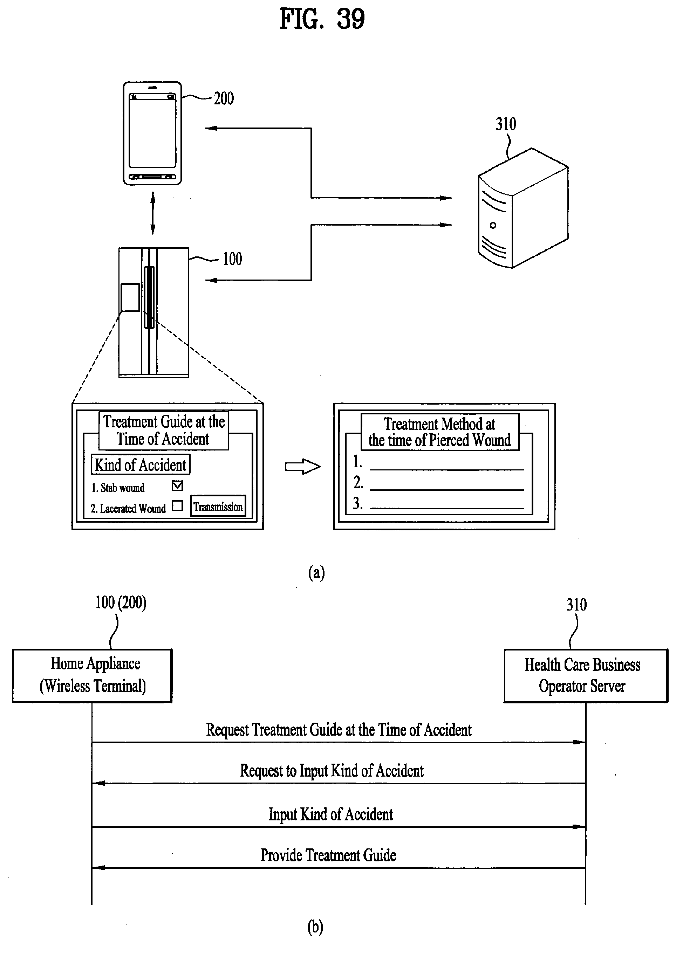

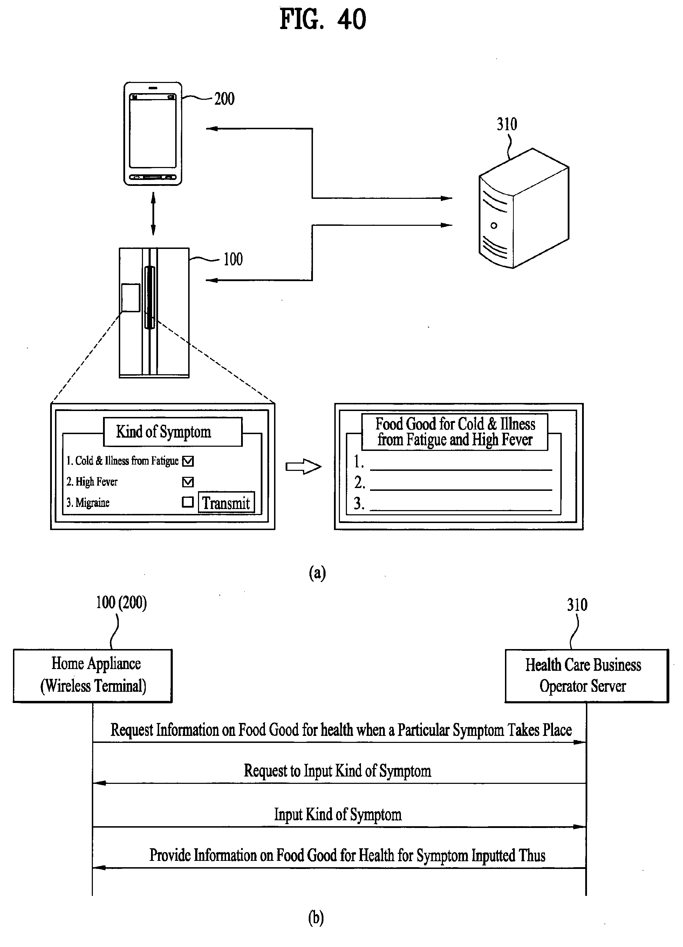

FIG. 37 illustrates a diagram showing provision of information on allergy causing food in the present invention, FIG. 38 illustrates a diagram showing provision of information on a medicine intaking time in the present invention, FIG. 39 illustrates a diagram showing provision of information on a treatment guide in a case of accident in the present invention, and FIG. 40 illustrates a diagram showing provision of information on food good for health when a particular symptom takes place in the present invention.

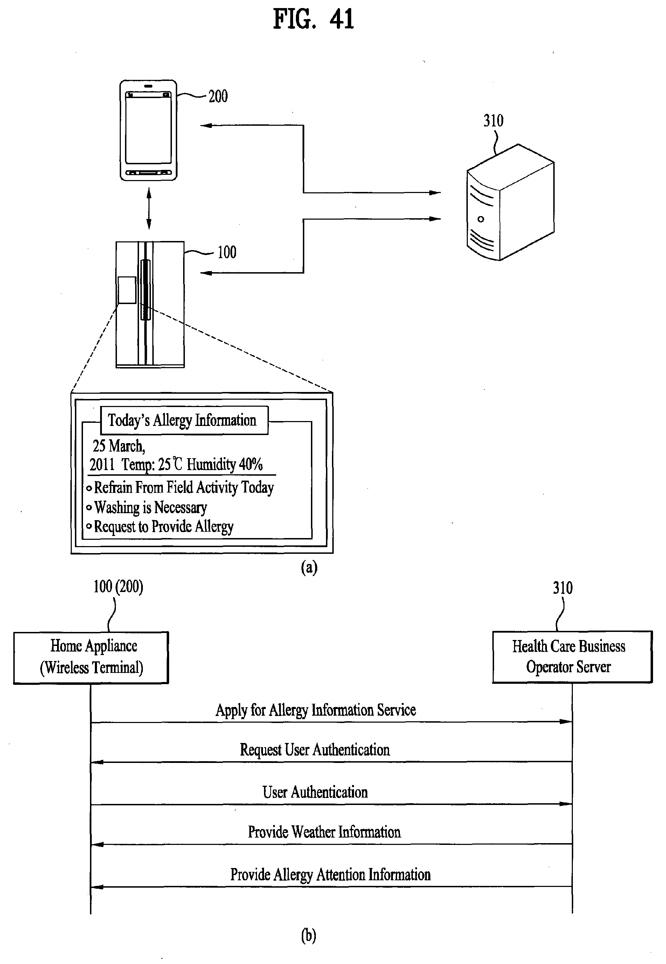

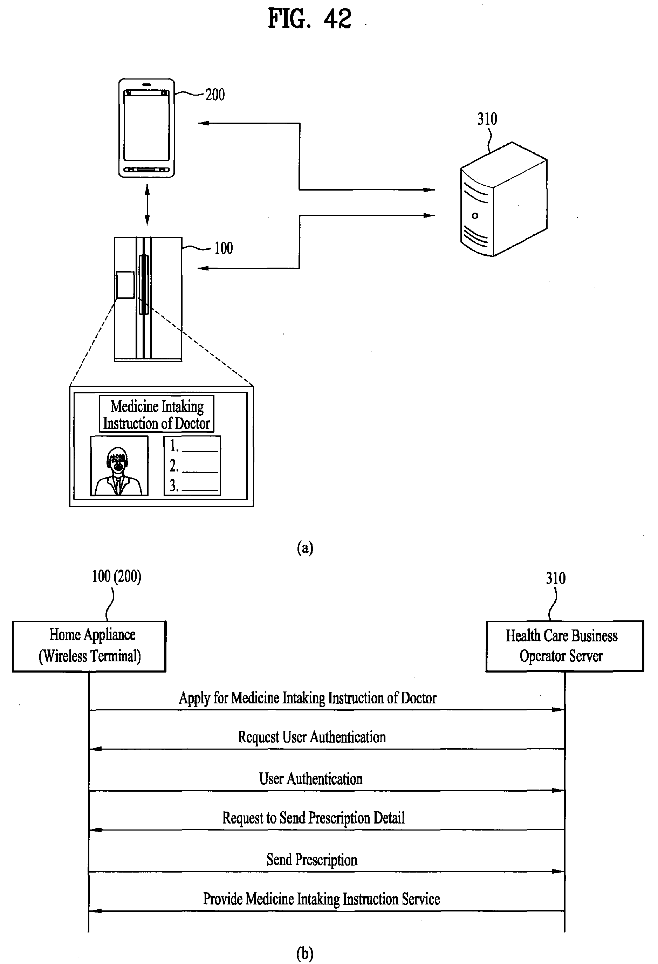

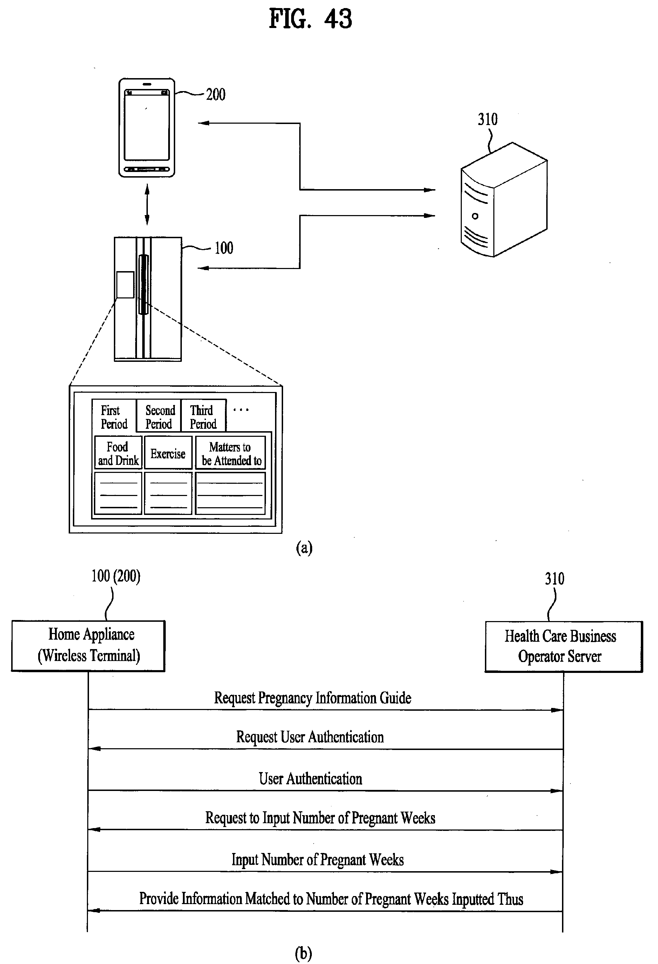

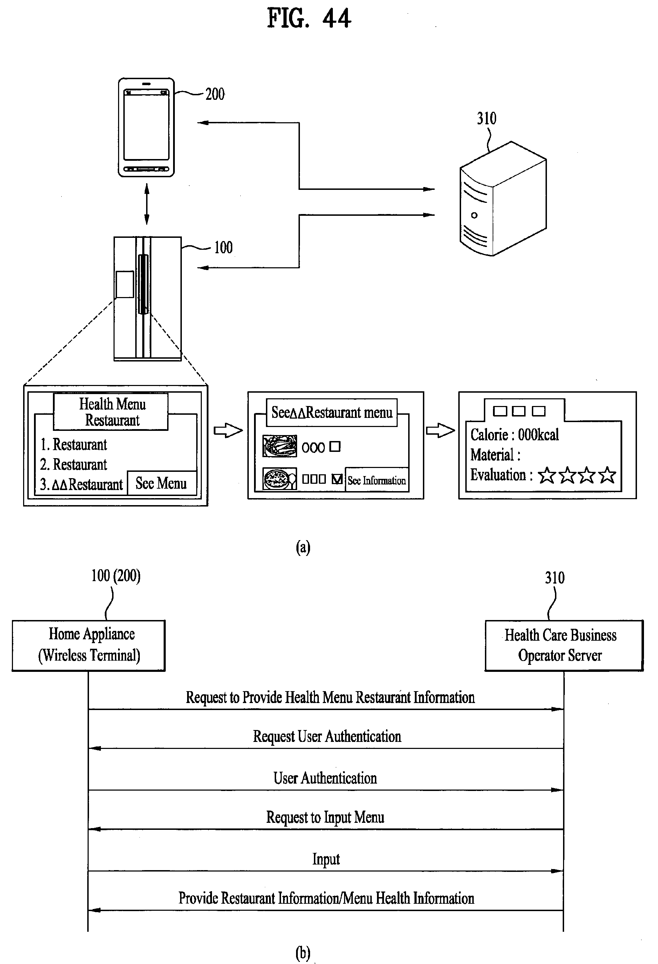

FIG. 41 illustrates a diagram showing provision of allergy information service in the present invention, FIG. 42 illustrates a diagram showing provision of information on medicine intaking instruction service of a doctor in the present invention, FIG. 43 illustrates a diagram showing provision of information on pregnancy information guide in the present invention, and FIG. 44 illustrates a diagram showing provision of information on restaurants and menu information related to health menus in the present invention.

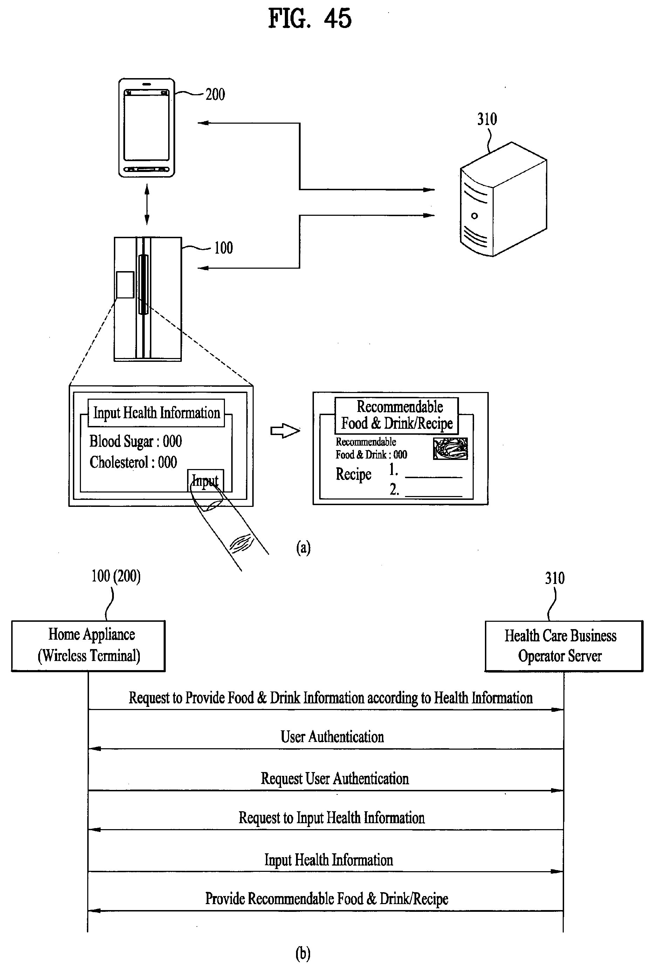

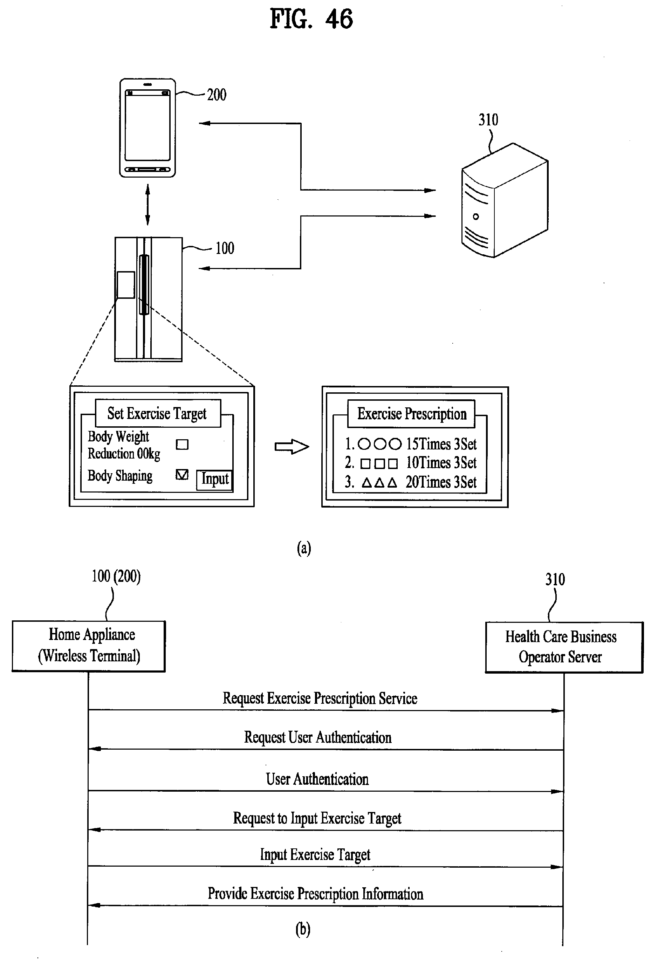

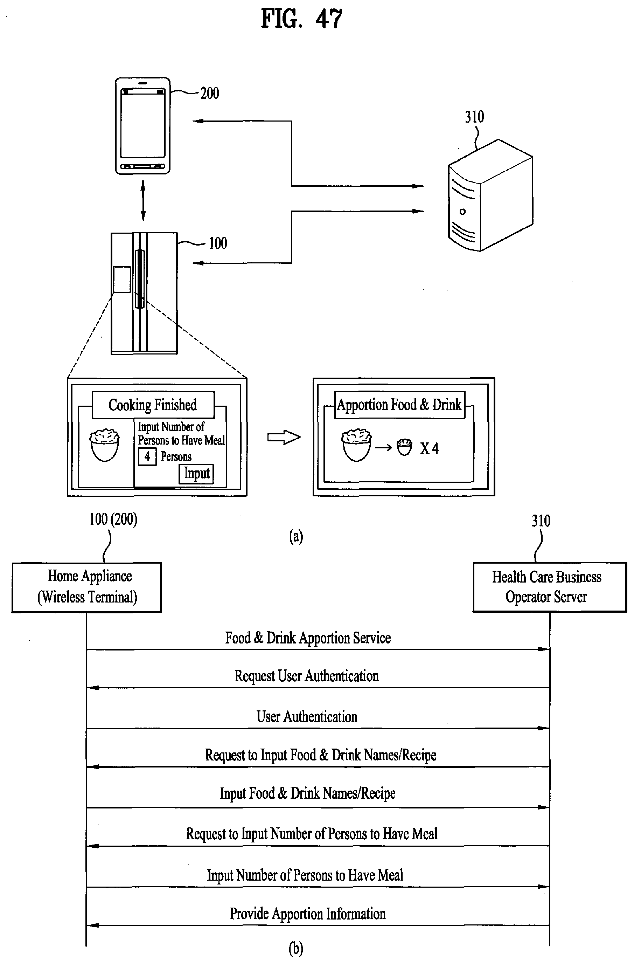

And, FIG. 45 illustrates a diagram showing provision of food & drink information with reference to health information in the present invention, FIG. 46 illustrates a diagram showing provision of exercise prescription information in the present invention, and FIG. 47 illustrates a diagram showing provision of information on apportion of food & drink in the present invention.

Respective embodiments will be described with reference to the attached drawing, in detail.

As described before, in the embodiment, the external service business operator server is a health care information providing server. And, if the user requests to provide necessary information through the input unit, after mutual authentication between the external service business operator server and the home appliance 100 is completed, predetermined health care information from the external service business operator server may be displayed on the display unit of the home appliance 100.

The health care information may include medical information, exercise prescription information, or medicine intaking information.

That is, referring to FIG. 37, in order to check whether there is allergy causing food in the food stored in a refrigerator the user owns or not, application for determining allergy causing food may be made by using the input unit in a refrigerator or the wireless terminal 200 connected to the refrigerator.

Then, the health care business operator server 310 requests the user to authenticate the user, and the user inputs the user's ID and password to fulfill the user authentication, accordingly.

Upon completion of the authentication, the health care business operator server 310 applies the user to send a food list the user owns, and, if the user sends the food list the user owns accordingly, may examine the food list and inform the allergy causing food.

FIG. 38 illustrates an embodiment which enables to make medicine intaking instruction between the home appliance 100 or the wireless terminal 200 and the health care business operator server 310.

That is, the user applies to the health care business operator server 310 to inform a medicine intaking time by using the home appliance 100 or the wireless terminal 200.

Then, the health care business operator server 310 requests the user to authenticate the user, and the user inputs the user's ID and password to fulfill the user authentication, accordingly.

Upon completion of the authentication, the health care business operator server 310 requests the user to send prescription details. If the user sends the prescription details according to the request, the health care business operator server 310 may carry out the medicine intaking time informing service when the medicine intaking time comes according to the prescription details.

FIG. 39 illustrates an embodiment which enables to make treatment guide when a negligent accident takes place in a home.

That is, if the user requests treatment guide by using the home appliance 100 or the wireless terminal 200, the health care business operator server 310 requests to input a kind of the accident.

An accident kind list is displayed on the display unit in the home appliance 100 or the display unit of the wireless terminal 200, and the user selects an item of the accidents the user suffers from the list and sends the item of the accident toward the health care business operator server 310.

Upon receiving the item of the accident, the health care business operator server 310 provides treatment guide to the user based on details of the accident, and the treatment guide may be displayed on the display unit in the home appliance 100 or the display unit in the wireless terminal 200 of the user.

FIG. 40 illustrates an embodiment which enables to provide information on food good for treatment or a body when a particular symptom takes place.

That is, the user requests the health care business operator server 310 to provide information on food good for treatment or a body when a particular symptom takes place by using the home appliance 100 or the wireless terminal 200.

The health care business operator server 310 requests the user to input a kind of the symptom, and, in this case, kinds of symptoms are displayed on the display unit in the home appliance 100 or the display unit in the wireless terminal 200 of the user, and the user selects an item from the kinds of symptoms and inputs the symptom selected thus.

Upon reception of symptom information from the user, the health care business operator server 310 provides the user with food information good for a body when the symptom inputted thus takes place based on the information, and the information received thus is displayed on the display unit in the home appliance 100 or the display unit in the wireless terminal 200 of the user.

FIG. 41 illustrates an embodiment which enables to provide an allergy information service.

The user applies to the health care business operator server 310 to provide an allergy information service by using the home appliance 100 or the wireless terminal 200. In this instance, the allergy information service is a service for checking possibility of allergy symptom taking place taking weather into account, and giving guide to the user, accordingly.

Upon reception of the allergy information service application, the health care business operator server 310 requests the user to authenticate the user, and the user inputs the user's ID and password, to fulfill the user authentication, accordingly.

Upon completion of the authentication, the health care business operator server 310 provides the weather information and the allergy information, and the information provided thus is displayed on the display unit in the home appliance 100 or the display unit in the wireless terminal 200 of the user.

FIG. 42 illustrates an embodiment which enables to make medicine intaking instruction of a doctor between the home appliance 100 or the wireless terminal 200 and the health care business operator server 310.

The user applies to the health care business operator server 310 to provide medicine intaking instruction of a doctor by using the home appliance 100 or the wireless terminal 200.

Then, the health care business operator server 310 requests the user to authenticate the user, and the user may input the user's ID and password, to fulfill the user authentication, accordingly.

Upon completion of the authentication, the health care business operator server 310 requests the user to send details of the prescription. If the user sends the details of the prescription according to the request, the health care business operator server 310 may provide service of the medicine intaking instruction of a doctor according to the details of the prescription.

In this case, the service of the medicine intaking instruction of a doctor may include a service for providing explanation of the doctor in charge in video displayed on the display unit in the home appliance 100 or the display unit in the wireless terminal 200 and providing the explanation of the doctor in a text.

FIG. 43 illustrates an embodiment which enables to provide pregnancy guide information between the home appliance 100 or the wireless terminal 200 and the health care business operator server 310.

The user applies to the health care business operator server 310 to provide the pregnancy guide information by using the home appliance 100 or the wireless terminal 200.

Then, the health care business operator server 310 requests the user to authenticate the user, and the user may input the user's ID and password, to fulfill the user authentication, accordingly.

Upon completion of the authentication, the health care business operator server 310 requests the user to input a number of pregnant weeks. If the user inputs the number of pregnant weeks according to the request, the health care business operator server 310 may provide information matched to the number of pregnant weeks, and the information provided thus may be displayed on the display unit in the home appliance 100 or the display unit in the wireless terminal 200.

In this instance, the information provided thus includes food & drink information, exercise information, and other matters to be attended to.

FIG. 44 illustrates an embodiment which enables to provide a health menu between the home appliance 100 or the wireless terminal 200 and the health care business operator server 310.

The user requests the health care business operator server 310 to provide information on restaurants which provide health menus by using the home appliance 100 or the wireless terminal 200.

Then, the health care business operator server 310 requests the user to authenticate the user, and the user may input the user's ID and password, to fulfill the user authentication, accordingly.

Upon completion of the authentication, the health care business operator server 310 requests the user to input menus the user requires. If the user inputs the menus the user requires according to the request, the health care business operator server 310 may provide information on the restaurants which provide the menus, and the information provided thus may be displayed on the display unit in the home appliance 100 or the display unit in the wireless terminal 200.

In this instance, once a restaurant is fixed, the user can see information on the menu the restaurant provides, and the information on the menu may include valuation by other persons, and information on calorie.

FIG. 45 illustrates an embodiment which enables to provide food and drink information in compliance with the health information between the home appliance 100 or the wireless terminal 200 and the health care business operator server 310.

That is, the user requests the health care business operator server 310 to provide the food & drink information in compliance with the health information by using the home appliance 100 or the wireless terminal 200.

Then, the health care business operator server 310 requests the user to authenticate the user, and the user may input the user's ID and password, to fulfill the user authentication, accordingly.

Upon completion of the authentication, the health care business operator server 310 requests the user to input the health information on the user.

If the user inputs the user's health information (For an example, cholesterol and blood sugar) according to the request, the health care business operator server 310 may provide information on recommendable food and drink or a recipe related to the user's health information, and the information provided thus may be displayed on the display unit in the home appliance 100 or the display unit in the wireless terminal 200.

FIG. 46 illustrates an embodiment which enables to provide an exercise prescription service between the home appliance 100 or the wireless terminal 200 and the health care business operator server 310. That is, the user requests the health care business operator server 310 to provide the exercise prescription service by using the home appliance 100 or the wireless terminal 200.

Then, the health care business operator server 310 requests the user to authenticate the user, and the user may input the user's ID and password, to fulfill the user authentication, accordingly. Upon completion of the authentication, the health care business operator server 310 requests the user to input a user's exercise target.

If the user inputs the user's exercise target according to the request, the health care business operator server 310 may provide information on exercise prescription information which enables to achieve the user's exercise target, and the information provided thus may be displayed on the display unit in the home appliance 100 or the display unit in the wireless terminal 200.

FIG. 47 illustrates an embodiment which enables to provide food and drink apportion information service between the home appliance 100 or the wireless terminal 200 and the health care business operator server 310.

That is, the user requests the health care business operator server 310 to provide the food and drink apportion information service by using the home appliance 100 or the wireless terminal 200. Then, the health care business operator server 310 requests the user to authenticate the user, and the user may input the user's ID and password, to fulfill the user authentication, accordingly.

Upon completion of the authentication, the health care business operator server 310 requests the user to input food and drink names or a recipe. If the user inputs the food and drink names or the recipe according to the request, the health care business operator server 310 requests the user to input a number of persons who will have the food and drink. If the user inputs the number of persons, the health care business operator server 310 may provide food and drink apportion information according to the number of persons, and the information provided thus may be displayed on the display unit in the home appliance 100 or the display unit in the wireless terminal 200.

In the meantime, the home appliance may include a washing machine, and the external service business operator server may include a weather information providing server.

The weather information providing server may provide optimal washing time point information related to weather, recommendable spinning RPM information, and drying information, and the information may be displayed on the display unit of the washing machine or the wireless terminal. The washing machine may be controlled according to the information provided thus, automatically.

Different from this, the home appliance may include an air cleaner, and the external service business operator server may include the weather information providing server. The weather information providing server may provide yellow sand information, the information may be displayed on the display unit in the air cleaner or the wireless terminal, and the air cleaner may be operated during a yellow sand warning period according to the information provided thus, automatically.

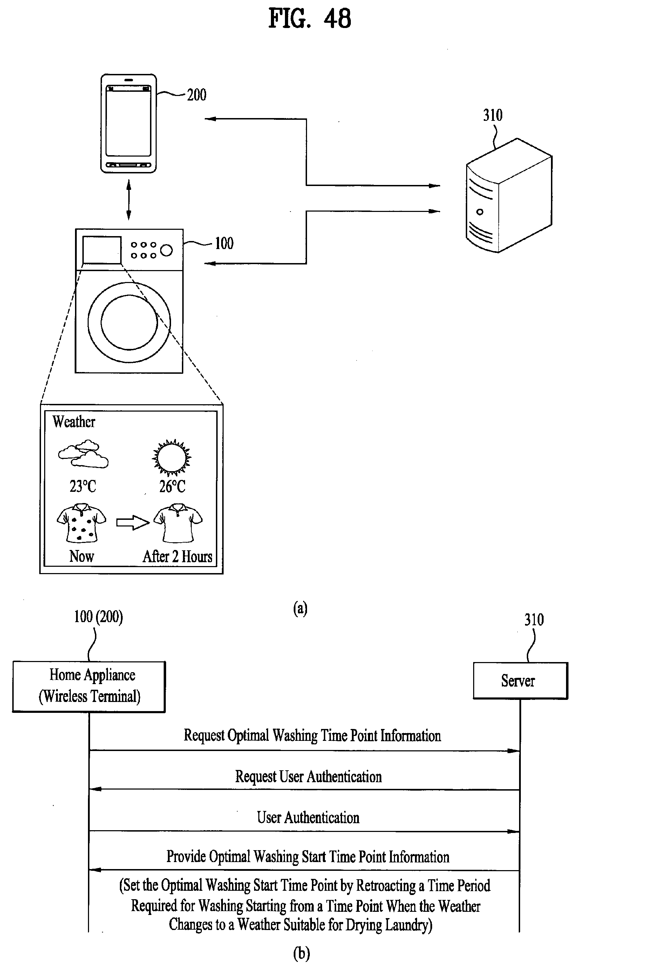

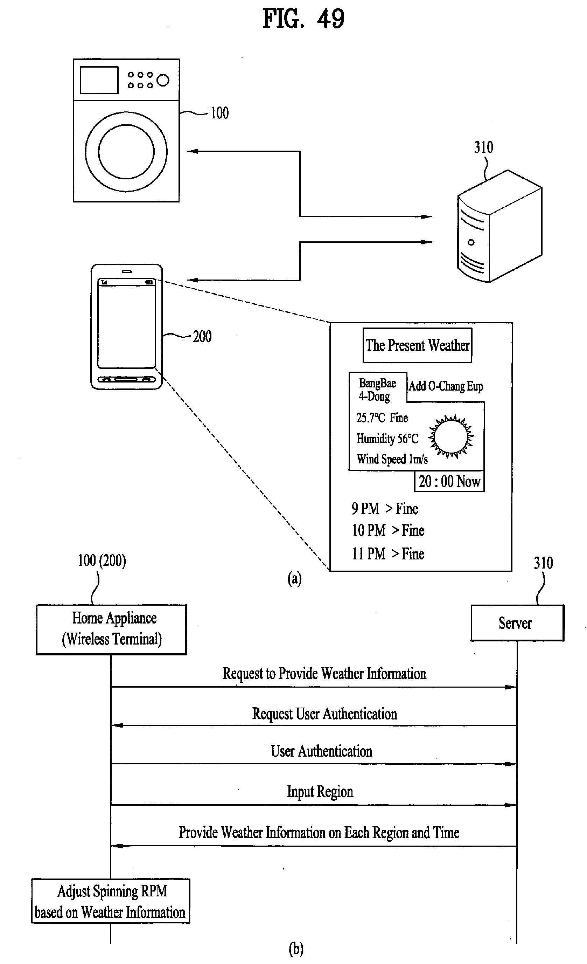

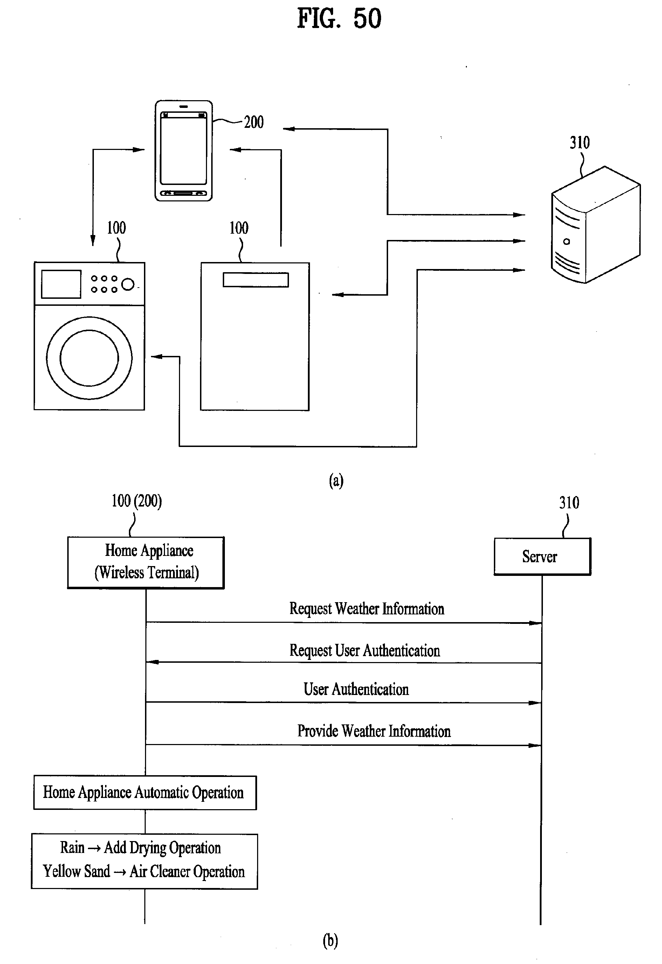

FIG. 48 illustrates a diagram showing provision of information on an optimal washing time point in the present invention, FIG. 49 illustrates a diagram showing adjustment of a spinning RPM of a washing machine with reference to weather information in the present invention, and FIG. 50 illustrates a diagram showing putting a particular home appliance into operation with reference to weather information in the present invention.

Respective embodiments will be described with reference to the attached drawings, in detail.

In the embodiment, it is preferable that the external service business operator server 310 is the weather information providing server.

If the user requests to provide necessary information through the input unit 103, mutual authentication and information exchange between the external service business operator server 310 and the home appliance is made through the server system 1.

The user may input the user's ID and password to fulfill user authentication.

Upon completion of the authentication, the external service business operator server 310 provides weather related information, and the information provided thus is displayed on the display unit in the home appliance 100 or the display unit in the wireless terminal 200 or is used as a reference of operation of the home appliance 100.

The following description will be made on an assumption that the external service business operator server 310 is the weather information providing server.

FIG. 48 illustrates an embodiment which enables to provide an optimal washing time point according to weather information between the home appliance 100 or the wireless terminal 200 and the external service business operator server 310.

That is, the user requests the external service business operator server 310 to provide the service by using the home appliance 100 or the wireless terminal 200. Then, the server 310 requests the user to authenticate the user, and the user may input the user's ID and password, to fulfill the user authentication, accordingly.

Upon completion of the authentication, the server 310 may provide optimal washing time point information according to a weather change, and the information provided thus may be displayed on the display unit in the home appliance 100 or the display unit in the wireless terminal 200 of the user.

That is, if there is a weather forecast that, though the present weather is rainy or cloudy, the weather will change to a forecast weather after a few hours adequate to dry spun laundry, the server 310 informs the user of the optimal washing time point taking a weather change time point and a time period required for washing into account.

That is, if there is the weather forecast that the weather will be fine after 3 hours and 30 minutes with a temperature higher than a reference temperature even though the weather is cloudy presently, and a time period required from washing to spinning is around one and half hours, the server 310 informs the user that the optimal washing time point is after 2 hours from now.

FIG. 49 illustrates an embodiment which enables to provide optimal spinning information according to weather information between the home appliance 100 or the wireless terminal 200 and the external service business operator server 310.

That is, the user requests the external service business operator server 310 to provide weather information on each region by using the home appliance 100 or the wireless terminal 200.

Then, the server 310 requests the user to authenticate the user, and the user may input the user's ID and password, to fulfill the user authentication, accordingly.

Upon completion of the authentication, if the user inputs information on a region the user is positioned presently, the server 310 provides weather information on the region.

The information provided thus may be displayed on the display unit in the home appliance 100 or the display unit in the wireless terminal 200 of the user. In the meantime, if the home appliance 100 is a washing machine, the washing machine may adjust a spinning RPM in spinning after washing based on the weather information provided thus.

That is, if the weather is fine, the spinning RPM may be adjusted to be a low RPM, and if the weather is comparatively cloudy or rainy, the spinning RPM may be adjusted to be a high RPM.

FIG. 50 illustrates an embodiment in which weather information is provided between the home appliance 100 or the wireless terminal 200 and the external service business operator server 310, and the home appliance 100 is operated based on the information, automatically.

That is, the user requests the external service business operator server 310 to provide weather information by using the home appliance 100 or the wireless terminal 200. Then, the server 310 requests the user to authenticate the user, and the user may input the user's ID and password, to fulfill the user authentication, accordingly.

Upon completion of the authentication, the server 310 provides the weather information, and the information provided thus may be displayed on the display unit in the home appliance 100 or the display unit in the wireless terminal 200 of the user.

And, the home appliance 100 may operate proper to the weather information based on the weather information, automatically.

For an example, if the weather is rainy or has a temperature that drops down below a predetermined temperature, a washing machine having a drying function may make automatic drying operation additionally, and, if a yellow sand warning is issued due to intensive yellow sand, an air cleaner in a home may operate during a yellow sand warning effective period, automatically.

In the meantime, the external service business operator server includes a school information providing server. The school information providing server may provide grade information, school meal menu information, or school bus arrival time notifying service, and the information provided thus may be displayed on the display unit in the home appliance 100 or the wireless terminal 200.

Different from this, the external service business operator server 310 includes a living information providing server. The living information providing server provides online cooking lecture information, stock information, electric power information, traffic information, or fashion information, and the information provided thus may be displayed on the display unit in the home appliance 100 or the wireless terminal 200.

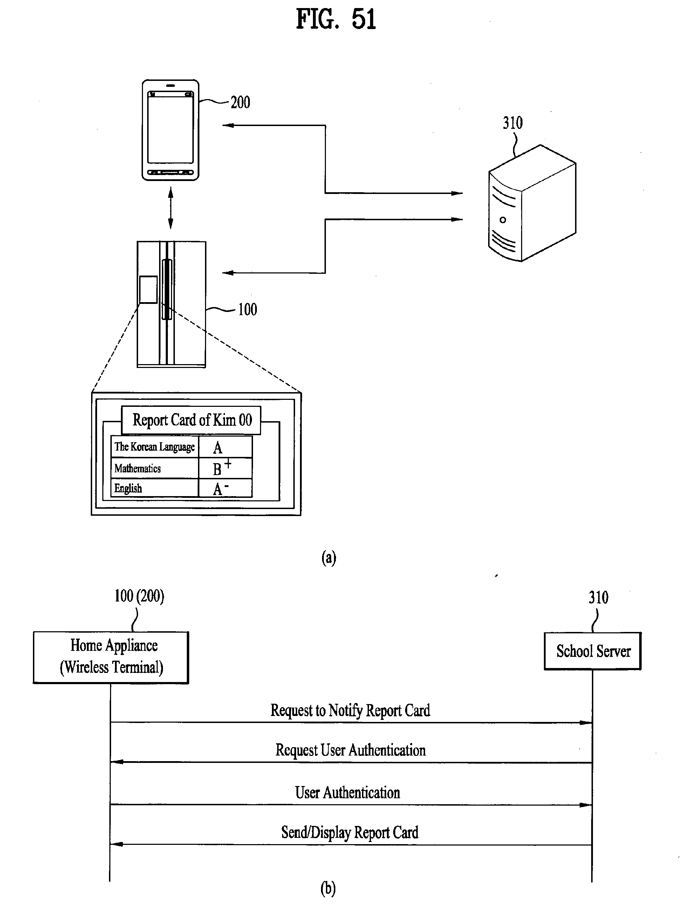

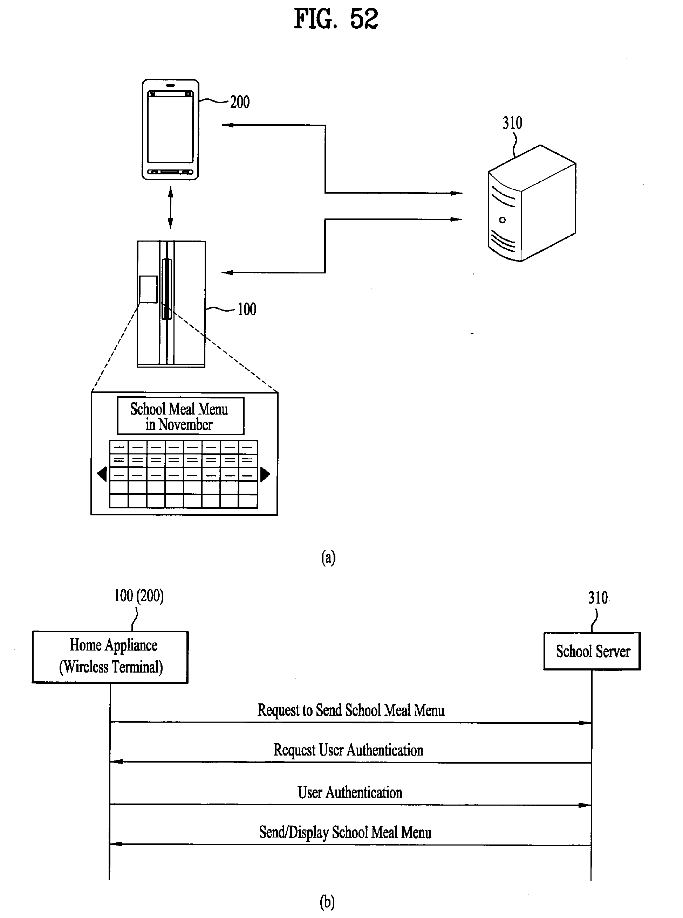

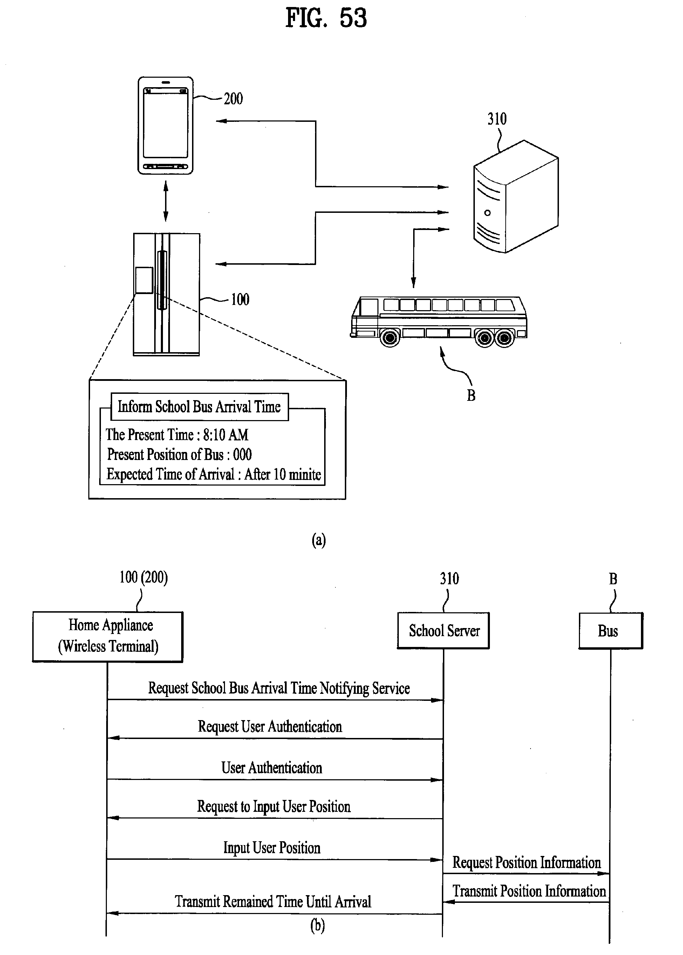

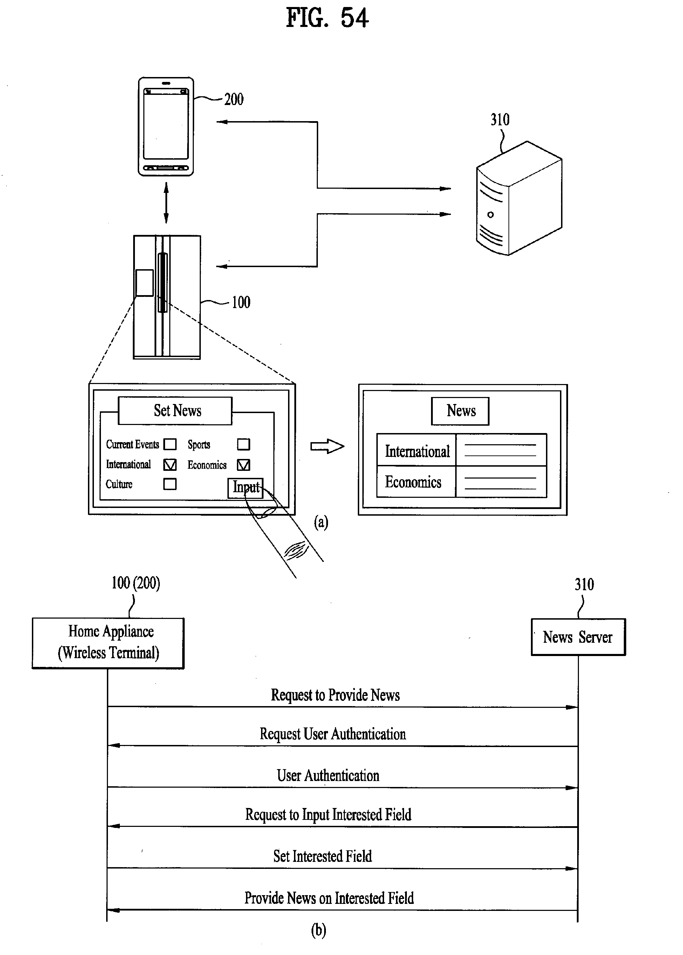

FIG. 51 illustrates a diagram showing provision of report card information on a child in the present invention, FIG. 52 illustrates a diagram showing provision of school meal menu information on a child in the present invention, FIG. 53 illustrates a diagram showing provision of school bus arrival time notifying service in the present invention, and FIG. 54 illustrates a diagram showing provision of news information in the present invention.

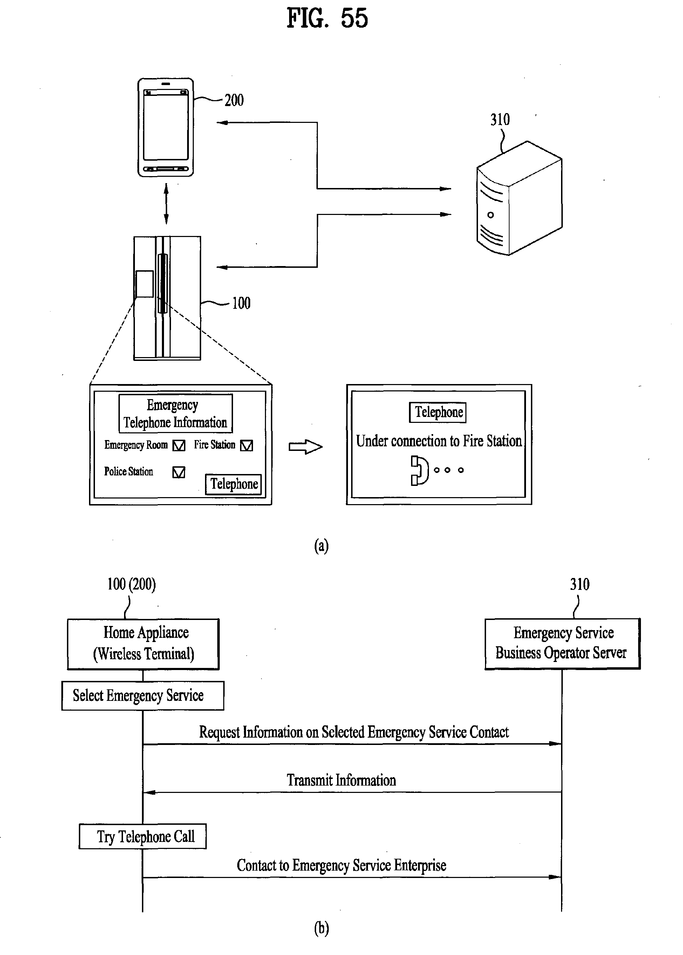

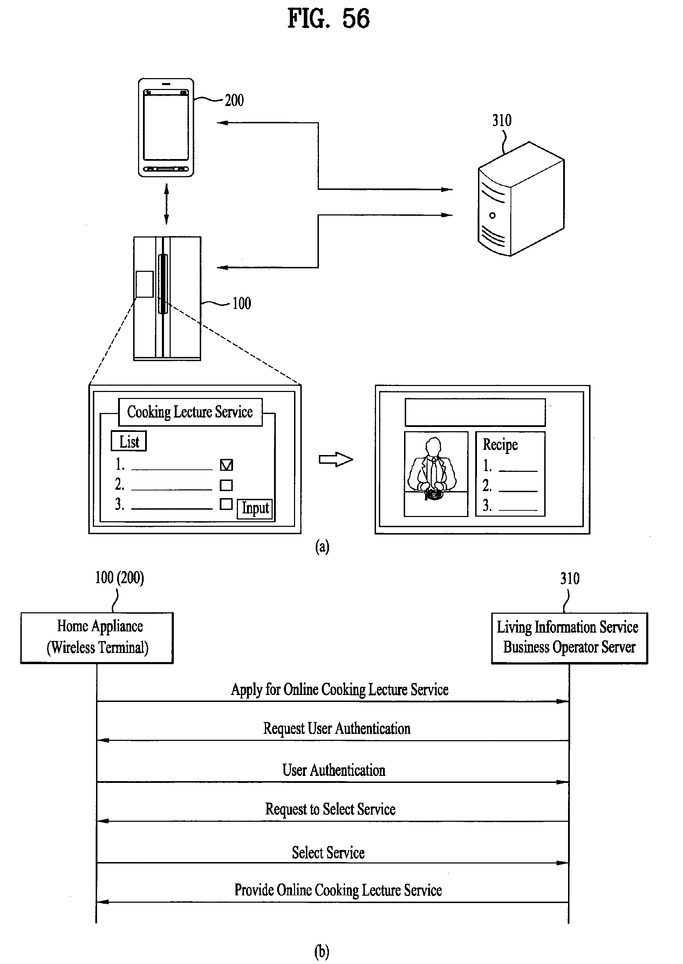

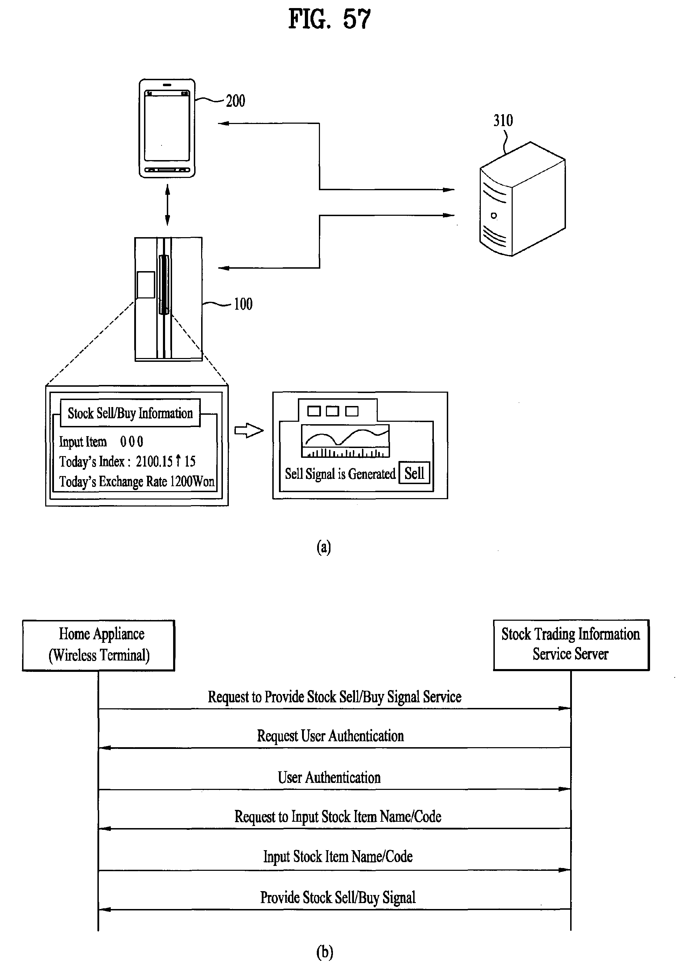

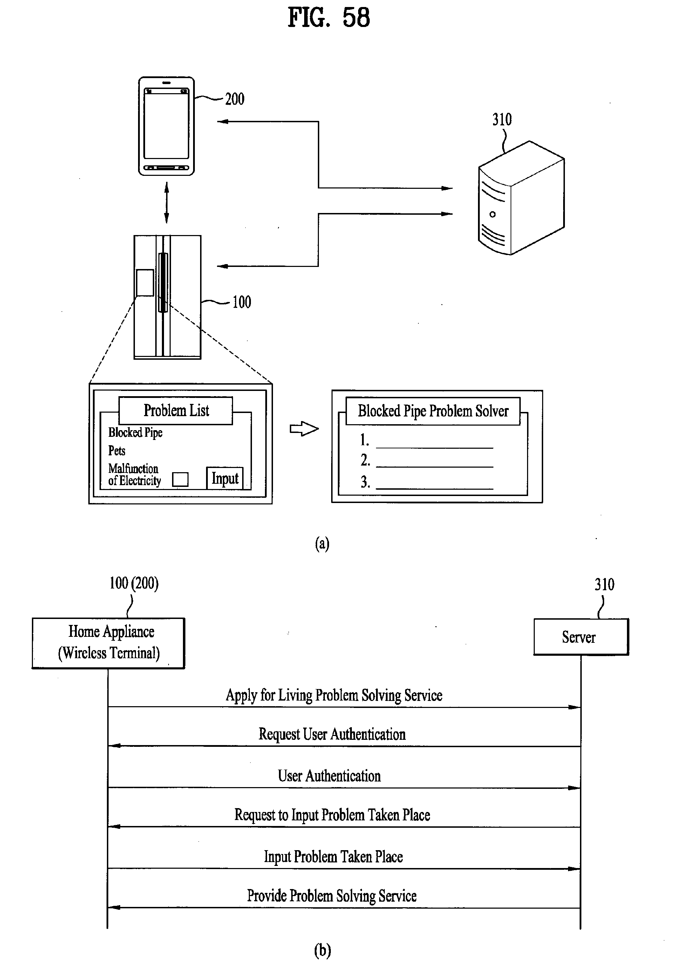

And, FIG. 55 illustrates a diagram showing provision of emergency service information in the present invention, FIG. 56 illustrates a diagram showing provision of online cooking lecture information in the present invention, FIG. 57 illustrates a diagram showing provision of stock trading information in the present invention, and FIG. 58 illustrates a diagram showing provision of information on living problem solution in the present invention.

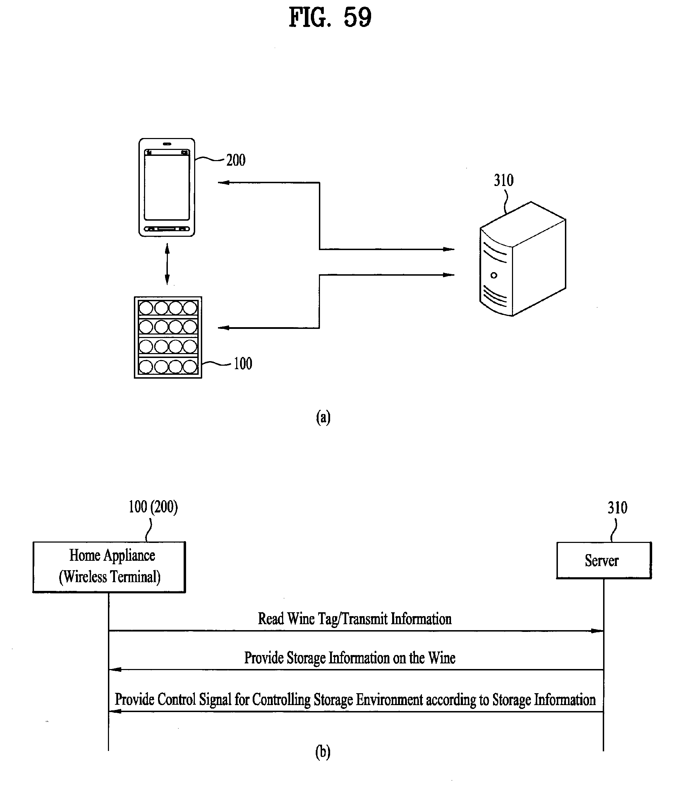

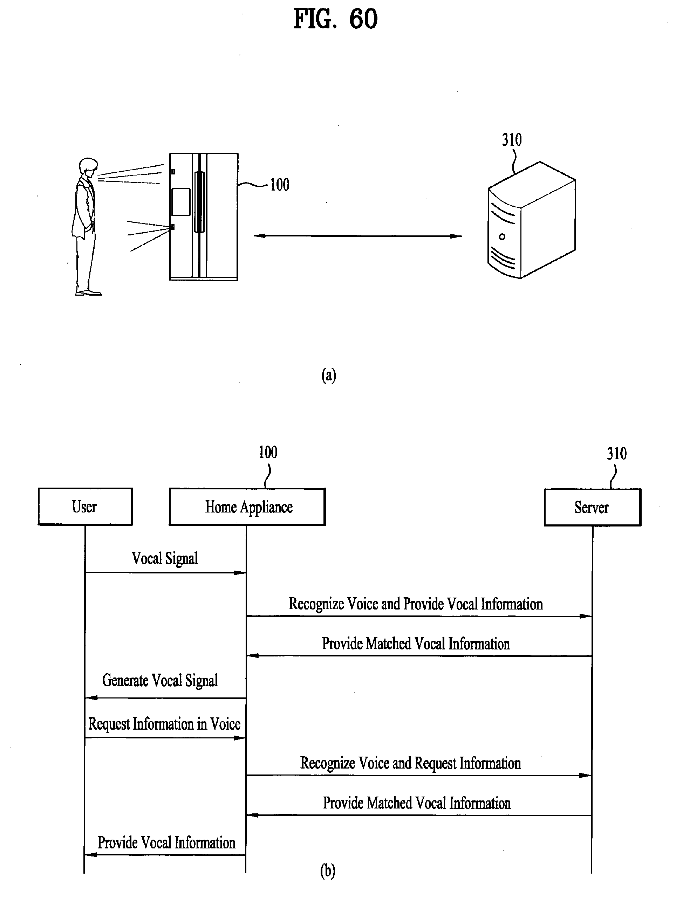

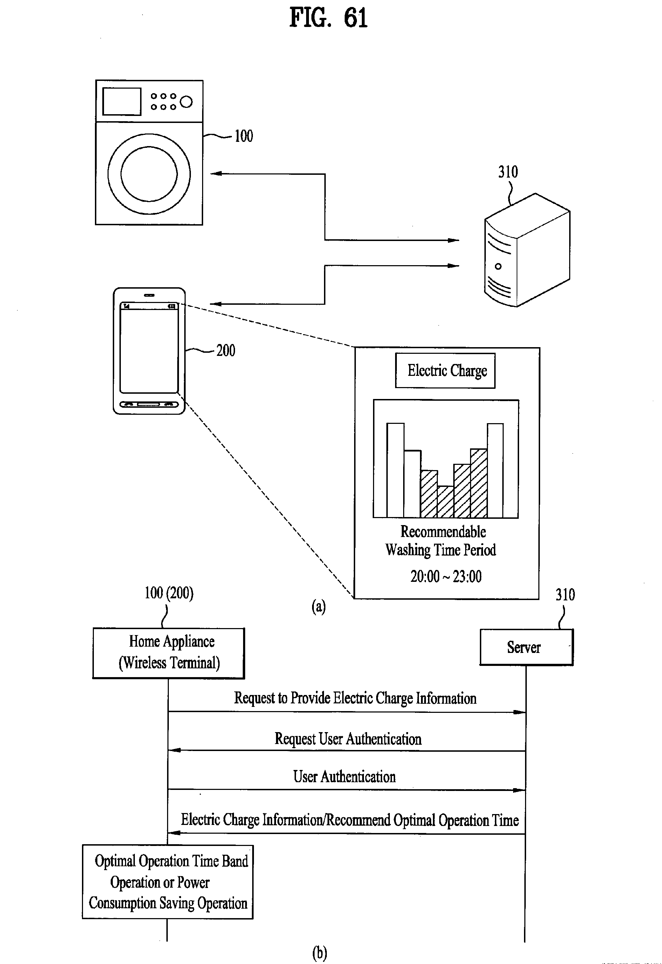

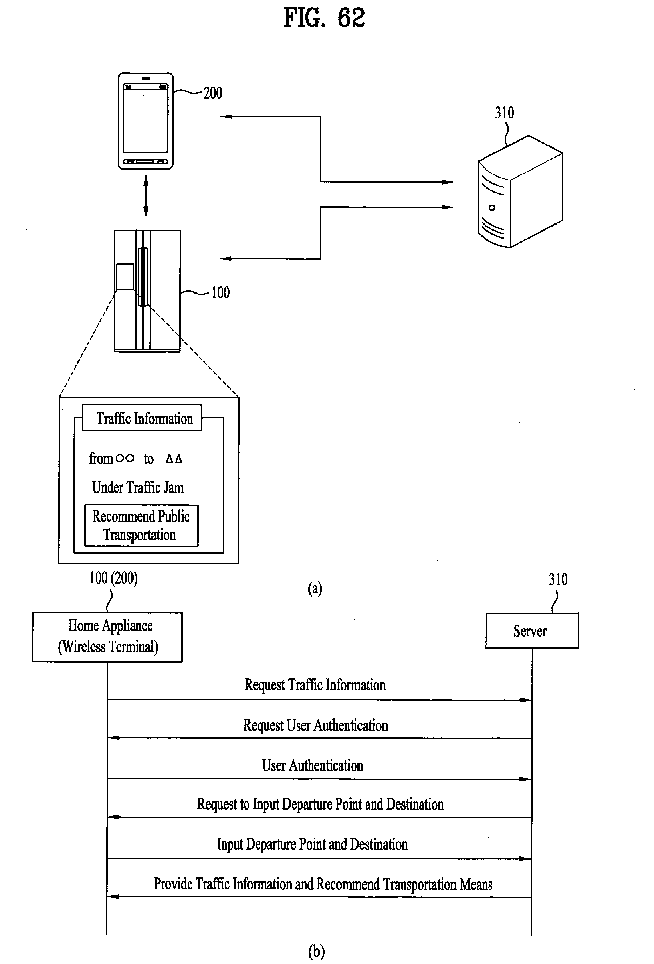

And, FIG. 59 illustrates a diagram showing provision of nearby restaurant information service in the present invention, FIG. 60 illustrates a diagram showing provision of wine management information in the present invention, FIG. 61 illustrates a diagram showing provision of electric charge information in the present invention, and FIG. 62 illustrates a diagram showing provision of traffic information in the present invention.

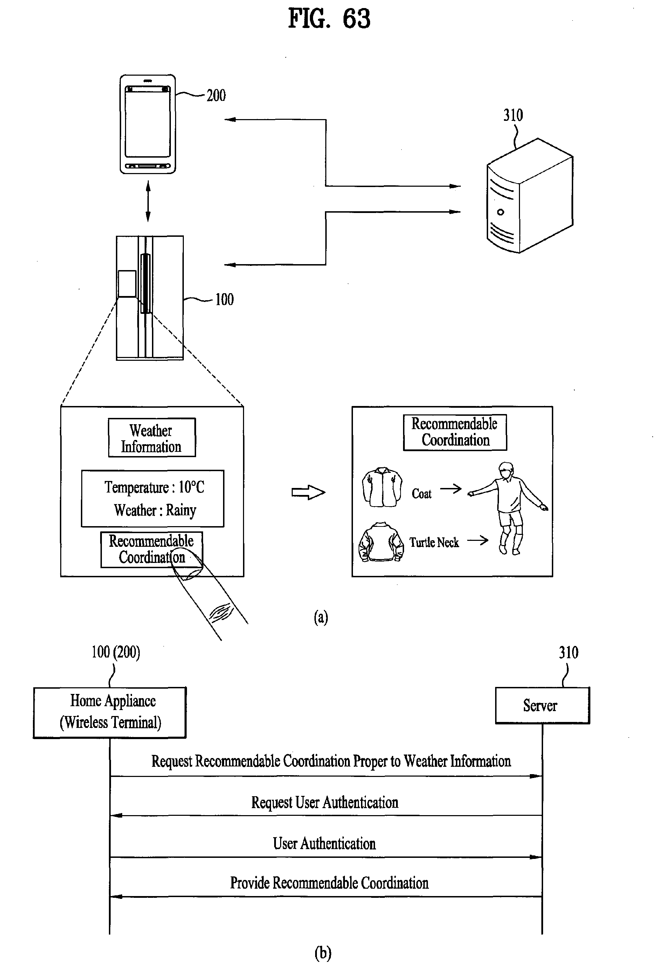

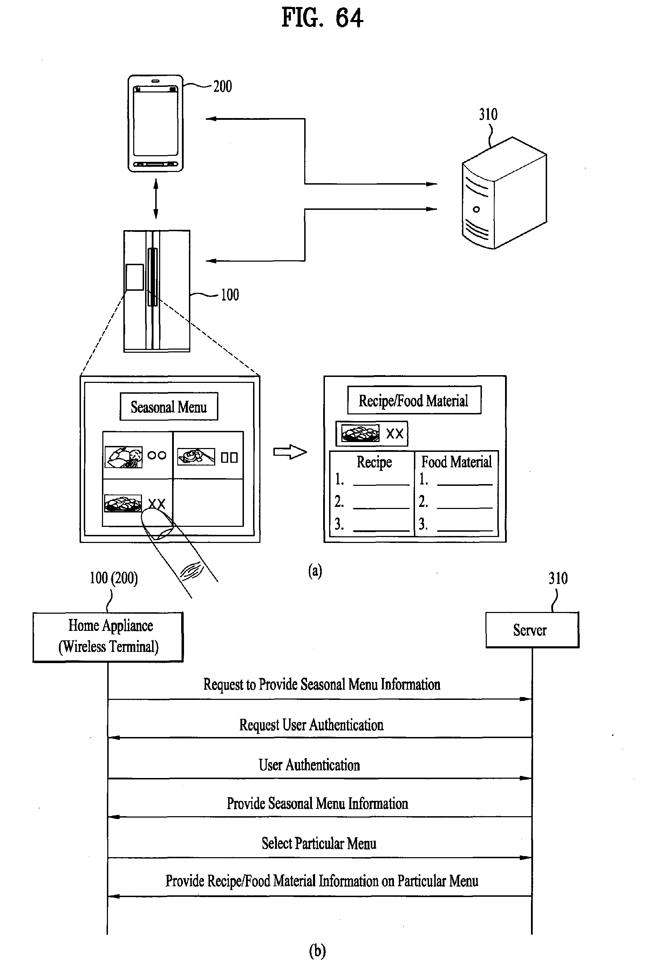

And, FIG. 63 illustrates a diagram showing provision of coordination information with reference to a season or weather in the present invention, and FIG. 64 illustrates a diagram showing provision of seasonal menu information with reference to a season or weather in the present invention.

Respective embodiments will be described with reference to the attached drawings, in detail.

In the meantime, in the information management system illustrated in FIGS. 1 and 2, if an embodiment is discussed, in which the home appliance 100 and the external service business operator 300 exchange information or a signal through the server system 1, as a precondition of information exchange between the home appliance 100 and the server system 1, an authentication procedure is required between the server system 1 and the home appliance 100.

The authentication may be performed, if the home appliance 100 accesses to the server system 1, as the server system 1 requests the home appliance 10 to authenticate the home appliance 100, and the user manipulates the input unit in the home appliance 100 to input information (The user ID, password, and other authentication numbers) required for the authentication.

As described before, in the embodiment, it is preferable that the external service business operator server 310 is the living information providing server.

Hereafter, a reference number 310 denotes the external service business operator server or the living information providing server.

If the user requests to provide necessary information through the input unit 103, mutual authentication and information exchange between the external service business operator server and the home appliance 100 is made through the server system 1.

The user may input the user's ID and password to fulfill user authentication.

Upon completion of the authentication, the external service business operator server 310 provides various living information, and the information provided thus is displayed on the display unit in the home appliance 100 or the display unit in the wireless terminal 200 of the user.

FIG. 51 illustrates an embodiment which enables to provide child report card notification service between the home appliance 100 or the wireless terminal 200 and a school server which is one of the living information providing servers 310 that are the external service business operator servers 310.

That is, the user requests the school server to provide report card notification by using the home appliance 100 or the wireless terminal 200. Then, the school server requests the user to authenticate the user, and the user may input the user's ID and password, to fulfill the user authentication, accordingly.

Upon completion of the authentication, the school server provides the report card of the child related to user's input information, and the information provided thus is displayed on the display unit in the home appliance 100 or the display unit in the wireless terminal 200.

FIG. 52 illustrates an embodiment which enables to provide school meal menu information between the home appliance 100 or the wireless terminal 200 and a school server which is one of the living information providing servers 310 that are the external service business operator servers.

That is, the user requests the school server to send school meal menu by using the home appliance 100 or the wireless terminal 200. Then, the school server requests the user to authenticate the user, and the user may input the user's ID and password, to fulfill the user authentication, accordingly.

Upon completion of the authentication, the school server provides the school meal menu, and the information provided thus is displayed on the display unit in the home appliance 100 or the display unit in the wireless terminal 200.

FIG. 53 illustrates an embodiment which enables to provide school bus arrival time notifying service between the home appliance 100 or the wireless terminal 200 and the school server.

That is, the user requests the school server to provide the school bus arrival time notifying service by using the home appliance 100 or the wireless terminal 200. Then, the school server requests the user to authenticate the user, and the user may input the user's ID and password, to fulfill the user authentication, accordingly.

Upon completion of the authentication, the school server requests the user to input a user's position, and the user may input the present position.

When the input is completed, the school server communicates with the communication unit in the school bus to request the communication unit of present position information, and the communication unit in the school bus informs the school server of the present position.

The school server transmits a remained time period until the school bus arrives to the user's position, taking the position information received from the school bus, the present traffic information, and the user's position information into account.

The information on the school bus arrival time transmitted thus is displayed on the display unit in the home appliance 100 or the display unit in the wireless terminal 200.

FIG. 54 illustrates an embodiment which enables to provide news between the home appliance 100 or the wireless terminal 200 and a news server which is one of the external service business operator servers 310.

That is, the user requests the news server to provide the news by using the home appliance 100 or the wireless terminal 200.

Then, the news server requests the user to authenticate the user, and the user may input the user's ID and password, to fulfill the user authentication, accordingly.

Upon completion of the authentication, the news server requests the user to input an interested field, and if the user sets and inputs the interested field according to the request, the news server provides news on the interested field, and the news information provided thus may be displayed on the display unit in the home appliance 100 or the display unit in the wireless terminal 200 of the user.

FIG. 55 illustrates an embodiment which enables to provide an emergency service contact between the home appliance 100 or the wireless terminal 200 and the server 310.

That is, the user selects emergency service by using home appliance 100 or the wireless terminal 200, and requests an emergency service business operator server 310 which is one of the living information providing servers 310 to provide information on the emergency service contact selected thus by using the home appliance 100 or the wireless terminal 200.

Then, the emergency service business operator server provides emergency service contact information, and, if the user tries telephone call by using the input unit in the home appliance 100 or the wireless terminal 200, the telephone call may be connected to an emergency service provider to have necessary service.

FIG. 56 illustrates an embodiment which enables to provide online cooking lecture service between the home appliance 100 or the wireless terminal 200 and the living information service business operator server.

That is, the user requests the living information service business operator server to provide the online cooking lecture service by using the home appliance 100 or the wireless terminal 200. Then, the living information service business operator server requests the user to authenticate the user, and the user may input the user's ID and password, to fulfill the user authentication, accordingly.

Upon completion of the authentication, the living information service business operator server requests the user to input necessary service.

If the user inputs the necessary service according to the request, the server 310 provides the online cooking lecture service, and the information provided thus may be displayed on the display unit in the home appliance 100 or the display unit in the wireless terminal 200 of the user.

FIG. 57 illustrates an embodiment which enables to provide stock buy/sell signal service between the home appliance 100 or the wireless terminal 200 and a stock buy/sell information server which is one of the living information providing servers 310. That is, the user requests the living information providing server to provide the stock buy/sell signal service by using the home appliance 100 or the wireless terminal 200.

Then, the server 310 requests the user to authenticate the user, and the user may input the user's ID and password, to fulfill the user authentication, accordingly. Upon completion of the authentication, the stock buy/sell service server requests the user to input a stock item name or code.

If the user inputs the stock item name or code according to the request, the stock buy/sell information service server 310 provides stock buy or sell signal information of the stock inputted thus, and the information provided thus may be displayed on the display unit in the home appliance 100 or the display unit in the wireless terminal 200 of the user.

FIG. 58 illustrates an embodiment which enables to provide living problem solving service between the home appliance 100 or the wireless terminal 200 and the living information providing server 310.

That is, the user requests the living information providing server 310 to provide the living problem solving service by using the home appliance 100 or the wireless terminal 200. Then, the server 310 requests the user to authenticate the user, and the user may input the user's ID and password, to fulfill the user authentication, accordingly.

Upon completion of the authentication, the server 310 requests the user to input the problem the user faces.

If the user inputs the problem the user faces according to the request, the server 310 provides service of solving the problem, and the information provided thus may be displayed on the display unit in the home appliance 100 or the display unit in the wireless terminal 200 of the user.

That is, referring to FIG. 58, if a pipe from a sink is blocked causing draining through the pipe poor, by inputting the problem, and as the server 310 provides a solution (Calling a plumber, or a piping problem solving method) on the problem, convenience of the user may be devised.

FIG. 59 illustrates an embodiment which enables to provide wine storage information between the home appliance 100 or the wireless terminal 200 and the living information providing server 310. That is, the user reads in a tag attached to a wine bottle with a reader provided to the home appliance 100 or the wireless terminal 200, and transmits the same to the server 310.

Then, the server 310 reads information on the wine and provides the storage information according to property of the wine. And, if the server 310 is provided to control a wine storage home appliance 100, the server 310 may transmit information for controlling a storage environment according to the storage information.

FIG. 60 illustrates an embodiment which enables to embody an interactive environment by transmitting/receiving a vocal signal among the user, the home appliance 100, and the living information providing server 310.

If the user sends the vocal signal to the home appliance 100, the home appliance 100 perceives and analyzes the vocal signal, and transmits information on the analysis to the server 310.

The server 310 analyzes the vocal signal information of the user, and provides vocal information matched to the vocal signal. The vocal information is transmitted to the user in voice through the home appliance 100.

In the meantime, if the home appliance 100 is a product which manages or processing food, such as a refrigerator or a cooking machine, the user may request to provide a recipe or a food management method. If the user requests to provide such information in voice, the home appliance 100 perceives the vocal signal, and transmits the same to the server 310.

If the server 310 analyzes the user's vocal signal, and re-arranges contents the user requires, and sends the contents re-arranged thus to the home appliance 100, the home appliance 100 transmits the contents to the user in voice.

FIG. 61 illustrates an embodiment which enables to provide electric charge information between the home appliance 100 or the wireless terminal 200 and the living information providing server 310.

That is, the user requests the server 310 to provide the electric charge information by using the home appliance 100 or the wireless terminal 200. Then, the server 310 requests the user to authenticate the user, and the user may input the user's ID and password, to fulfill the user authentication, accordingly.

Upon completion of the authentication, the server 310 provides the electric charge information, and an optimal operation time period for each of the home appliances 100, and the information provided thus may be displayed on the display unit in the home appliance 100 or the display unit in the wireless terminal 200 of the user.

According to this, the user can operate the home appliance 100 in the optimal operation time band according to the electric charge, enabling to reduce power consumption.

FIG. 62 illustrates an embodiment which enables to provide traffic information and optimal means of transportation between the home appliance 100 or the wireless terminal 200 and a traffic information server which is one of the living information providing servers 310.

That is, the user requests the server 310 to provide the traffic information by using the home appliance 100 or the wireless terminal 200. Then, the server 310 requests the user to authenticate the user, and the user may input the user's ID and password, to fulfill the user authentication, accordingly.

Upon completion of the authentication, the server 310 requests the user to input a point of departure and a destination by using the home appliance 100 or the wireless terminal 200.

If the user inputs the point of departure and the destination according to the request, the server 310 provides present traffic information, and the recommendable means of transportation, and the information provided thus may be displayed on the display unit in the home appliance 100 or the display unit in the wireless terminal 200 of the user.

FIG. 63 illustrates an embodiment which enables to provide recommendable street clothes coordination information according to weather information between the home appliance 100 or the wireless terminal 200 and the living information providing server 310.

That is, the user requests the server 310 to provide a recommendable street clothes coordination according to the weather information by using the home appliance 100 or the wireless terminal 200. Then, the server 310 requests the user to authenticate the user, and the user may input the user's ID and password, to fulfill the user authentication, accordingly.

Upon completion of the authentication, the server 310 provides the recommendable street clothes coordination information based on the weather information, and the information provided thus may be displayed on the display unit in the home appliance 100 or the display unit in the wireless terminal 200 of the user.

FIG. 64 illustrates an embodiment which enables to provide food and drink menus proper to the present season according to a seasonal change between the home appliance 100 or the wireless terminal 200 and the living information providing server 310.

That is, the user requests the server 310 to provide seasonal menu information by using the home appliance 100 or the wireless terminal 200.

Then, the server requests the user to authenticate the user, and the user may input the user's ID and password, to fulfill the user authentication, accordingly.

Upon completion of the authentication, the server 310 provides the seasonal menu information, and the information provided thus may be displayed on the display unit in the home appliance 100 or the display unit in the wireless terminal 200 of the user.

The user can select a particular item from the seasonal menus provided on the display unit in the home appliance 100 or the wireless terminal 200, and once selected, the server 310 may provide recipe information or food material information of the particular menu selected thus.

Although embodiments have been described with reference to a number of illustrative embodiments thereof, it should be understood that numerous other modifications and embodiments can be devised by those skilled in the art that will fall within the scope of the principles of this disclosure. More particularly, various variations and modifications are possible in the component parts and/or arrangements of the subject combination arrangement within the scope of the disclosure, the drawings and appended claims. In addition to variations and modifications in the component parts and/or arrangements, alternative uses will also be apparent to those skilled in the art.

## Claims

1. An information management system for a home appliance comprising:
a home appliance (100) having a communication unit (102), a display unit (104), and a predetermined device ID;
a wireless terminal (200) having a communication unit (202) for communication with the communication unit (102) in the home appliance (100) and a display unit (204), the wireless terminal (200) interlocked with the home appliance (100) for receiving information or a signal generated at the home appliance (100), or transmitting information or a signal generated at the wireless terminal (200) in a direction of the home appliance (100);
a server system (1) provided to be able to communicate with the home appliance (100) and the wireless terminal (200), the server system (1) having the device ID stored therein, and
a representative site (2) provided to be able to communicate with the server system (1) for enabling a user to provide user's information and registration information on home appliances,
wherein the user registers a home appliance (100) to the representative site,
wherein the home appliance registered in the representative site is registered in the server system (1) together with the user's information after transmission of the information from the representative site (2) to the server system (1),
wherein the communication unit (102) of the home appliance (100) and the communication unit (202) of the wireless terminal (200) receive/transmit a signal after a mutual authentication procedure between the home appliance and the wireless terminal and the server system is completed, and
the information or signal generated at the home appliance is displayed on the display unit (204) in the wireless terminal (200), or the information or signal generated at the wireless terminal (200) is displayed on the display unit (102) in the home appliance (100), or changes operational state of the home appliance (100).

2. The information management system as claimed in claim 1, wherein the wireless terminal (200) further includes an input unit (203),
wherein, by the information or signal inputted through the input unit (203) in the wireless terminal, the home appliance (100) is remotely controlled, or a state information of the home appliance is displayed on the display unit (204) in the wireless terminal (200).

3. The information management system as claimed in claims 1 or 2, further comprising an input unit (103) in the home appliance (100),
wherein, if it is set to generate predetermined information or signal and transmit the same to the wireless terminal (200) with the input unit (103) in the home appliance, the information or signal is displayed on the display unit (204) in the wireless terminal (200), and
wherein the information is schedule information or message information.

4. The information management system as claimed in claims 1 or 2, further comprising an input unit (103) in the home appliance (100),
wherein, if it is set to generate a signal which requests position information on the wireless terminal (200) and transmit the signal to the wireless terminal with the input unit in the home appliance, the position signal is transmitted from the wireless terminal (200) in a direction of the home appliance (100), and a position of the wireless terminal is displayed on the display unit (104) in the home appliance (100).

5. The information management system as claimed in any one of claims 1 to 4, wherein the home appliance (100) includes a refrigerator, and
if any one of the refrigerator and the wireless terminal (200) is manipulated to generate or update already stored food information or a shopping wish list information, the already stored food information or the shopping wish list information is transmitted to the other one of the refrigerator and the wireless terminal (200).

6. The information management system as claimed in claim 5, wherein, if a photograph of a product intended to put in the wish list is taken with a camera and the product taken is recognized, the wish list is updated according to a result of the recognition, and, if there is transmission request, the wish list updated thus is transmitted to the wireless terminal and displayed thereon.

7. The information management system as claimed in claim 5, wherein, if the wireless terminal (200) recognizes a receipt of a product the user bought, information on bought goods on the receipt is transmitted to the refrigerator, and
the refrigerator generates or updates a stored goods list to which the bought goods are reflected.

8. The information management system as claimed in any one of claims 1 to 7, further comprising a sensor unit provided to the home appliance (100),
wherein if it is set to sense a malfunction of the home appliance (100) with the sensor unit, and a data sensed thus is transmitted to the wireless terminal (200),
the malfunction of the home appliance is displayed on the display unit in the wireless terminal.

9. The information management system as claimed in any one of claims 1 to 8,
wherein the home appliance (100) and the wireless terminal (200) are provided to communicate with a predetermined external service business operator server (310) through the server system (1), and
if the user requests the external service business operator server (310) to provide information through the home appliance or the wireless terminal (200), after mutual authentication between the home appliance or the wireless terminal and the server system or the external service business operator server is completed, the external service business operator server (310) transmits information requested thus to the home appliance (100) or the wireless terminal (200).

10. The information management system as claimed in claim 9, wherein the external service business operator server (310) includes a shopping information providing server,
wherein the shopping information providing server provides product sale information, optimal shopping movement path information, recipe information, product information required for the recipe, seasonal fruit sale information, or discount coupon information according to information providing request from the user, and the information is displayed on the display unit in the home appliance (100) or the wireless terminal (200).

11. The information management system as claimed in claim 9, wherein the external service business operator server (310) includes a restaurant information providing server,
wherein the restaurant information providing server provides restaurant information, restaurant price information, and recommendable restaurant information according to user's request for information, and the information is displayed on the display unit in the home appliance (100) or the wireless terminal (200).

12. The information management system as claimed in claim 9, wherein the external service business operator server (310) includes a health care business operator server,
wherein the health care business operator server provides allergy causing food information related to the user, medicine intaking time information, treatment guide information according to kinds of accidents, health food information related to a particular symptom, medicine in taking instruction information related to prescription, information matched to a number of weeks of pregnancy, restaurant information related to a health menu, or recommendable dish and recipe information matched to the health information, and the information provided thus is displayed on the display unit in the home appliance (100) or the wireless terminal (200).

13. The information management system as claimed in claim 9, wherein the home appliance (100) includes a washing machine, and the external service business operator server (310) includes a weather information providing server,
wherein the weather information providing server provides optimal washing time point information related to weather, recommendable spinning RPM information, and drying information, and the information is displayed on the display unit (104, 204) of the washing machine or the wireless terminal (200), and the washing machine is controlled according to the information provided thus, automatically.

14. The information management system as claimed in claim 9, wherein the home appliance (100) includes an air cleaner, and the external service business operator server includes a weather information providing server,
wherein the weather information providing server provides yellow sand information, the information is displayed on the display unit (104, 204) in the air cleaner or the wireless terminal, and the air cleaner is operated during a yellow sand warning period according to the information provided thus, automatically.

15. The information management system as claimed in claim 9, wherein the external service business operator server (310) includes a living information providing server,
wherein the living information providing server provides online cooking lecture information, stock information, electric power information, traffic information, or fashion information, and the information provided thus is displayed on the display unit in the home appliance (100) or the wireless terminal (200).

## Patentansprüche

1. Informationsmanagementsystem für ein Haushaltsgerät, das umfasst:
ein Haushaltsgerät (100) mit einer Kommunikationseinheit (102), einer Anzeigeeinheit (104) und einer vorgegebenen Vorrichtungs-ID;
ein drahtloses Endgerät (200) mit einer Kommunikationseinheit (202) für die Kommunikation mit der Kommunikationseinheit (102) in dem Haushaltsgerät (100) und einer Anzeigeeinheit (204), wobei das drahtlose Endgerät (200) mit dem Haushaltsgerät verkuppelt ist, um an dem Haushaltsgerät (100) erzeugte Informationen oder ein an dem Haushaltsgerät (100) erzeugtes Signal zu empfangen oder an dem drahtlosen Endgerät (100) erzeugte Daten oder ein an dem drahtlosen Endgerät (100) erzeugtes Signal in eine Richtung des Haushaltsgeräts (100) zu senden;
ein Serversystem (1), das vorgesehen ist, mit dem Haushaltsgerät (100) und dem drahtlosen Endgerät (200) kommunizieren zu können, wobei das Serversystem (1) die Vorrichtungs-ID in sich gespeichert hat, und
eine repräsentative Stelle (2), die vorgesehen ist, mit dem Serversystem (1) kommunizieren zu können, um einem Anwender zu ermöglichen, Anwenderinformationen und Registrierungsinformation über Haushaltsgeräte bereitzustellen,
wobei der Anwender ein Haushaltsgerät (100) an der repräsentativen Stelle registriert,
wobei das in der repräsentativen Stelle registrierte Haushaltsgerät in dem Serversystem (1) zusammen mit den Anwenderinformationen nach dem Übertragen der Informationen von der repräsentativen Stelle (2) an das Serversystem (1) registriert wird,
wobei die Kommunikationseinheit (102) des Haushaltsgeräts (100) und die Kommunikationseinheit (202) des drahtlosen Endgerätes (200), nachdem ein gegenseitiger Authentifikationsvorgang zwischen dem Haushaltsgerät und dem drahtlosen Endgerät und das Serversystem abgeschlossen worden ist, ein Signal empfangen/senden und
die an dem Haushaltsgerät erzeugten Information oder das an dem Haushaltsgerät erzeugte Signal auf der Anzeigeeinheit (204) in dem drahtlosen Endgerät (200) angezeigt werden oder die an dem drahtlosen Endgerät (200) erzeugten Informationen oder das an dem drahtlosen Endgerät (200) erzeugte Signal auf der Anzeigeeinheit (102) in dem Haushaltsgerät (100) angezeigt werden oder den Betriebszustand des Haushaltsgeräts (100) ändern.

2. Informationsmanagementsystem nach Anspruch 1, wobei das drahtlose Endgerät (200) ferner eine Eingabeeinheit (203) enthält,
wobei das Haushaltsgerät (100) durch die durch die Eingabeeinheit (203) in das drahtlose Endgerät eingegebenen Informationen oder durch das durch die Eingabeeinheit (203) in das drahtlose Endgerät eingegebene Signal ferngesteuert wird oder Zustandsinformationen des Haushaltsgeräts auf der Anzeigeeinheit (204) in dem drahtlosen Endgerät (200) angezeigt werden.

3. Informationsmanagementsystem nach den Ansprüchen 1 oder 2, das ferner eine Eingabeeinheit (103) in dem Haushaltsgerät (100) umfasst,
wobei dann, wenn es eingestellt ist, vorgegebene Informationen oder ein vorgegebenes Signal zu erzeugen und dasselbe an das drahtlose Endgerät (200) mit der Eingabeeinheit (103) in dem Haushaltsgerät zu senden, die Informationen oder das Signal auf der Anzeigeeinheit (204) in dem drahtlosen Endgerät (200) angezeigt werden und
wobei die Informationen Zeitplaninfoimationen oder Nachrichteninformationen sind.

4. Informationsmanagementsystem nach den Ansprüchen 1 oder 2, das ferner eine Eingabeeinheit (103) in dem Haushaltsgerät (100) umfasst,
wobei dann, wenn es eingestellt ist, ein Signal zu erzeugen, das Positionsinformationen über das drahtlose Endgerät (200) anfordert, und das Signal an das drahtlose Endgerät mit der Eingabeeinheit in dem Haushaltsgerät zu senden, das Positionssignal von dem drahtlosen Endgerät (200) in eine Richtung des Haushaltsgeräts (100) gesendet wird und eine Position des drahtlosen Endgerätes auf der Anzeigeeinheit (104) in dem Haushaltsgerät (100) angezeigt wird.

5. Informationsmanagementsystem nach einem der Ansprüche 1 bis 4, wobei das Haushaltsgerät (100) einen Kühlschrank enthält und dann,
wenn der Kühlschrank oder das drahtlose Endgerät (200) beeinflusst werden, bereits gespeicherte Nahrungsmittelinformationen oder Einkaufswunschlisteninformationen zu erzeugen oder zu aktualisieren, die bereits gespeicherten Nahrungsmittelinformationen oder die Einkaufswunschlisteninformationen an den anderen des Kühlschranks oder des drahtlosen Endgerätes (200) gesendet werden.

6. Informationsmanagementsystem nach Anspruch 5, wobei dann, wenn eine Photographie eines Produktes, von dem beabsichtigt ist, es auf die Wunschliste zu setzen, mit einer Kamera aufgenommen wird und das aufgenommene Produkt erkannt wird, die Wunschliste gemäß einem Ergebnis der Erkennung aktualisiert wird und dann, wenn es eine Sendeanforderung gibt, die so aktualisierte Wunschliste an das drahtlose Endgerät gesendet und darauf angezeigt wird.

7. Informationsmanagementsystem nach Anspruch 5, wobei dann, wenn das drahtlose Endgerät (200) einen Beleg eines Produktes, das der Anwender gekauft hat, erkennt, Informationen über gekaufte Güter auf dem Beleg an den Kühlschrank gesendet werden und
der Kühlschrank eine Liste der gelagerten Güter erzeugt oder aktualisiert, zu der die gekauften Güter wiedergegeben werden.

8. Informationsmanagementsystem nach einem der Ansprüche 1 bis 7, das ferner eine Sensoreinheit umfasst, die an dem Haushaltsgerät (100) vorgesehen ist,
wobei dann, wenn es eingestellt ist, eine Fehlfunktion des Haushaltsgerätes (100) mit der Sensoreinheit zu erfassen, und so erfasste Daten an das drahtlose Endgerät (200) gesendet werden,
die Fehlfunktion des Haushaltsgerätes auf der Anzeigeeinheit in dem drahtlosen Endgerät angezeigt wird.

9. Informationsmanagementsystem nach einem der Ansprüche 1 bis 8,
wobei das Haushaltsgerät (100) und das drahtlose Endgerät (200) vorgesehen sind, mit einem vorgegebenen externen Dienstleistungsunternehmensbetreiberserver (310) durch das Serversystem (1) zu kommunizieren, und
dann, wenn der Anwender den externen Dienstleistungsunternehmensbetreiberserver (310) auffordert, Informationen durch das Haushaltsgerät oder das drahtlose Endgerät (200) bereitzustellen, nachdem eine gegenseitige Authentifikation zwischen dem Haushaltsgerät oder dem drahtlosen Endgerät und dem Serversystem oder dem externen Dienstleistungsunternehmensbetreiberserver abgeschlossen ist, der externe Dienstleistungsunternehmensbetreiberserver (310) so angeforderte Informationen an das Haushaltsgerät (100) oder das drahtlose Endgerät (200) sendet.

10. Informationsmanagementsystem nach Anspruch 9, wobei der externe Dienstleistungsunternehmensbetreiberserver (310) einen Einkaufsinformationslieferserver enthält,
wobei der Einkaufsinformationslieferserver Produktverkaufsinformationen, optimale Einkaufsbewegungsweginformationen, Rezeptinformationen, Produktinformationen, die für das Rezept benötigt werden, Verkaufsinformationen von saisonalem Obst oder Rabattgutscheininformationen gemäß Informationen, die eine Anforderung von dem Anwender liefern, liefert, und die Informationen auf der Anzeigeeinheit in dem Haushaltsgerät (100) oder dem drahtlosen Endgerät (200) angezeigt werden.

11. Informationsmanagementsystem nach Anspruch 9, wobei der externe Dienstleistungsunternehmensbetreiberserver (310) einen Restaurantinformationslieferserver enthält,
wobei der Restaurantinformationslieferserver Restaurantinformationen, Restaurantpreisinformationen und Informationen über empfehlenswerte Restaurants gemäß der Anforderung des Anwenders nach Informationen liefert und die Informationen auf der Anzeigeeinheit in dem Haushaltsgerät (100) oder dem drahtlosen Endgerät (200) angezeigt werden.

12. Informationsmanagementsystem nach Anspruch 9, wobei der externe Dienstleistungsunternehmensbetreiberserver (310) einen Gesundheitswesensunternehmensbetreiberserver enthält,
wobei der Gesundheitswesensunternehmensbetreiberserver Informationen über allergieverursachende Nahrungsmittel in Bezug auf den Anwender, Informationen über die Einnahmezeit von Medizin, Behandlungsführerinfoimationen gemäß den Arten von Unfällen, Reformkostinformationen bezüglich eines bestimmten Symptoms, Medizineinnahmeanweisungsinformationen bezüglich einer Verschreibung, Informationen, die an eine Anzahl der Wochen einer Schwangerschaft angepasst werden, Restaurantinformationen bezüglich eines Gesundheitsmenüs oder Informationen über empfehlenswerte Speisen und Rezepte, die an die Gesundheitsinformationen angepasst sind, liefert und die so gelieferten Informationen auf der Anzeigeeinheit in dem Haushaltsgerät (100) oder dem drahtlosen Endgerät (200) angezeigt werden.

13. Informationsmanagementsystem nach Anspruch 9, wobei das Haushaltsgerät (100) eine Waschmaschine enthält und der externe Dienstleistungsunternehmensbetreiberserver (310) einen Wetterinformationslieferserver enthält,
wobei der Wetterinformationslieferserver einen optimalen Waschzeitpunkt in Bezug auf das Wetter, Informationen über empfehlenswerte Schleuderdrehzahlen und Trocknungsinformationen liefert und die Informationen auf der Anzeigeeinheit (104, 204) der Waschmaschine oder des drahtlosen Endgerätes (200) angezeigt werden und die Waschmaschine gemäß den so gelieferten Informationen automatisch gesteuert wird.

14. Informationsmanagementsystem nach Anspruch 9, wobei das Haushaltsgerät (100) einen Luftreiniger enthält und der externe Dienstleistungsserver einen Wetterinformationslieferserver enthält,
wobei der Wetterinformationslieferserver Informationen über gelben Sand liefert, die Informationen auf der Anzeigeeinheit (104, 204) in dem Luftreiniger oder dem drahtlosen Endgerät angezeigt werden
und der Luftreiniger während einer Warnperiode für gelben Sand gemäß den so gelieferten Informationen automatisch betrieben wird.

15. Informationsmanagementsystem nach Anspruch 9, wobei der externe Dienstleistungsunternehmensbetreiberserver (310) einen Lebensweiseinformationslieferserver enthält,
wobei der Lebensweiseinformationslieferserver Online-Kochstundeninformationen, Vorratsinformationen, Informationen über die elektrische Leistung, Verkehrsinformationen oder Modeinformationen liefert und die so gelieferten Informationen auf der Anzeigeeinheit in dem Haushaltsgerät (100) oder dem drahtlosen Endgerät (200) angezeigt werden.

## Revendications

1. Système de gestion d'informations pour un appareil ménager comprenant :
un appareil ménager (100) comportant une unité de communication (102), une unité d'affichage (104) et un identifiant de dispositif prédéterminé ;
un terminal sans fil (200) comportant une unité de communication (202) pour communiquer avec l'unité de communication (102) dans l'appareil ménager (100) et
une unité d'affichage (204), le terminal sans fil (200) étant relié à l'appareil ménager (100) pour recevoir des informations ou un signal générés au niveau de l'appareil ménager (100), ou pour transmettre des informations ou un signal générés au niveau du terminal sans fil (200) dans une direction de l'appareil ménager (100) ;
un système de serveur (1) fourni pour être apte à communiquer avec l'appareil ménager (100) et le terminal sans fil (200), l'identifiant de dispositif étant stocké dans le système de serveur (1), et
un site représentatif (2) fourni pour être apte à communiquer avec le système de serveur (1) afin de permettre à un utilisateur de fournir des informations de l'utilisateur et des informations d'enregistrement d'appareils ménagers,
dans lequel l'utilisateur enregistre un appareil ménager (100) auprès du site représentatif,
dans lequel l'appareil ménager enregistré auprès du site représentatif est enregistré dans le système de serveur (1) avec les informations de l'utilisateur après la transmission des informations du site représentatif (2) au système de serveur (1),
dans lequel l'unité de communication (102) de l'appareil ménager (100) et l'unité de communication (202) du terminal sans fil (200) reçoivent/transmettent un signal après l'exécution d'une procédure d'authentification réciproque entre l'appareil ménager et le terminal sans fil et le système de serveur, et
les informations ou le signal générés au niveau de l'appareil ménager sont affichés sur l'unité d'affichage (204) dans le terminal sans fil (200), ou
les informations ou le signal générés au niveau du terminal sans fil (200) sont affichés sur l'unité d'affichage (102) dans l'appareil ménager (100), ou
changent l'état opérationnel de l'appareil ménager (100).

2. Système de gestion d'informations selon la revendication 1, dans lequel le terminal sans fil (200) comprend en outre une unité d'entrée (203),
dans lequel, par les informations ou le signal entrés par l'intermédiaire de l'unité d'entrée (203) dans le terminal sans fil, l'appareil ménager (100) est télécommandé, ou des informations d'état de l'appareil ménager sont affichées sur l'unité d'affichage (204) dans le terminal sans fil (200).

3. Système de gestion d'informations selon la revendication 1 ou 2, comprenant en outre une unité d'entrée (103) dans l'appareil ménager (100),
dans lequel, si elle est réglée pour générer des informations prédéterminées ou un signal prédéterminé et les transmettre au terminal sans fil (200) avec l'unité d'entrée (103) dans l'appareil ménager, les informations ou le signal sont affichés sur l'unité d'affichage (204) dans le terminal sans fil (200), et dans lequel les informations sont des informations de planning ou des informations de message.

4. Système de gestion d'informations selon la revendication 1 ou 2, comprenant en outre une unité d'entrée (103) dans l'appareil ménager (100),
dans lequel, si elle est réglée pour générer un signal qui demande des informations de position sur le terminal sans fil (200) et pour transmettre le signal au terminal sans fil avec l'unité d'entrée dans l'appareil ménager, le signal de position est transmis à partir du terminal sans fil (200) dans une direction de l'appareil ménager (100), et une position du terminal sans fil est affichée sur l'unité d'affichage (104) dans l'appareil ménager (100).

5. Système de gestion d'informations selon l'une quelconque des revendications 1 à 4, dans lequel l'appareil ménager (100) comprend un réfrigérateur, et si l'un quelconque du réfrigérateur et du terminal sans fil (200) est manipulé pour générer ou mettre à jour des informations d'aliments déjà stockées ou des informations de liste d'achats, les informations d'aliments déjà stockées ou les informations de liste d'achats sont transmises à l'autre du réfrigérateur et du terminal sans fil (200).

6. Système de gestion d'informations selon la revendication 5, dans lequel, si une photographie d'un produit destiné à être mis dans la liste d'achats est prise avec un appareil photo et le produit pris est reconnu, la liste d'achats est mise à jour en fonction d'un résultat de la reconnaissance et, s'il y a une demande de transmission, la liste d'achats ainsi mise à jour est transmise au terminal sans fil sur lequel elle est affichée.

7. Système de gestion d'informations selon la revendication 5, dans lequel, si le terminal sans fil (200) reconnaît un reçu d'un produit que l'utilisateur a acheté, les informations sur les articles achetés sur le reçu sont transmises au réfrigérateur, et
le réfrigérateur génère ou met à jour une liste d'articles stockés dans laquelle les articles achetés sont reflétés.

8. Système de gestion d'informations selon l'une quelconque des revendications 1 à 7, comprenant en outre une unité de capteur fournie à l'appareil ménager (100),
dans lequel, si elle est réglée pour détecter un dysfonctionnement de l'appareil ménager (100) avec l'unité de capteur, et les données ainsi détectées sont transmises au terminal sans fil (200),
le dysfonctionnement de l'appareil ménager est affiché sur l'unité d'affichage dans le terminal sans fil.

9. Système de gestion d'informations selon l'une quelconque des revendications 1 à 8,
dans lequel l'appareil ménager (100) et le terminal sans fil (200) sont fournis pour communiquer avec un serveur d'exploitant commercial de service externe prédéterminé (310) par l'intermédiaire du système de serveur (1), et
si l'utilisateur demande au serveur d'exploitant commercial de service externe (310) de fournir des informations par l'intermédiaire de l'appareil ménager ou du terminal sans fil (200), après l'exécution d'une authentification réciproque entre l'appareil ménager ou le terminal sans fil et le système de serveur ou le serveur d'exploitant commercial de service externe, le serveur d'exploitant commercial de service externe (310) transmet les informations ainsi demandées à l'appareil ménager (100) ou au terminal sans fil (200).

10. Système de gestion d'informations selon la revendication 9, dans lequel le serveur d'exploitant commercial de service externe (310) comprend un serveur de fourniture d'informations d'achat,
dans lequel le serveur de fourniture d'informations d'achat fournit des informations de vente de produit, des informations de voie optimale de déplacement d'achat, des informations de recette, des informations de produits nécessaires pour la recette, des informations de vente de fruits de saison, ou des informations de bons de remise en fonction d'une demande de fourniture d'informations provenant de l'utilisateur, et les informations sont affichées sur l'unité d'affichage dans l'appareil ménager (100) ou le terminal sans fil (200).

11. Système de gestion d'informations selon la revendication 9, dans lequel le serveur d'exploitant commercial de service externe (310) comprend un serveur de fourniture d'informations de restaurant, dans lequel le serveur de fourniture d'informations de restaurant fournit des informations de restaurant, des informations de prix de restaurant, et des informations de restaurants recommandables en fonction d'une demande d'informations de l'utilisateur, et les informations sont affichées sur l'unité d'affichage dans l'appareil ménager (100) ou le terminal sans fil (200).

12. Système de gestion d'informations selon la revendication 9, dans lequel le serveur d'exploitant commercial de service externe (310) comprend un serveur d'exploitant commercial de santé,
dans lequel le serveur d'exploitant commercial de santé fournit des informations d'allergies alimentaires liées à l'utilisateur, des informations d'heures de prise de médicaments, des informations de guide de traitement en fonction de types d'accidents, des informations d'aliments diététiques liées à un symptôme particulier, des informations d'instructions de prise de médicaments liées à une ordonnance, des informations correspondant à un nombre de semaines de grossesse, des informations de restaurant liées à un menu diététique, ou des informations de plats et de recettes recommandables correspondant aux informations de santé, et les informations ainsi fournies sont affichées sur l'unité d'affichage dans l'appareil ménager (100) ou le terminal sans fil (200).

13. Système de gestion d'informations selon la revendication 9, dans lequel l'appareil ménager (100) comprend une machine à laver, et le serveur d'exploitant commercial de service externe (310) comprend un serveur de fourniture d'informations météorologiques,
dans lequel le serveur de fourniture d'informations météorologiques fournit des informations d'heures de lavage optimales liées à la météo, des informations de régime de rotation recommandable, et des informations de séchage, et les informations sont affichées sur l'unité d'affichage (104, 204) de la machine à laver ou sur le terminal sans fil (200), et la machine à laver est automatiquement commandée en fonction des informations ainsi fournies.

14. Système de gestion d'informations selon la revendication 9, dans lequel l'appareil ménager (100) comprend un filtre à air, et le serveur d'exploitant commercial de service externe comprend un serveur de fourniture d'informations météorologiques,
dans lequel le serveur de fourniture d'informations météorologiques fournit des informations de tempête de sable, les informations sont affichées sur l'unité d'affichage (104, 204) dans le filtre à air ou le terminal sans fil, et le filtre à air est automatiquement utilisé au cours d'une période de vigilance pour tempête de sable en fonction des informations ainsi fournies.

15. Système de gestion d'informations selon la revendication 9, dans lequel le serveur d'exploitant commercial de service externe (310) comprend un serveur de fourniture d'informations pratiques,
dans lequel le serveur de fourniture d'informations pratiques fournit des informations de conférence de cuisine en ligne, des informations de cours boursiers, des informations d'électricité, des informations de circulation routière ou des informations de mode, et les informations ainsi fournies sont affichées sur l'unité d'affichage dans l'appareil ménager (100) ou le terminal sans fil (200).
